# EUROPEAN PATENT SPECIFICATION

(11) **EP 2 456 217 B1**
(45) Date of publication and mention of the grant of the patent: **30.09.2015**
(21) Application number: 12155858.9
(22) Date of filing: 19.11.2010
(51) Int. Cl.: H04N 13/00

(54) **Method of providing 3D image and 3D display apparatus using the same**
Verfahren zur Bereitstellung eines 3D-Bildes und 3D-Anzeigevorrichtung damit
ProcédÀ© de fourniture d'une image 3D et appareil d'affichage 3D l'utilisant

(30) Priority: 23.11.2009 KR 20090113197; 23.11.2009 KR 20090113231; 23.11.2009 KR 20090113224; 23.11.2009 KR 20090113220; 23.11.2009 KR 20090113234; 25.11.2009 KR 20090114602; 25.11.2009 KR 20090114596
(43) Date of publication of application: 23.05.2012
(62) Divisional of application: 10191864.7
(73) Proprietor: Samsung Electronics Co., Ltd., Suwon-si, Gyeonggi-do, 443-742 (KR)
(72) Inventor: Han, Ji-youn, Gyeonggi-do (KR); Ko, Chang-seog, Gyeonggi-do (KR)
(74) Representative: Appleyard Lees

(56) References cited:
- EP-A1- 2 434 763
- EP-A2- 1 858 256
- US-A1- 2009 232 389
- Wimmer: "Stereoscopic Player and Stereoscopic Multiplexer", , 26 November 2006 (2006-11-26), XP002641946, Retrieved from the Internet: URL:http://3dtv.at/Downloads/S3DToday2006. ppt [retrieved on 2011-06-15]

## Description

### CROSS-REFERENCE TO RELATED APPLICATIONS

This application claims priority from Korean Patent Application No. 10-2009-113197 filed on November 23, 2009, Korean Patent Application No. 2009-113231 filed on November 23, 2009, Korean Patent Application No. 2009-113224 filed on November 23, 2009, Korean Patent Application No. 2009-113220 filed on November 23, 2009, Korean Patent Application No. 2009-113234 filed on November 23, 2009, Korean Patent Application No. 2009-114602 filed on November 25, 2009, and Korean Patent Application No. 2009-114596 filed on November 25, 2009, in the Korean Intellectual Property Office, the disclosures of which are incorporated herein by reference in their entirety.

### BACKGROUND OF THE INVENTION

### 1. Field of the Invention

Methods and apparatuses consistent with the exemplary embodiments relate to providing a three-dimensional (3D) image and a 3D display apparatus using the same, and more particularly, though not exclusively to providing a 3D image in which left-eye and right-eye images are displayed sequentially on a screen to display 3D image, and a 3D display using the same.

### 2. Description of the Related Art

Three-dimensional (3D) image technology has been applied in various fields such as communications, broadcasting, medical services, education, military, computer games, computer animation, virtual reality, computer-aided design, industrial technology, or the like. All of the above areas require the 3D image technology which is a key enabling technology of the next generation 3D multimedia telecommunication.

The illusion of depth is perceived by various techniques, including changes in crystalline lens's thickness depending on an object position, angle difference between a left eye, a right eye and the object, changes in position and form of the object between a left eye and a right eye, disparity caused by object movement, perceiver emotion, memory effect, and so on.

The binocular disparity, caused by about 6 to 7 centimeters of the distance between two eyes, is one of the most influential factors to perceive depth illusion. The binocular disparity leads to the angle difference, causing two eyes to have different images from each other and thus enabling a human brain to perceive an object with depth by fusing the two different pieces of image information precisely as these are received through the retina.

The 3D image display apparatus is generally classified into an eyeglass type and a non-eyeglass type. The eyeglass type apparatus may mainly include in its category: a color filter apparatus which filters an image using a color having complementary color filter segments; a polarizing filter type apparatus which divides an image into left-eye and right-eye images using shading effect caused by combining orthogonal polarized light elements; and a shutter glasses type apparatus which alternately blocks a left eye and a right eye in response to a synchronization signal that projects a left-eye image signal and a right-eye image signal onto a screen.

The shutter glasses type apparatus applies a display method that uses the binocular disparity, which synchronizes the provision of an image on a display with on and off of the left eye and right eye of the eyeglasses so that a viewer perceives a sense of space from the images viewed at different angles by the processing occurring in his brain.

Meanwhile, a viewer should change a display apparatus to a 3D mode to view a 3D image. Additionally, a 3D display apparatus supports various types of 3D image formats, and displays 3D image by selectively applying one of the plurality of 3D image formats that corresponds to an incoming image.

However, understanding a format of a 3D image would not be easy for the general viewers. Therefore, many viewers would want to have an easier implementation of 3D mode which does not require the viewers to know the format of the incoming image. Accordingly, an improved method is required, which enables the viewers to watch 3D image on a display more conveniently.

Further, the shutter glasses type apparatus often has problems such as change in the timing of outputting left- and right-eye images, or in the timing of opening and closing the eyeglasses. One of the main drawbacks is that, due to the characteristic of a 3D image, a viewer does not immediately notice these changes in the timings while he watches the 3D image.

Therefore, a method is required, which enables a viewer to conveniently check the synchronization between a left-eye image and a left lens of the eyeglasses, or a right-eye image and a right lens of the eyeglasses while he watches the 3D image. A document authored by Wimmer : "Stereoscopic Player and Stereoscopic Multiplexer", published 26 November 2006 (see http://3dtv.at/Downloads/S3DToday2006.ppt) discloses a stereoscopic system. Also US 2009/232389A1 discloses a 3D image processing method. EP 1 858 256 discloses a video display device including an enlargement/reduction unit for enlarging or reducing the video signal in response to enlargement/reduction display formats, and for generating video signals corresponding to the enlargement/reduction display formats; a screen division unit for dividing a display area of the display unit into divided display areas, and for displaying images which are based on the video signals generated by the enlargement/reduction unit, on the divided display areas; a selection unit for selecting a desired image from among the images which are based on the video signals corresponding to the enlargement/reduction display formats and are displayed on the display unit by the screen division unit; and a display control unit for allowing the display unit to display an image which is based on the video signal generated by the enlargement/reduction unit, in response to the enlargement/reduction display format corresponding to the image selected by the selection unit.

### SUMMARY

According to an aspect of another exemplary embodiment, there is provided a display apparatus according to Claim 1 herein.

The display apparatus may indicate names and information about 3D image formats which correspond to the 3D images of the plurality of formats.

The display apparatus may additionally include a manipulation unit which receives a selection regarding the 3D images according to the plurality of formats, where the display unit displays the 3D image selected using the manipulation unit on a larger screen.

The manipulation unit may include one of a remote controller, a pointing device, a touch pad, and a touch screen.

The plurality of formats may include at least one of: a side-by-side format, a top-bottom format, a 2D plus depth format, a horizontal interleave format, a vertical interleave format, and a checkerboard format.

The display apparatus may include a manipulation unit which receives an instruction of a viewer, and a control unit which controls the display apparatus so that only one of the left-eye image and the right-eye image is output and a graphic user interface (GUI) is output, if an instruction to generate the GUI to be displayed on the 3D image is input through the manipulation unit.

The GUI may be a 3D GUI.

The display apparatus may additionally include a GUI generating unit to generate the 3D GUI, where the 3D image forming unit generates a left-eye GUI and a right-eye GUI corresponding to the generated 3D GUI, and the control unit controls the display apparatus so that the left-eye GUI and the right-eye GUI are alternately output, along with one of the left-eye image and the right-eye image.

The 3D image forming unit may generate only one of the left-eye image and the right-eye image, if an instruction to generate a GUI to be displayed on a 3D image is input through the manipulation unit, and the control unit may control the display apparatus so that one of the generated left-eye image and the generated right-eye image is output.

The control unit may control the display apparatus so that the 3D GUI disappears and the left-eye image and the right-eye image corresponding to the received 3D image are alternately output, if an instruction to close the 3D GUI is input using the manipulation unit.

The 3D image forming unit may generate a left-eye image and a right-eye image corresponding to the received 3D image, if an instruction to close the 3D GUI is input using the manipulation unit, and the control unit may control the display apparatus so that the 3D GUI disappears and the left-eye image and the right-eye image corresponding to the received 3D image are alternately output.

The control unit may control the display apparatus so that the GUI is automatically closed and the left-eye image and the right-eye image corresponding to the received 3D image are alternately output, after a predetermined time of not using the GUI.

### BRIEF DESCRIPTION OF THE DRAWINGS

The above and/or other aspects of the exemplary embodiments will be more apparent by describing in detail certain exemplary embodiments with reference to the accompanying drawings, in which:
FIG. 1 is a block diagram illustrating a 3D image providing system according to an exemplary embodiment;
FIGS. 2A to 2F are views illustrating various formats for the 3D image;
FIG. 3 is a block diagram illustrating the TV according to an exemplary embodiment;
FIG. 4 is a block diagram illustrating the shutter glasses according to an exemplary embodiment;
FIGS. 5A to 5C are views illustrating the processing of a 3D image according to 3D formats, according to an exemplary embodiment;
FIG. 6 is a flowchart illustrating a method of providing a 3D image based on a repeating input of a predetermined instruction, according to an exemplary embodiment;
FIGS. 7A to 7D are views illustrating the process of applying the 2D mode and the plurality of formats of the 3D mode in a toggling manner by manipulating the buttons of the remote controller, according to an exemplary embodiment;
FIGS. 8A to 8D are views illustrating a process in which a plurality of formats in 2D and 3D modes are applied in a toggling manner, based on the instruction of the predetermined button provided on the TV, according to an exemplary embodiment;
FIG. 9 is a flowchart illustrating a method of providing a 3D image using a display mode menu, according to an exemplary embodiment;
FIGS. 10A to 10D are views illustrating the process of selecting items of a display mode menu on the screen of the TV, and applying a plurality of 2D and 3D formats, according to an exemplary embodiment;
FIG. 11 is a view illustrating a screen composition according to an exemplary embodiment;
FIG. 12 is a view illustrating screen compositions in a process of changing the output status according to an exemplary embodiment;
FIG. 13 is a flowchart illustrating a display method according to an exemplary embodiment;
FIGS. 14A and 14B are views illustrating screens in which a GUI regarding the output status and the format is displayed according to the viewer's instructions according to an exemplary embodiment.
FIG. 15 is a view illustrating a process of changing a screen according to a viewer's instruction and change of time according to an exemplary embodiment;
FIG. 16 is a view illustrating the process of changing a screen in relation to the format according to an exemplary embodiment;
FIGS. 17A and 17B are views illustrating the process of changing a screen according to another exemplary embodiment;
FIG. 18 is a view illustrating a display method according to an exemplary embodiment;
FIG. 19 is a view illustrating a display method according to another exemplary embodiment;
FIGS. 20A to 20D are views illustrating the screen compositions for changing the settings according to an exemplary embodiment;
FIGS. 21A to 21C are views illustrating a method of adding a GUI according to an exemplary embodiment;
FIG. 22 is a flowchart illustrating a method of providing a GUI to change a 3D image setting according to an exemplary embodiment;
FIG. 23 is a view illustrating an example in which the left- and right-eye images are time-divided and alternately output according to an exemplary embodiment;
FIG. 24 is a view illustrating a screen composition according to an exemplary embodiment;
FIG. 25 is a view illustrating a screen composition according to another exemplary embodiment;
FIG. 26 is a view illustrating a screen composition according to an exemplary embodiment;
FIG. 27 is a flowchart illustrating a method of providing a 3D image according to an exemplary embodiment;
FIG. 28 is a block diagram illustrating the 3D TV according to an exemplary embodiment;
FIG.S 29A to 29F are views illustrating the 3D image data types according to an exemplary embodiment;
FIG. 30 is a flowchart illustrating a method of providing a preview which includes a plurality of formats of an input 3D image according to an exemplary embodiment;
FIG. 31 is a flowchart illustrating a method of selecting a 3D image format based on a 3D preview according to an exemplary embodiment;
FIG. 32 is a flowchart illustrating a process of providing a preview of 3D image and selecting an image from the previewed images at the 3D TV according to an exemplary embodiment;
FIG. 33 is a flowchart illustrating a method of providing a GUI, upon receiving a viewer instruction to generate a 3D GUI according to an exemplary embodiment;
FIG. 34 is a flowchart illustrating a method of closing the 3D GUI, upon receiving a viewer instruction to close the GUI, according to an exemplary embodiment; and
FIG. 35 is a flowchart illustrating a process of providing a 3D GUI according to an exemplary embodiment.

### DETAILED DESCRIPTION OF EXEMPLARY EMBODIMENTS

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Accordingly, it is apparent that the exemplary embodiments can be carried out without those specifically defined matters. Also, well-known functions or constructions are not described in detail since they would obscure the exemplary embodiments with unnecessary detail.

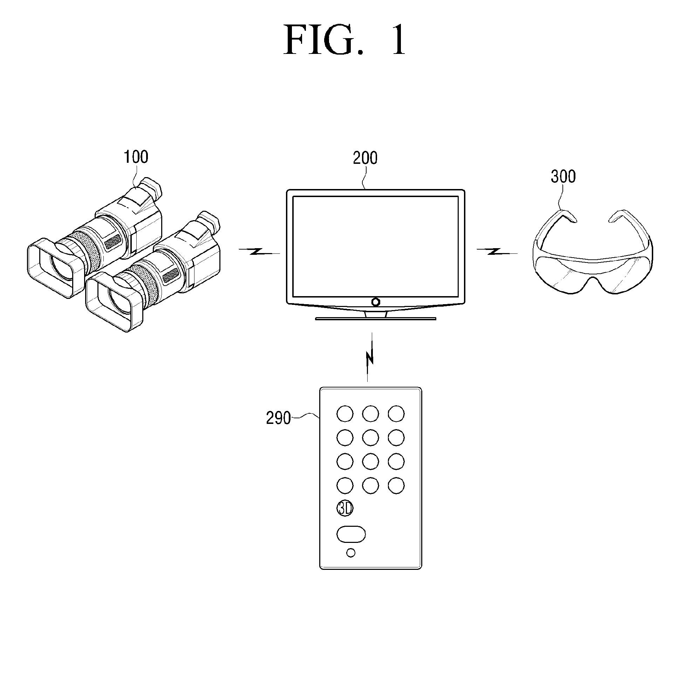

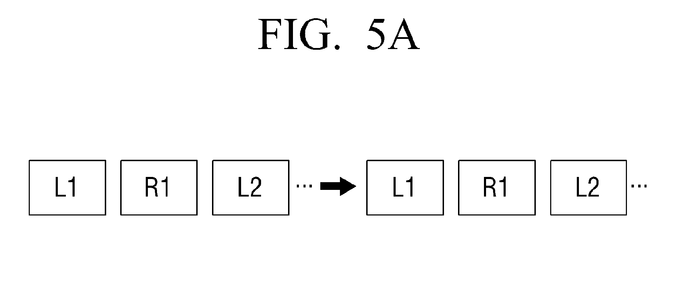

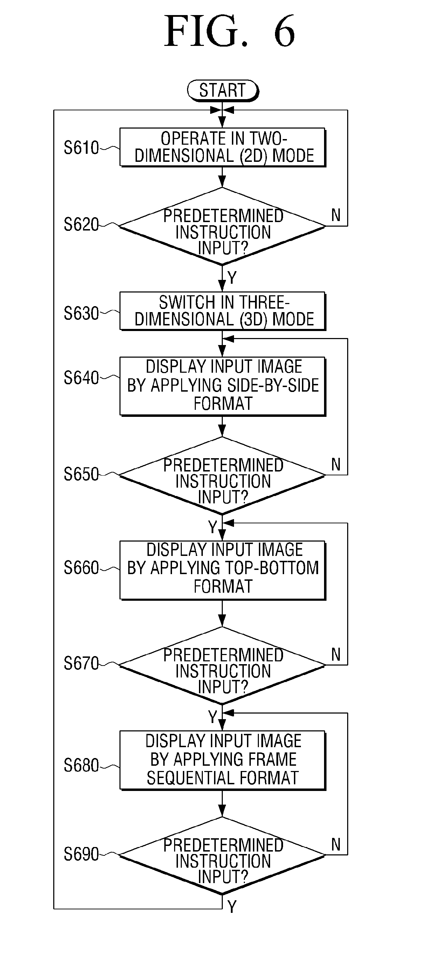

Hereinbelow, the principles of operation and construction of an exemplary system which provides a three-dimensional (3D) image will be described with reference to FIGS. 1 to 4. Processing a 3D image according to an exemplary embodiment will then be described with reference to FIGS. 5A to 5C. Also, the process of changing between the 2D mode and the 3D mode according to an exemplary embodiment will be described with reference to FIGS. 6 to 10D.

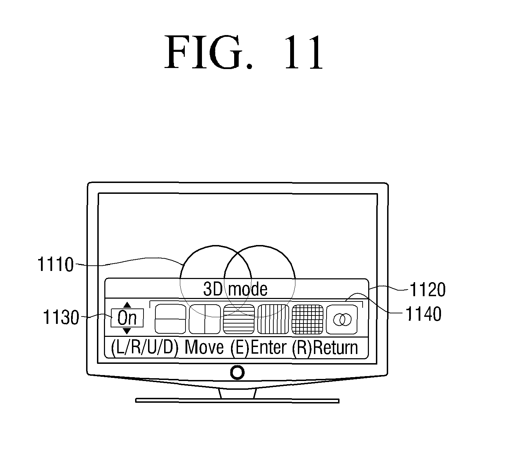

Composing a screen related to attributes of a 3D image according to an exemplary embodiment will be described with reference to FIGS. 11 to 12.

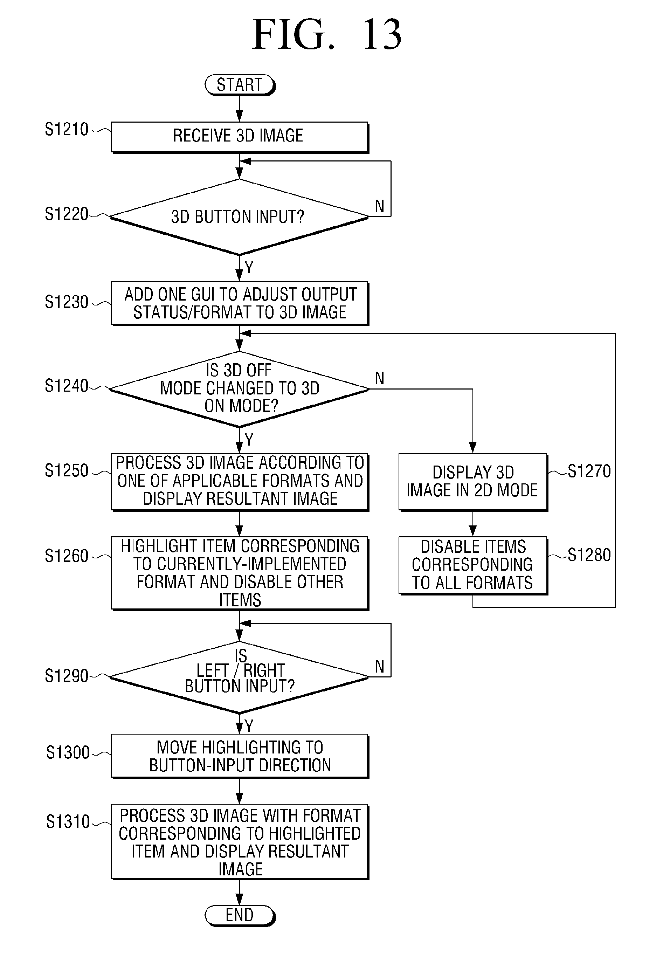

The flow of operation for changing 3D output status and formats according to an exemplary embodiment will be described with reference to FIG. 13.

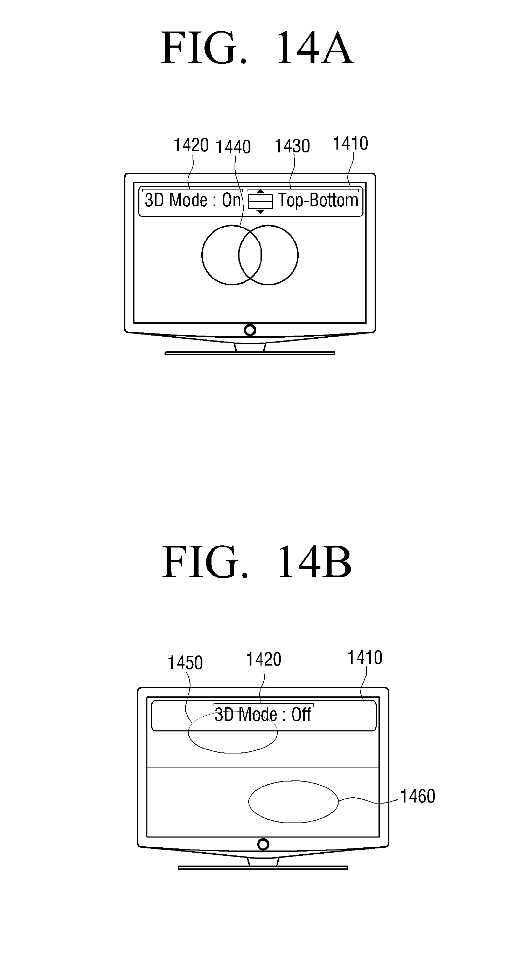

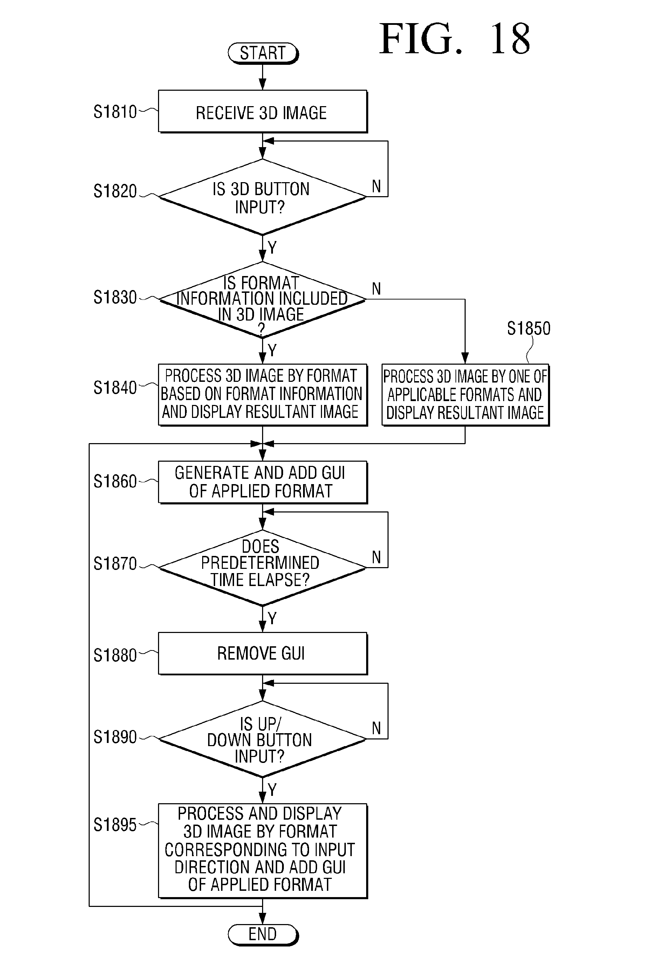

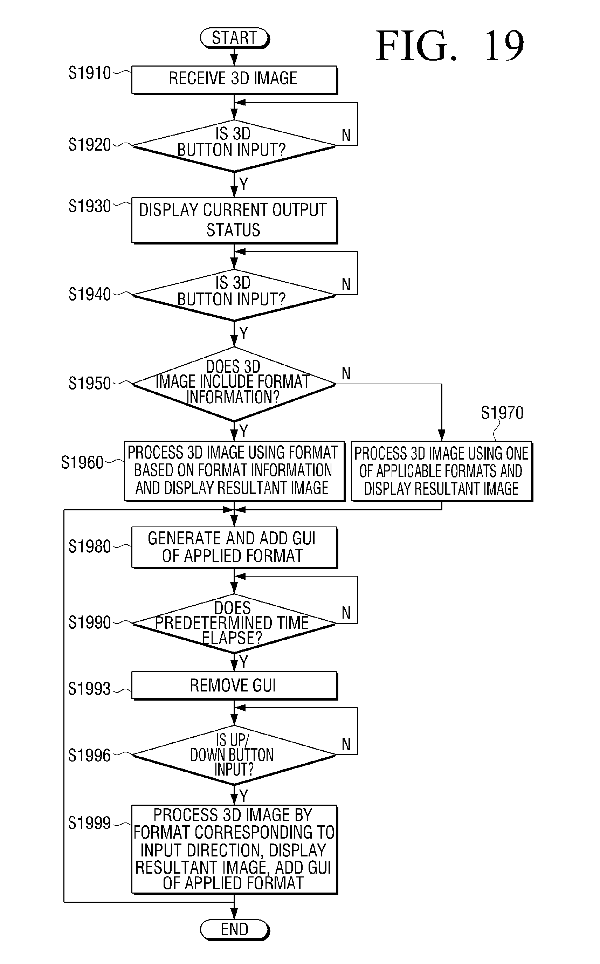

The screen constitution related to attributes of a 3D image according to an exemplary embodiment will be described with reference to FIGS. 14A to 17B, and operation flow of changing 3D output status and formats according to an exemplary embodiment will be described with reference to FIGS. 18 and 19.

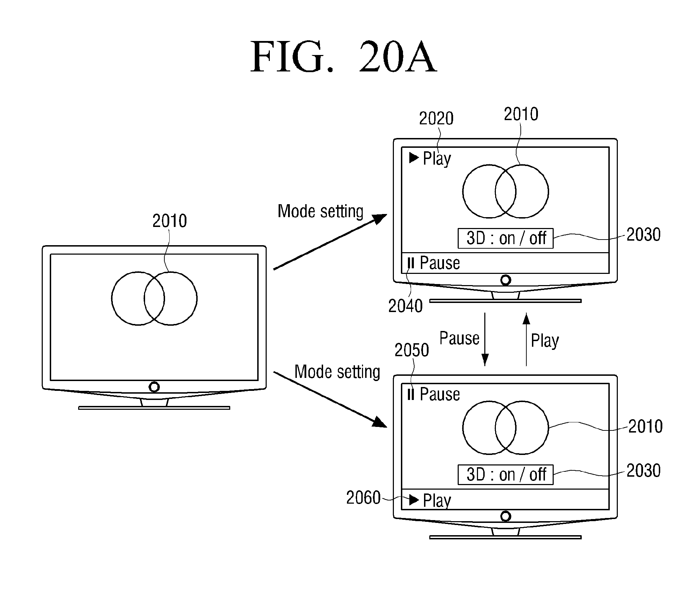

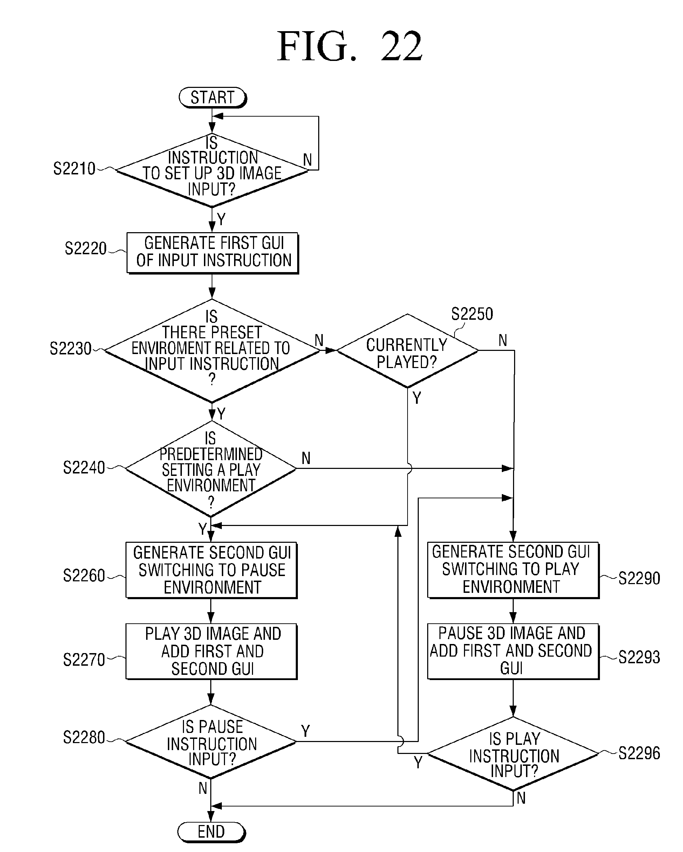

The screen constitution related to attributes of a 3D image according to an exemplary embodiment will be described with reference to FIGS. 20A to 21C, and operation flow of providing a graphic user interface (GUI) to change a setting of a 3D image according to an exemplary embodiment will be described with reference to FIG. 22.

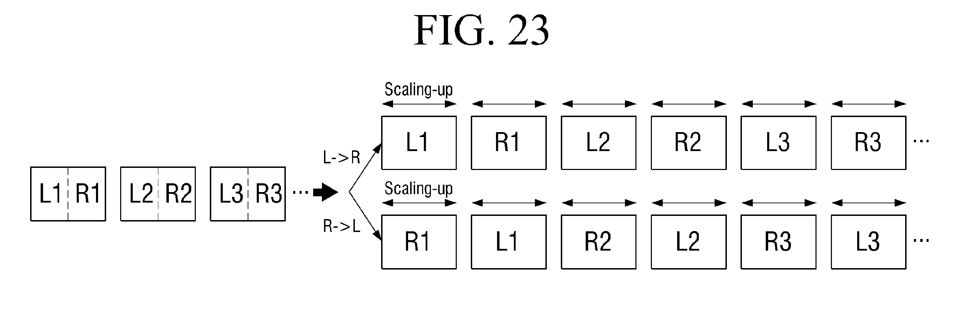

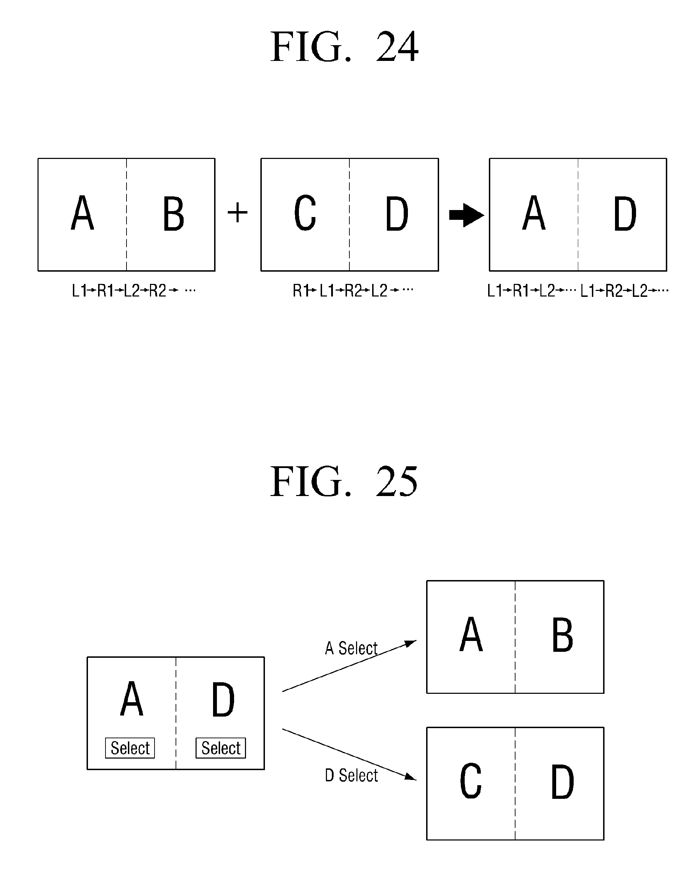

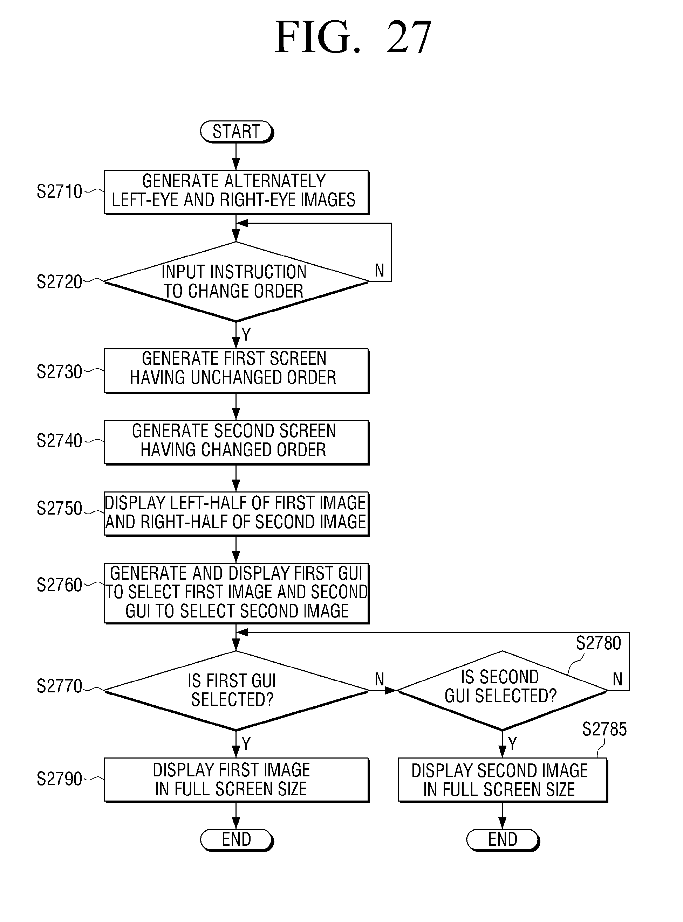

Processing a 3D image according to an exemplary embodiment will be described with reference to FIG 23. A method of displaying a screen when an image order is changed according to an exemplary embodiment will be described with reference to FIGS. 24 to 26, and operation flow of processing a 3D image according to an exemplary embodiment will be described with reference to FIG. 27.

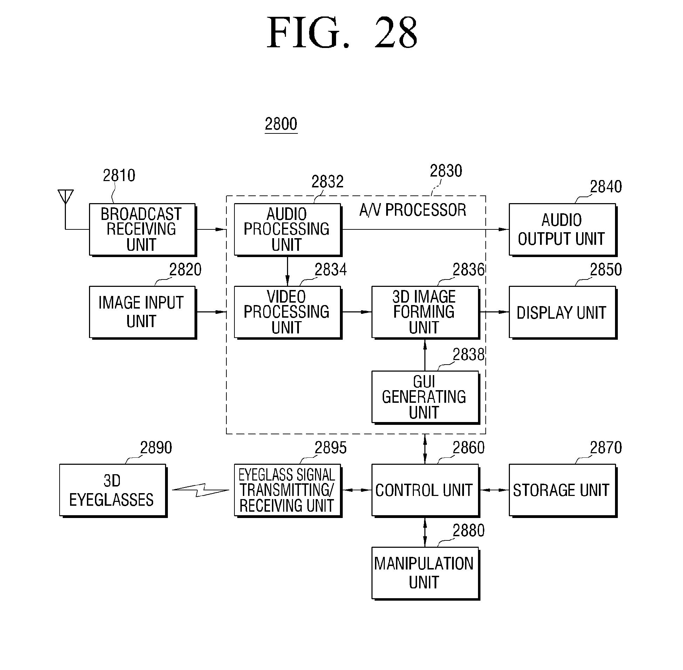

A method of selecting a format for an incoming 3D image based on a 3D image preview according to an exemplary embodiment will be described with reference to FIGS. 28 to 32.

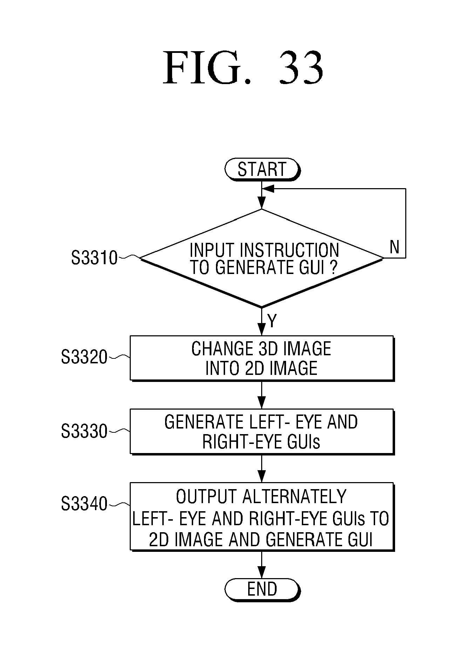

The process of generating and providing a 3D GUI according to an exemplary embodiment will be described with reference to FIGS. 33 to 35.

### 1. Principles of operation and structure of a 3D image providing system

FIG. 1 is a block diagram illustrating a 3D image providing system according to an exemplary embodiment. Referring to FIG. 1, the 3D image providing system may include a camera 100 to generate a 3D image, a TV 200 to display a 3D image on a screen, a remote controller 290 to control the TV 200, and shutter glasses 300 to view the displayed 3D image.

The camera 100 is an image capturing device which generates a 3D image. Accordingly, the camera 100 generates a left-eye image meant for a left eye of a viewer, and a right-eye image meant for a right eye of the viewer. A 3D image consists of left-eye and right-eye images, in a manner in which the left-eye image and the right-eye image are alternately provided to the left and right eyes of the viewer, generating an illusion of depth by the binocular disparity.

The camera 100 includes a left-eye camera to generate a left-eye image, and a right-eye camera to generate a right-eye image. A distance between the left-eye camera and the right-eye camera is based on a distance between the left and right eyes of a viewer.

The camera 100 transfers the captured left-eye image and the right-eye image to the TV 200. Specifically, the camera 100 may transfer the image mainly in two formats, in which either a left-eye image or a right-eye image is included in one frame according to the first format, while both of the left-eye image and the right-eye image are included in one frame according to the second format.

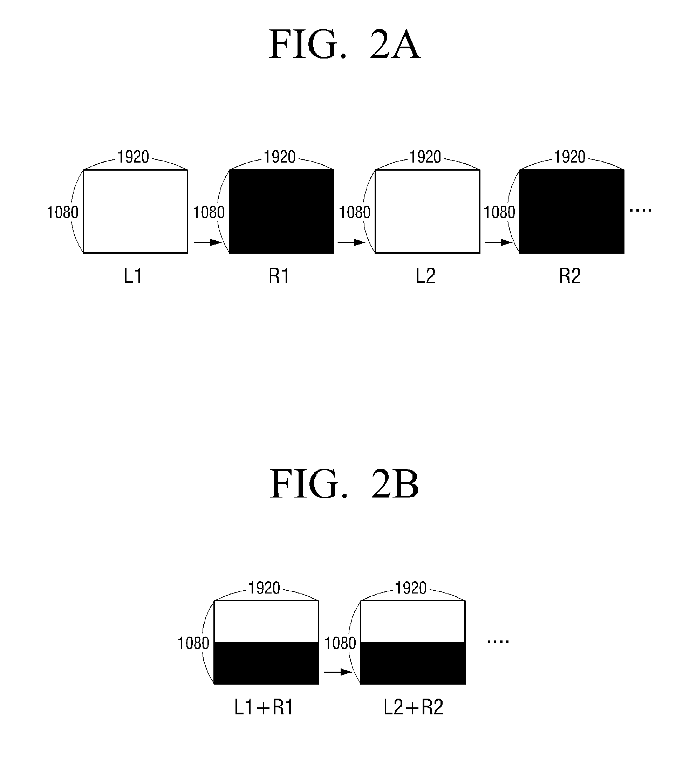

Referring to FIGS. 2A to 2F, illustrate various formats regarding a 3D image transferred to the TV 200 will be explained in greater detail below according to an exemplary embodiment.

FIGS. 2A to 2F are views illustrating formats for the 3D image according to an exemplary embodiment. Throughout FIGS. 2A to 2F, the left-eye image is indicated in white, while the right-eye image is indicated in black, for convenience of explanation and not by way of a limitation.

Referring first to FIG. 2A, a 3D image according to a general frame sequential format is illustrated. According to the frame sequential format, a 3D image includes either one left-eye image or one right-eye image in one frame.

According to the frame sequential format, a 3D image at a resolution of 1920*1080 may include: a frame carrying a left-eye image (L1) captured through the left-eye camera -> a frame carrying a right-eye image (R1) captured through the right-eye camera -> a frame carrying a left-eye image (L2) captured through the left-eye camera -> a frame carrying a right-eye image (R2) captured through the right-eye camera -> and so on.

FIG. 2B is a view illustrating a 3D image according to a top-bottom format according to an exemplary embodiment. The top-bottom format, or a vertical segment format, includes both left- and right-eye images in one frame. Specifically, a top-bottom 3D image format includes left- and right-eye images arranged vertically, that is, the left-eye image is on an upper side and the right-eye image is on a lower side.

To this end, the left-eye image and the right-eye image, captured through the camera 100, are scaled down to 1920*540 in a vertical direction, and integrated into one frame to have a resolution of 1920*1080 and transferred to the TV 200.

According to the top-bottom format, a 3D image at a resolution of 1920*1080 may include: a frame carrying a left-eye image (L1) captured through the left-eye camera and a right-eye image (R1) captured through the right-eye camera -> a frame carrying a left-eye image (L2) captured through the left-eye camera and a right-eye image (R2) captured through the right-eye camera -> and so on.

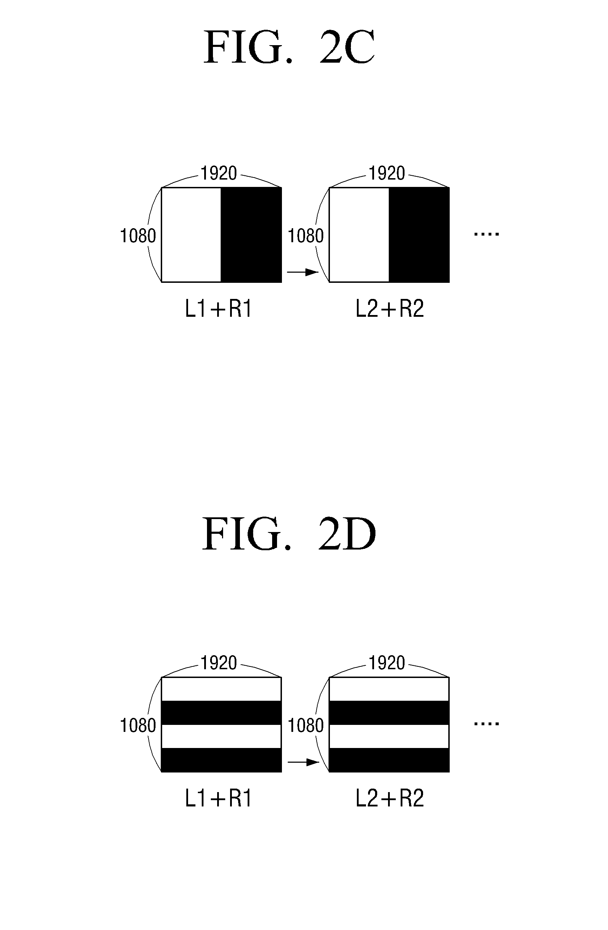

FIG. 2C is a view illustrating a 3D image according to a side-by-side format according to an exemplary embodiment. According to the side-by-side format, the 3D image includes both left- and right-eye images in one frame. Specifically, according to a side-by-side 3D image format, left- and right-eye images are divided and placed on a left side and a right side, respectively.

To this end, the left-eye image and the right-eye image, captured through the camera 100, are scaled down to 960*1080 in a horizontal direction, and integrated into one frame to have a resolution of 1920*1080 and transferred to the TV 200.

According to the side-by-side 3D image format, a 3D image at a resolution of 1920*1080 may include: a frame carrying a left-eye image (L1) captured through the left-eye camera and a right-eye image (R1) captured through the right-eye camera -> a frame carrying a left-eye image (L2) captured through the left-eye camera and a right-eye image (R2) captured through the right-eye camera -> and so on.

FIG. 2D is a view illustrating a 3D image format according to a horizontal interleave format according to an exemplary embodiment. According to the horizontal interleave format, a 3D image format includes both left- and right-eye images in one frame. Specifically, a horizontal interleave 3D image format has alternating rows of left-eye and right-eye images.

To this end, the left-eye image and the right-eye image, captured through the camera 100, are scaled down to 1920*540 in a vertical direction, and after this, one frame is constructed by: (a) alternating the down-scaled left-eye and right-eye images on odd or even horizontal rows; or (b) extracting only an odd-row image from the down-scaled left-eye image and extracting only an even-row image from the down-scaled right-eye image, and integrating both of the extracted images.

By way of example, according to (a), one frame of a 3D image may include: a first row of a left-eye image (L1) captured through the left-eye camera; a first row of a right-eye image (R1) captured through the right-eye camera; a second row of a left-eye image (L1) captured through the left-eye camera; a second row of a right-eye image (R1) captured through the right-eye camera; and so on.

The frame that comes next may include: a first row of a left-eye image (L2) captured through the left-eye camera; a first row of a right-eye image (R2) captured through the right-eye camera; a second row of a left-eye image (L2) captured through the left-eye camera; a second row of a right-eye image (R2) captured through the right-eye camera; and so on.

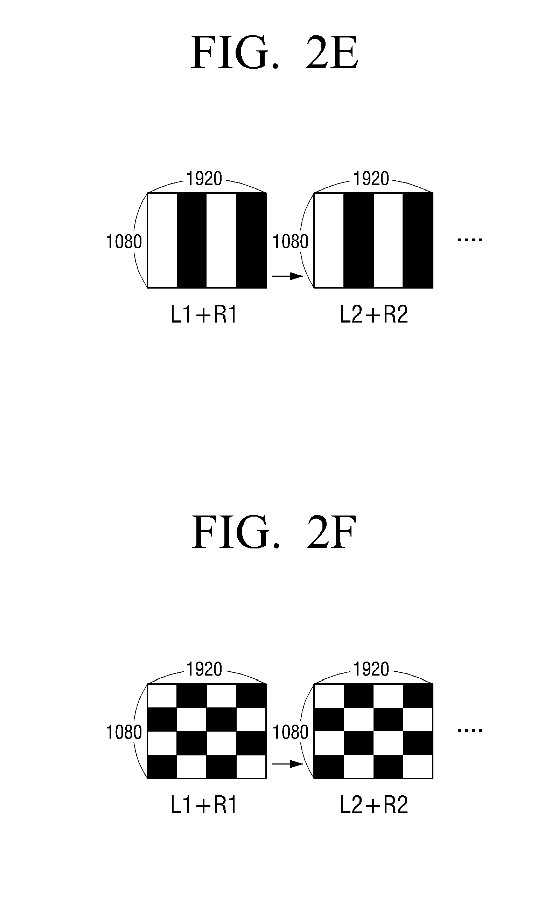

FIG. 2E is a view illustrating a 3D image according to a vertical interleave format according to an exemplary embodiment. According to the vertical interleave format, a 3D image format includes both left-eye and right-eye images in one frame. Specifically, a vertical interleave 3D image format includes alternating columns of left- and right-eye images.

To this end, the left-eye image and the right-eye image, captured through the camera 100, are scaled down to 960*1080 in a horizontal direction, and after this, one frame may be constructed by: (a) alternating the down-scaled left-eye image and the down-scaled right-eye image on odd or even columns, respectively; or (b) extracting only an odd-column image from the down-scaled left-eye image and extracting only an even-column image from the down-scaled right-eye image and integrating both of the extracted images.

By way of example, according to (a), one frame of a 3D image may include: a first column of a left-eye image (L1) captured through the left-eye camera; a first column of a right-eye image (R1) captured through the right-eye camera; a second column of a left-eye image (L1) captured through the left-eye camera; a second column of a right-eye image (R1) captured through the right-eye camera; and so on.

A frame that comes next may include: a first column of a left-eye image (L2) captured through the left-eye camera; a first column of a right-eye image (R2) captured through the right-eye camera; a second column of a left-eye image (L2) captured through the left-eye camera; a second column of a right-eye image (R2) captured through the right-eye camera; and so on.

FIG. 2F is a view illustrating a 3D image format according to a checkerboard format according to an exemplary embodiment. According to the checkerboard format, a 3D image format includes both left- and right-eye images in one frame. Specifically, a checkerboard 3D image format includes an alternate arrangement of left-eye and right-eye images by a pixel unit or a pixel group unit.

To this end, left-eye and right-eye images captured through the camera are extracted by a pixel unit or a pixel group unit to be alternately placed in the pixels or pixel groups of each frame.

By way of example, according to a checkerboard 3D image format, one frame of a 3D image may include: a first row and first column of a left-eye image (L1) captured through the left-eye camera; a first row and second column of a right-eye image (R1) captured through the right-eye camera; a first row and third column of a left-eye image (L1) captured through the left-eye camera; a first row and fourth column of a right-eye image (R1) captured through the right-eye camera; and so on.

A frame that comes next may include: a first row and first column of a left-eye image (L2) captured through the left-eye camera; a first row and second column of a right-eye image (R2) captured through the right-eye camera; a first row and third column of a left-eye image (L2) captured through the left-eye image, a first row and fourth column of a right-eye image (R2) captured through the right-eye image, and so on.

Referring back to FIG. 1, the camera 100 determines in advance one of the abovementioned formats, and transfers a 3D image to the TV 200 according to such predetermined format.

The TV 200, which is an exemplary display apparatus according to an exemplary embodiment, may receive a 3D image from a photographing apparatus such as the camera 100, or from a broadcasting station after the image is captured through the camera 100, and edited and processed by the broadcasting station. The TV 200 processes and displays the received 3D image. Specifically, the TV 200 processes left-eye and right-eye images in accordance with the format of a 3D image, so that the 3D image is time-divided and alternately displayed.

Furthermore, the TV 200 generates a synchronization signal in sync with the timing of time-dividing and displaying the left-eye and right-eye images, and transmits the synchronization signal to the shutter glasses 300.

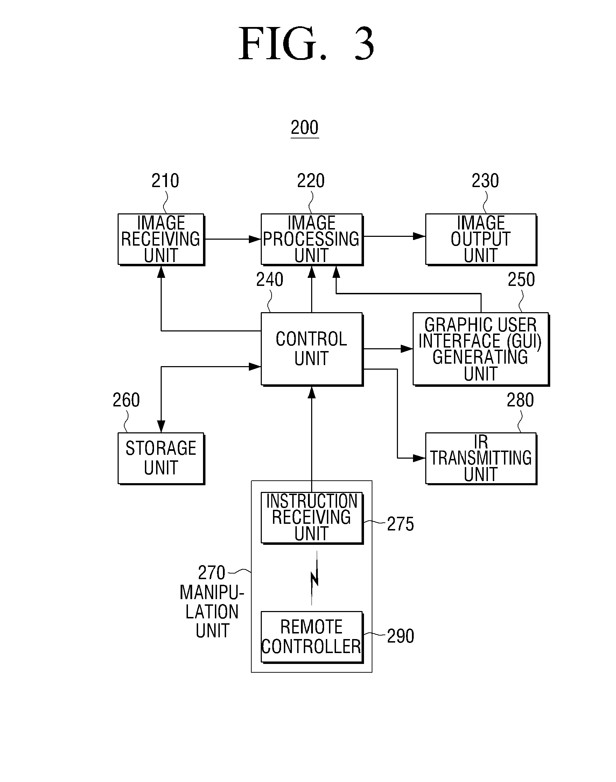

Referring to FIG. 3, a detailed constitution of the TV 200 according to an exemplary embodiment will be described..

According to the exemplary embodiment, the TV 200 may include an image receiving unit 210, an image processing unit 220, an image output unit 230, a control unit 240, a graphic user interface (GUI) generating unit 250, a storage unit 260, a manipulation unit 270, and an IR transmitting unit 280.

The image receiving unit 210 receives a broadcast from a station or a satellite by wired or wireless manner, and demodulates the received broadcasting. The image receiving unit 210 may be connected to an external apparatus such as the camera 100 to receive a 3D image therefrom. The image receiving unit 210 may be connected to the external apparatus wirelessly, or in a wired manner by connecting to an interface of a S-Video, a component, a composite, a D-Sub, a digital visual interface (DVI), or a high definition multimedia interface (HDMI).

As explained above, a 3D image may include at least one frame, in which one image frame includes both left-eye and right-eye images, or only the left-eye image or the right-eye image. That is, a 3D image is generated by applying one of the formats explained above with reference to FIG. 2.

Accordingly, various formats of 3D image may be input to the image receiving unit 210, and these formats may particularly include: a frame sequential format; a top-bottom format; a side-by-side format; a horizontal interleave format; a vertical interleave format; and a checkerboard format.

The image receiving unit 210 receives and transmits the 3D image to the image processing unit 220.

The image processing unit 220 implements signal processing such as video decoding, format analysis, and video scaling, or GUI provision.

Specifically, the image processing unit 220 generates left-eye and right-eye images at 1920*1080 which corresponds to the full size of a screen.

If a 3D image format is top-bottom, side-by-side, horizontal interleave, vertical interleave, or checkerboard, the image processing unit 220 extracts the left-eye and right-eye image portions from each image frame, and scales up or interpolates the extracted left-eye and right-eye image portions, thereby generating the left-eye and right-eye images for the viewer.

If a 3D image format is the general frame sequential format, the image processing unit 220 extracts left-eye and right-eye images from each frame to provide to a viewer.

The exemplary process of generating left-eye and right-eye images according to the 3D image format will be described below.

Meanwhile, information of an incoming 3D image format may or may not be included in a 3D image signal.

By way of example, if information of the incoming 3D image format is included in the 3D image signal, the image processing unit 220 analyzes the 3D image format and extracts information about the format, and processes the 3D image according to the extracted information.

Meanwhile, if information of the incoming 3D image format is not included in the 3D image signal, the image processing unit 220 processes the 3D image according to a format input from a viewer or according to a predetermined format.

Additionally, the image processing unit 220 provides a left-eye image, or a right-eye image, or both with a GUI received from the GUI generating unit 250 which will be described below.

The image processing unit 220 time-divides the left-eye and right-eye images and alternately transmits the images to the image output unit 230. More specifically, the image processing unit 220 transmits the left-eye and right-eye images to the image output unit 230 in a time order of: a left-eye image (L1) → a right-eye image (R1) → a left-eye image (L2) → a right-eye image (R2) → and so on.

The image output unit 230 alternately outputs and provides the left-eye and right-eye images to the viewer.

The GUI generating unit 250 generates a GUI to be presented on a display. The GUI from the GUI generating unit 250 is transmitted to the image processing unit 220, and provided to a left-eye image, or a right-eye image, or both.

The storage unit 260 is a medium to store necessary programs for operating the TV 200, and may include a memory, or a hard disk drive (HDD).

The manipulation unit 270 receives a viewer's predetermined instruction. Specifically, the manipulation unit 270 receives the predetermined instruction from the remote controller 290, or the like, through an instruction receiving unit 275. Further, the manipulation unit 270 may also receive a viewer's predetermined instruction through buttons arranged on the TV 200 (Not illustrated). The manipulation unit 290 transmits the received predetermined instruction to the control unit 240.

The IR transmitting unit 280 generates a synchronization signal in sync with the left-eye and right-eye images which are alternately output, and transmits infrared rays of the synchronization signal to the shutter glasses 300. Accordingly, the shutter glasses 300 alternately open and close, so that the image output unit 230 displays a left-eye image when a left-eye glass of the shutter glasses 300 opens, and displays a right-eye image when a right-eye glass of the shutter glasses 300 opens.

The control unit 240 controls the overall operation of the TV 200 according to a viewer's instruction transmitted from the manipulation unit 270.

Specifically, the control unit 240 controls the image receiving unit 210 and the image processing unit 220 to receive a 3D image, to split the received 3D image into left-eye and right-eye images, and to scale up or interpolate the split left-eye and right-eye images so that the images can be displayed on a screen.

Additionally, the control unit 240 controls the GUI generating unit 250 to generate GUI in response to a viewer's instruction transmitted from the manipulation unit 270, and controls the IR transmitting unit 280 to transmit the synchronization signal which is synchronized with the timing of outputting the left-eye and right-eye images.

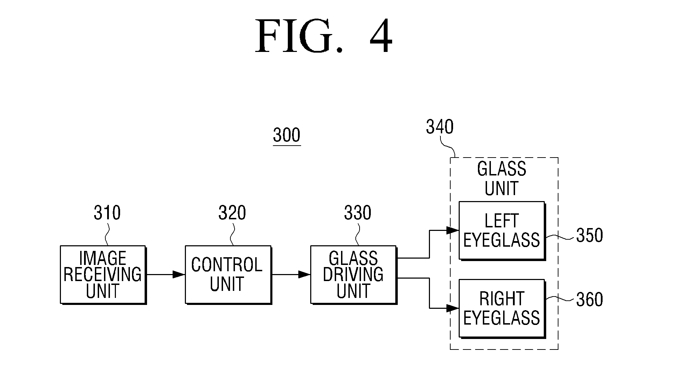

Meanwhile, the shutter glasses 300 (depicted in FIG. 1) alternately open and close the left-eye glass and the right-eye glass according to the synchronization signal transmitted from the TV 200, so that a viewer can watch left-eye and right-eye images through the left-eye and right-eye glasses respectively. The exemplary constitution of the shutter glasses 300 will be explained in detail below with reference to FIG. 4.

FIG. 4 illustrates a block diagram of the shutter glasses 300 according to an exemplary embodiment.

Referring to FIG. 4, the shutter glasses 300 may include an image receiving unit 310, a control unit 320, a glass driving unit 330, and a glass unit 340.

The image receiving unit 310 receives a synchronization signal of a 3D image from the IR transmitting unit 280 of the TV 200 (depicted in FIG. 3) which is connected to the image receiving unit 310 in a wired or wireless manner. Specifically, the IR transmitting unit 280 may radiate the synchronization signal using a straight-line infrared ray, and the image receiving unit 310 may receive the synchronization signal from the radiated infrared ray.

By way of example, a synchronization signal from the IR transmitting unit 280 to the image receiving unit 310 may alternate between high level and low level at a predetermined time interval. A left-eye image may be transmitted at a high-level time interval while a right-eye image may be transmitted at a low-level time interval.

The image receiving unit 310 transmits the synchronization signal received from the IR transmitting unit 280 to the control unit 320.

The control unit 320 controls the overall operation of the shutter glasses 300. Specifically, the control unit 320 generates a control signal based on the synchronization signal received at the image receiving unit 310, and transmits the control signal to the glass driving unit 330 to control the glass driving unit 330. Specifically, the control unit 320 controls the glass driving unit 330 to generate a driving signal based on the synchronization signal to drive the glass unit 340.

The glass driving unit 330 generates a driving signal based on the control signal received from the control unit 320. Specifically, because the glass unit 340 may include a left-eye glass 350 and a right-eye glass 360, the glass driving unit 330 generates a left-eye driving signal to drive the left-eye glass 350 and a right-eye driving signal to drive the right-eye glass 360, transmits the left-eye driving signal to the left-eye glass 350 and the right-eye driving signal to the right-eye glass 360.

The glass unit 340 may include the left-eye glass 350 and the right-eye glass 360, as explained above, and opens and closes each of the left-eye glass 350 and the right-eye glass 360 according to the driving signal received from the glass driving unit 330.

### 2. 3D image processing

The process of generating left-eye and right-eye images by processing a 3D image according to a 3D image format according to an exemplary embodiment will be explained in greater detail below, with reference to FIGS. 5A to 5C.

FIGS. 5A to 5C are views illustrating processing of a 3D image according to 3D formats according to an exemplary embodiment.

FIG. 5A illustrates a 3D image which is input according to the general frame sequential format.

Referring to FIG. 5A, the frame sequential 3D image format includes either one left-eye image or one right-eye image in one frame. Therefore, 3D image is input and displayed on a screen in an order of: a frame having a left-eye image (L1) captured through the left-eye camera → a frame having a right-eye image (R1) captured through the right-eye camera → a frame having a left-eye image (L2) captured through the left-eye camera → a frame having a right-eye image (R2) captured through the right-eye camera → and so on.

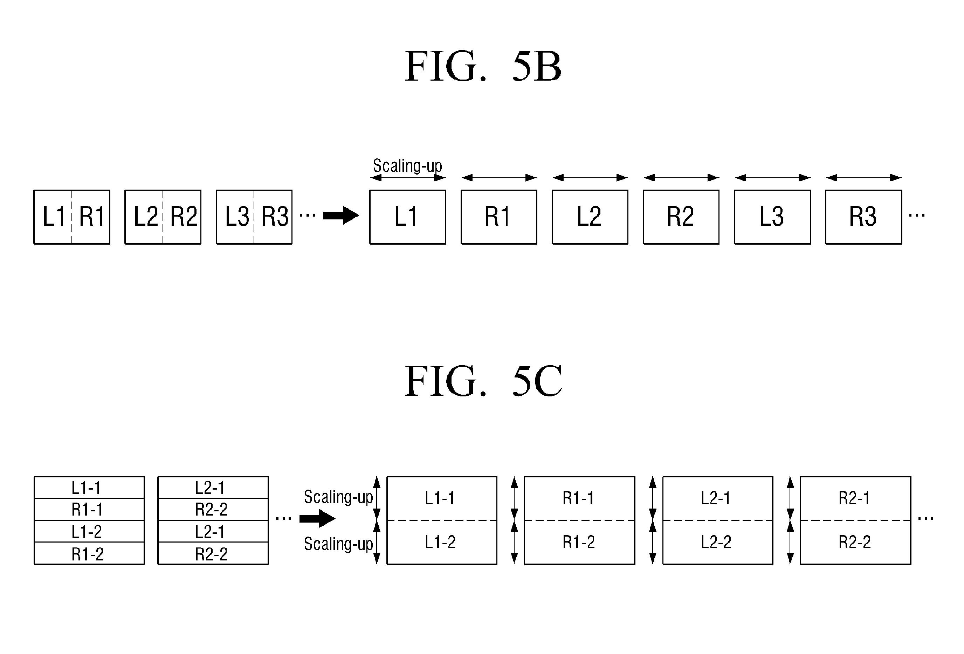

FIG. 5B illustrates 3D image which is input according to a side-by-side format.

The side-by-side 3D image format includes both the left-eye and right-eye images in one frame. Specifically, the side-by-side 3D image format includes the left-eye and right-eye images split horizontally, so that the left-eye image is presented on the left side and the right-eye image is presented on a right side of the screen.

According to the side-by-side format, the TV 200 horizontally divides each frame of the received 3D image into two parts, i.e., into left-eye and right-eye images, and scales up by 2x the divided left-eye and right-eye images in horizontal directions, and alternately displays the up-scaled image on a screen.

Therefore, a 3D image is displayed in an order of: a left-eye image enlarging by 2x a left portion (L1) of the image included in a first frame → a right-eye image enlarging by 2x a right portion (R1) of the image included in a first frame → a left-eye image enlarging by 2x a left portion (L2) of the image included in a second frame → a right-eye image enlarging by 2x a right portion (R2) of the image included in a second frame → and so on.

A 3D image according to a top-bottom format is obtained in somewhat analogous manner from the processing of the side-by-side 3D image format described above. However, for the top-bottom 3D image format, a vertical scale-up, instead of horizontal scale-up, is applied to divide into left-eye and right-eye images, so that the divided left-eye and right-eye images are alternately output to provide the viewer with 3D image.

FIG. 5C illustrates a 3D image which is input according to a horizontal interleave format according to an exemplary embodiment.

A horizontal interleave 3D image format includes both of the left-eye and right-eye images in one frame. Specifically, the horizontal interleave 3D image format includes the alternating rows of left-eye and right-eye images.

Accordingly, the TV 200 divides each frame of the incoming 3D image into left-eye and right-eye images by odd and even rows, scales up by 2x the divided left-eye and right-eye images in a vertical direction, and alternately displays the images on the screen.

Accordingly, the 3D image is displayed in an order of: a left-eye image enlarging by 2x the image portions at odd rows (L1-1, L1-2) included in a first frame → a right-eye image enlarging by 2x the right portions (R1-1, R1-2) included in a first frame → a left-eye image enlarging by 2x the left portions (L2-1, L2-2) included in a second frame → a right-eye image enlarging by 2x the right portions (R2-1, R2-2) included in a second frame → and so on.

Alternatively, the horizontal interleave 3D image format may not utilize the scaling up, but instead utilize a way of interpolating the right-row portions using the odd-row portions to generate a left-eye image, and interpolating the odd-row portions using the even-row portions to generate right-eye image.

Alternatively, instead of scaling up or interpolation, the horizontal interleave 3D image format may be implemented in a manner of outputting only the odd rows of image to generate left-eye images and outputting only the even rows of image to generate right-eye images.

Processing a 3D image according to vertical interleave or checkerboard format may is obtained in somewhat analogous manner to the processing explained above with reference to the horizontal interleave format.

However, according to the vertical interleave 3D image format, column-scaling or interpolating is applied to divide the left-eye and right-eye images, so that the divided left-eye and right-eye images are alternately output to the viewer, providing a 3D image as a result.

As for the checkerboard 3D image format, scaling or interpolating by pixel or pixel group units may be implemented.

### 3. Changing between 2D mode and 3D mode

Changing between 2D mode and 3D mode according to an exemplary embodiment will be explained in greater detail below, with reference to FIGS. 3 and 6 to 10D.

The operations of the components of the TV 200 according to an exemplary embodiment will be explained in detail below first, with reference to FIG. 3.

The TV 200 operates in a 2D and a 3D display modes. The 2D display mode ('2D mode') is to display a 2D image. If the TV 200 operates in 2D mode, the image processing unit 220 of the TV 200 applies a general image processing to the input 2D image and transmits the image to the image output unit 230.

The 3D display mode ('3D mode') is to display a 3D image. If the TV 200 operates in 3D mode, the image processing unit 220 of the TV 200 applies the processing as illustrated in FIG. 5C, thereby generating left-eye and right-eye images. Specifically, the image processing unit 220 may apply one of various 3D image formats to generate the left-eye and right-eye images. The image processing unit 220 may then alternately output the left-eye and right-eye images to the image output unit 230. As explained above, the TV 200 processes the incoming image to display a 3D image in 3D mode.

The control unit 240 changes from the 2D mode to the 3D mode if a predetermined instruction is input through the manipulation unit 270. The control unit 240 also controls the TV 200 so that a predetermined 3D format is applied to the input image and the image in the predetermined 3D format is displayed in the 3D mode. Specifically, the control unit 240 controls the TV 200 so that the incoming image is processed through the operations illustrated in FIGS. 5A to 5C and displayed as the left-eye and right-eye images. Further, if the predetermined instruction is again input in 3D mode, the control unit 240 controls the TV 200 so that another format is applied to the incoming image and the resultant image is displayed.

If the predetermined instruction is input repeatedly through the manipulation unit 270 in the 3D mode, the control unit 240 controls the TV 200 so that a plurality of formats are applied to the incoming image in order and the resultant images are displayed. Herein, the plurality of formats may include the 3D image formats supported by the TV 200. For example, the 3D image formats supported by the TV 200 may include top-bottom, side-by-side, and frame sequential formats. Accordingly, if the viewer inputs the predetermined instruction to the TV 200 in a 2D mode, the control unit 240 changes the display mode into a 3D mode, applies side-by-side format, and displays the resultant 3D image. If the viewer inputs the predetermined instruction for the second time while the side-by-side format image is displayed, the control unit 240 maintains the 3D mode, and applies the top-bottom format and displays the resultant image accordingly. If the viewer inputs the predetermined instruction for the third time while the image according to the top-bottom format is displayed, the control unit 240 maintains the 3D mode, and applies the frame sequential format and displays the resultant image accordingly. If the viewer inputs the predetermined instruction for the fourth time while the image according to the frame-sequential format is displayed, the control unit 240 changes into the 2D mode and displays the incoming image in the 2D mode. In other words, if the viewer inputs the predetermined instruction after each of the supporting 3D formats is sequentially applied once, the control unit 240 controls the TV 200 so that the display mode is changed into the 2D mode and the incoming image is displayed in the 2D mode.

Accordingly, the control unit 240 controls the TV 200 so that the formats supported in the 3D mode are applied in a sequential order, in response to the repeating input of one predetermined instruction.

Herein, the predetermined instruction instructs the TV 200 to change a display mode into a 2D mode or a 3D mode, and to change a 3D image format if the display mode is the 3D mode. Accordingly, in the 2D mode, the predetermined instruction directs the TV 200 to change to the 3D mode. If the current display mode is the 3D mode and each of the supporting formats is applied once, the predetermined instruction that is input next directs the TV 200 to change to the 2D mode. In other words, the predetermined instruction operates in a toggling manner to change the 3D image formats and the 2D and 3D modes.

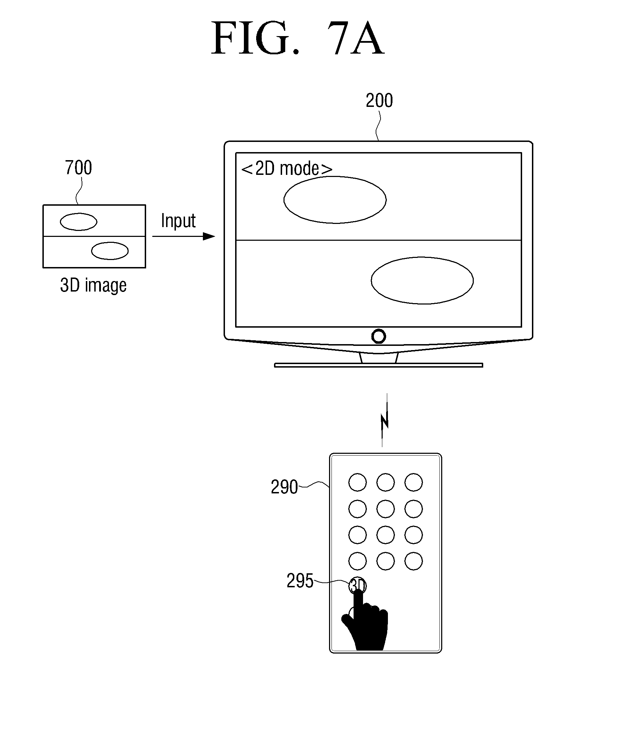

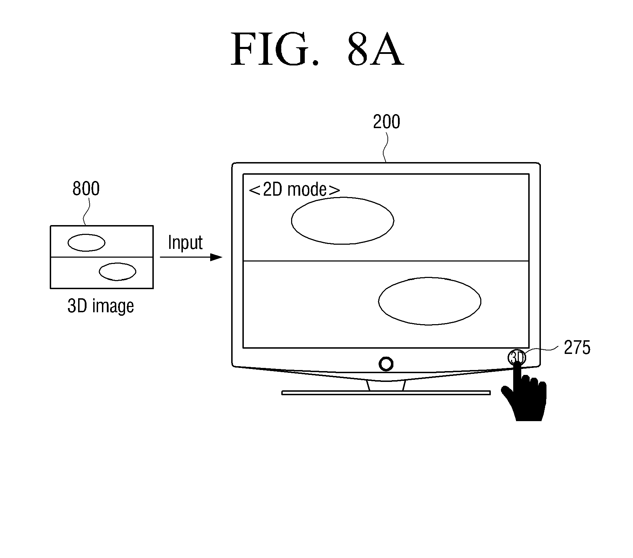

Specifically, the predetermined instruction may take a form of pressing a button (such as a display mode change button) of the remote controller 290 to control the TV 200, which will be explained below with reference to FIGS. 7A to 7D. The predetermined instruction may also take a form of pressing a button (such as a display mode changing button) of the TV 200, which will be explained below with reference to FIGS. 8A to 8D.

Further, the predetermined instruction may take a form of selecting an item from the display menu on a screen. The GUI generating unit 250 generates a menu including a plurality of format items and provides a screen image with the menu.

The control unit 240 controls the image output unit 230 to apply to the incoming image one of the plurality of formats that corresponds to the menu item on which a highlighting is placed by the viewer, and to display the resultant image in a 3D mode. The term 'plurality of formats' refers to the formats supported by the TV 200. The menu may further include an item to execute the 2D mode, in which case the control unit 240 may control the TV 200 so that the 2D mode is set and the incoming image is displayed in the 2D mode, if the highlighting is placed on the item to execute the 2D image.

The term 'menu' may refer to a menu provided to set the display mode. By way of example, the menu may include a 2D mode item and a 3D mode item, in which the 3D mode item may include side-by-side, top-bottom, and frame sequential format items.

As explained above, using only the predetermined instruction, the TV 200 is configured to apply various formats to the incoming image in a 3D mode and display the resultant 3D images. The viewer need not check the 3D format of the currently incoming image, but simply tries out various formats by inputting the predetermined instruction in a repeating pattern, views the resultant images, and select the format that has the appropriate 3D display quality. Accordingly, the viewer can execute the 3D mode and view the incoming 3D image, by inputting only the predetermined instruction in a repeating manner.

FIG. 6 is a flowchart illustrating a method of providing a 3D image based on a repeating input of a predetermined instruction, according to an exemplary embodiment.

At S610, the TV 200 operates in a two-dimensional (2D) mode. At S620, the TV 200 detects an input of the predetermined instruction from the viewer.

At S620-Y, if the predetermined instruction is input in the 2D mode, at S630, the TV 200 changes to a 3D mode. At S640, the TV 200 applies side-by-side format and displays the resultant image in 3D mode. Accordingly, the TV 200 processes the 3D image as illustrated in FIG. 5B and displays left-eye and right-eye images.

At S650-Y, if the predetermined instruction is input for the second time in the 3D mode, at S660, the TV 200 applies top-bottom format and displays the resultant image in the 3D mode. Accordingly, the TV 200 processes the incoming 3D image using the 3D image forming processing, and displays left-eye and right-eye images.

At S670-Y, if the predetermined instruction is input for the third time in the 3D mode, at S680, the TV 200 applies the frame sequential format and displays the resultant image. Accordingly, the TV 200 processes the incoming 3D image using the 3D image forming processing as illustrated in FIG. 5A, and displays left-eye and right-eye images.

As explained above, the TV 200 continues to apply the format other that the currently-applied format as the predetermined instruction is input repeatedly in the 3D mode. Accordingly, the TV 200 sequentially applies the plurality of formats and displays the resultant images in response to a repeating input of the predetermined instruction in the 3D mode.

At S690-Y, if the predetermined instruction is input for the fourth time in the 3D mode, at S610, the TV 200 returns to and operates in the 2D mode. After each of the supporting formats is applied once in the 3D mode, the TV 200 changes to the 2D mode in response to the next input of the predetermined instruction. Accordingly, the predetermined instruction is applied in a toggling manner in changing the 3D mode formats and the 2D mode.

As explained above, based on only one type of the predetermined instruction, the TV 200 is configured to apply various formats to the incoming 3D image and display the resultant images. Accordingly, the viewer has no need to check the 3D format of the currently-received 3D image, but simply inputs the predetermined instruction repeatedly, to apply various formats to the incoming image, checks the resultant images, and selects the format which displays appropriate 3D display quality. Accordingly, the viewer can execute the 3D mode and watch the incoming 3D image, by inputting the predetermined instruction in a repeating pattern.

Referring to FIGS. 7A to 7D, the process of changing the display modes and the 3D image formats by manipulating the buttons of a remote controller according to an exemplary will be explained in greater detail below.

FIGS. 7A to 7D are views illustrating the process of applying the 2D mode and the plurality of formats of the 3D mode in a toggling manner by manipulating the buttons of the remote controller according to an exemplary embodiment.

FIG. 7A illustrates an example in which a top-bottom 3D image 700 is input to the TV 200 operating in 2D mode.

Referring to FIG. 7A, if the top-bottom 3D image 700 is input to the TV 200 operating in 2D mode, the TV 200 displays the 3D image without implementing 3D image forming processing. Accordingly, the viewer just sees the top-bottom 3D image 700 on the screen.

In this situation, if the viewer presses the display mode change button 295 of the remote controller 290, the TV 200 changes into 3D mode. The TV 200 then applies the side-by-side format, among the formats supported by the TV 200, and displays the resultant 3D image 700 in 3D mode.

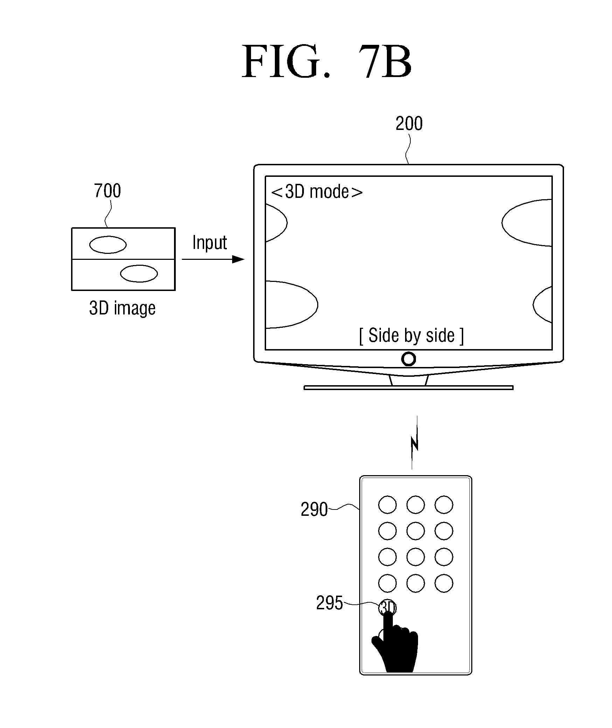

FIG.7B is a view illustrating an example in which the top-bottom 3D image 700 is input to the TV 200 which is operating in a 3D mode and in a side-by-side format.

Referring to FIG. 7B, if the top-bottom 3D image 700 is input to the TV 200 in a 3D mode, the TV 200 applies the side-by-side format and displays the resultant 3D image. Herein, since the 3D image 700 is in the top-bottom format, the viewer finds the 3D image 700 to be improperly presented on the TV 200.

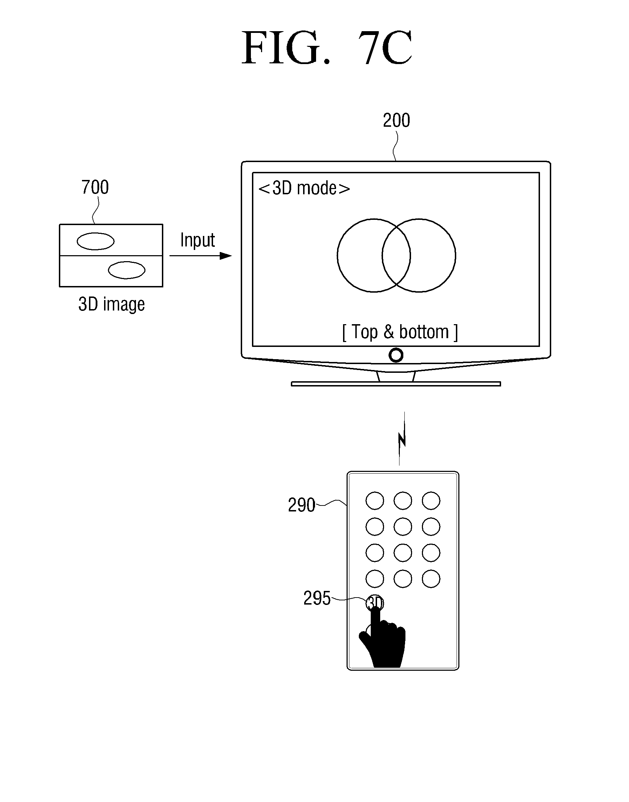

In this situation, if the viewer again presses the display mode change button 295 of the remote controller 290, the TV 200 maintains the 3D mode, and applies another format. For example, as illustrated in FIG. 7C, the TV 200 applies the top-bottom format and displays the resultant 3D image 700 accordingly.

FIG. 7C is a view illustrating an example in which the top-bottom 3D image 700 is input to the TV 200 which is operating in s 3D mode and in the top-bottom format.

Referring to FIG. 7C, if the top-bottom 3D image 700 is input to the TV 200 in the 3D mode, the TV 200 applies the top-bottom format to the incoming 3D image 700 and displays the resultant image in 3D mode. Herein, since the 3D image 700 is in the top-bottom format and the TV 200 applies the top-bottom format to the image, the viewer is presented with a proper 3D image 700 on the TV 200.

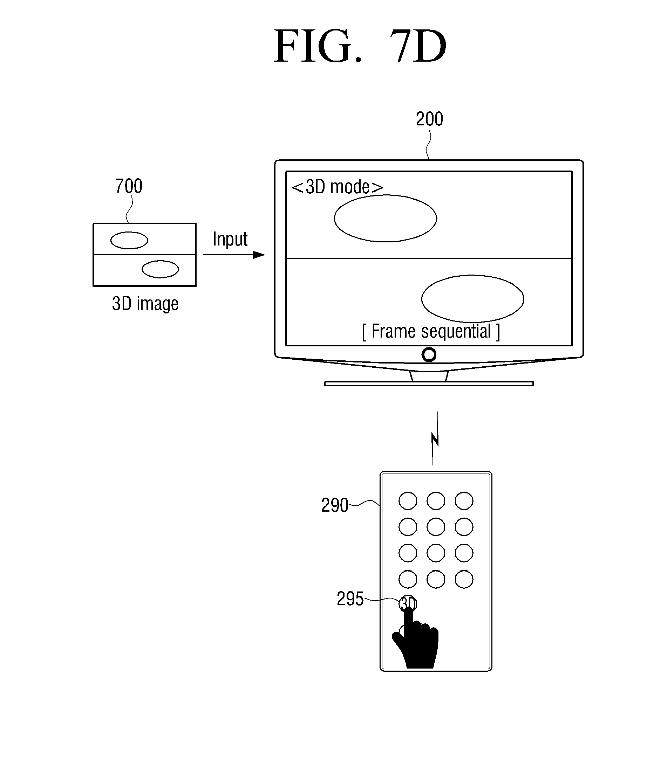

In this situation, if a viewer again presses the display mode change button 295 of the remote controller 290, the TV 200 maintains 3D mode, and applies another format supported by the TV 200. By way of example, as illustrated in FIG. 7D, the TV 200 applies the frame sequential format and displays the resultant image in the 3D mode.

FIG. 7D is a view illustrating an example in which a top-bottom 3D image 700 is input to the TV 200 which is operating in a 3D display mode and in the frame sequential format.

Referring to FIG. 7D, when the top-bottom 3D image 700 is input to the TV 200 in the 3D mode, the TV 200 applies the frame sequential format to the incoming 3D image 700 and displays the image in the 3D mode. Herein, since the TV 200 applies the frame sequential format to the incoming 3D image 700 which has the top-bottom format, an undesirable image appears on the TV 200.

In such a situation, if the viewer again presses a display mode changing button 295 as illustrated in FIG. 7A, the TV 200 changes to the 2D mode and displays the incoming image. Since the current display mode is the 3D mode and all of the formats have been applied once, the TV 200 changes back to the 2D display mode in response to inputting a viewer's instruction. In other words, the display mode changing button 295 of the remote controller 290 operates in a toggling manner to change among the 3D image formats and the 2D mode.

As explained above, through the predetermined button 295 of the remote controller 290, the TV 200 is configured to apply a variety of formats to an incoming image in a 3D mode, and display the resultant image. As for the viewer's side, the viewer does not have to check the format of the currently-incoming 3D image, but simply press the button 295 of the remote controller 290 repeatedly to apply a variety of formats to the incoming image, view the resultant images of applying the different formats, and select the one which shows an appropriate image quality. In other words, the viewer only has to press the button 295 of the remote controller 290 repeatedly to execute the 3D mode and view the incoming image in the 3D mode.

The exemplary process of changing the display mode and the 3D image formats by manipulating a predetermined button arranged on the TV 200 will be explained in greater detail below, with reference to FIGS. 8A to 8D.

FIGS. 8A to 8D are views illustrating a process in which a plurality of formats in 2D and 3D modes are applied in a toggling manner, based on the instruction of the predetermined button provided on the TV 200.

FIG. 8A is a view illustrating an example in which a top-bottom 3D image 800 is input to the TV 200 which is operating in a 2D display mode.

Referring to FIG. 8A, when a top-bottom 3D image 800 is input to the TV 200 in a 2D mode, the TV 200 directly displays the 3D image without implementing a 3D image-forming processing.. That is, the top-bottom 3D image 800 is displayed on the screen as is.

In this situation, if the viewer presses a display mode changing button 275 of the TV 200, the TV 200 changes the display mode to a 3D mode, and applies one of the formats supported by the TV 200, such as a side-by-side format, to the incoming 3D image 800 to display the image in the 3D mode.

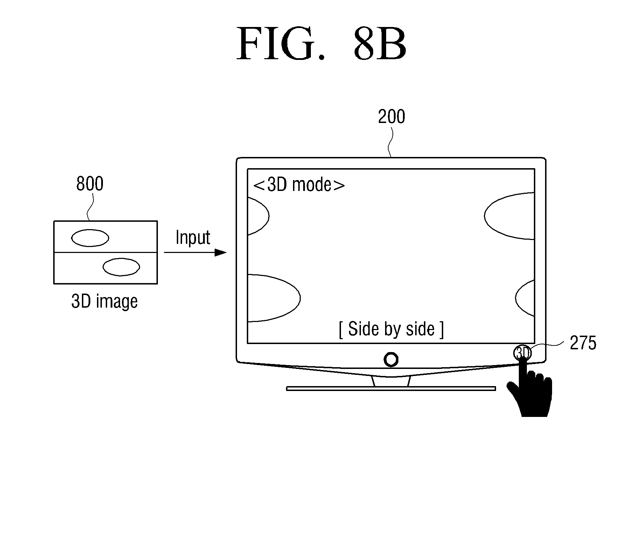

FIG. 8B illustrates an example in which a top-bottom 3D image 800 is input to the TV 200 which is operating in the 3D mode and in the side-by-side format.

Referring to FIG. 8B, when the top-bottom 3D image 800 is input to the TV 200 in a 3D mode, the TV 200 applies the side-by-side format to the incoming image and displays the resultant image in the 3D mode. Herein, since the incoming 3D image 800 has the top-bottom format and the TV 200 applies the side-by-side format, an undesirable image appears on the TV 200.

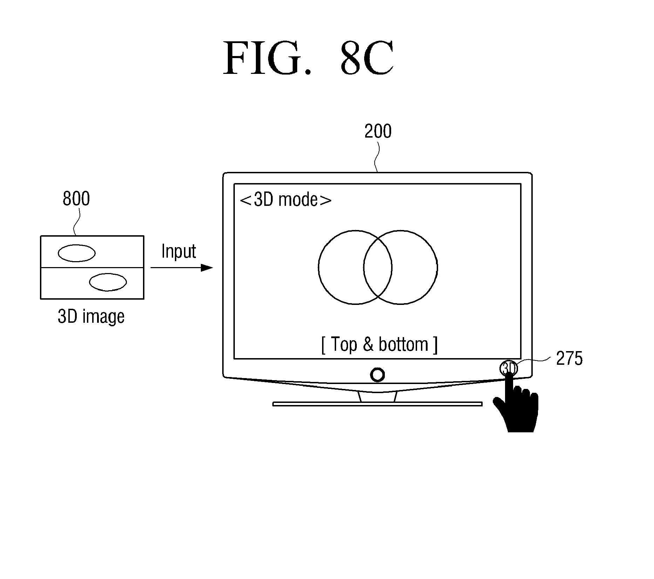

In this situation, if the viewer again presses the display mode changing button 275 of the TV 200, the TV 200 applies another format supported by the TV 200, while maintaining the display mode in the 3D mode. That is, as illustrated in FIG. 8C, the TV 200 applies another format, such as the top-bottom format, to the incoming 3D image 800, and displays the resultant image in the 3D mode.

FIG. 8C is a view illustrating an example in which a top-bottom 3D image 800 is input to the TV 200 which is operating in the 3D display mode and in the top-bottom format.

Referring to FIG. 8C, when the top-bottom 3D image 800 is input to the TV 200 in the 3D mode, the TV 200 applies the top-bottom format to the incoming 3D image 800, and displays the image in the 3D mode. Herein, since the incoming 3D image 800 has the top-bottom format and the TV 200 applies the top-bottom format, the incoming 3D image 800 is appropriately displayed on the TV 200.

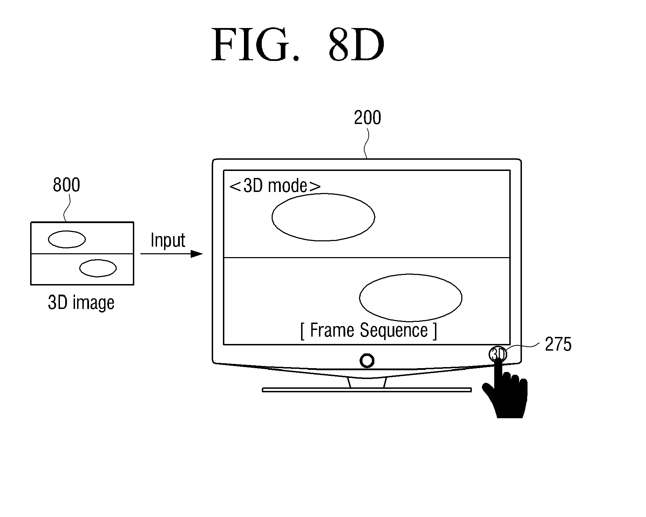

In this situation, if the viewer again presses the display mode changing button 275 of the TV 200, the TV 200 applies another format supported by the TV 200, while maintaining the display mode in a 3D mode. That is, as illustrated in FIG. 8D, the TV 200 may apply the frame sequential format and displays the incoming 3D image 700 in the 3D mode.

FIG. 8D illustrates an example in which a top-bottom 3D image 800 is input to the TV 200 which is operating in the 3D mode and which implements the frame sequential format.

Referring to FIG. 8D, when the top-bottom 3D image 800 is input to the TV 200 in the 3D mode, the TV 200 applies the frame sequential format to the input 3D image 800, and displays the resultant image in the 3D mode. Herein, since the incoming 3D image 800 is in the top-bottom format and the TV 200 applies the frame sequential format, an inappropriate image appears on the TV 200.

In such a situation, if the viewer presses the display mode changing button 275 of the TV 200, the TV 200 changes to the 2D mode as illustrated in FIG. 8A, and displays the incoming image accordingly. Since the current display mode is the 3D mode and all the formats have been applied once, the TV 200 returns to the 2D mode in response to an input of a predetermined instruction. As explained above, the display mode changing button 275 of the TV 200 operates in a toggling manner to change among the 3D formats and the 2D mode.

As explained above, the TV 200 is capable of applying a variety of formats to the incoming image and displaying the resultant image in the 3D mode, according to the input made through the display mode changing button 275. Accordingly, the viewer does not have to check the format of the currently incoming 3D image, but simply presses the button 275 of the TV 200 repeatedly to apply a variety of formats to the incoming image, view the resultant images of applying the different formats, and select the one which shows an appropriate display quality. In other words, the viewer only has to press the button 275 of the TV 200 repeatedly to execute the 3D mode and view the incoming image in the 3D mode.

Meanwhile, the 'predetermined instruction' may include selecting a predetermined item from a menu on the screen, in which case the TV 200 may generate a menu, including a plurality of format items regarding the 3D image therein, and add the menu to an image to be displayed on the screen.

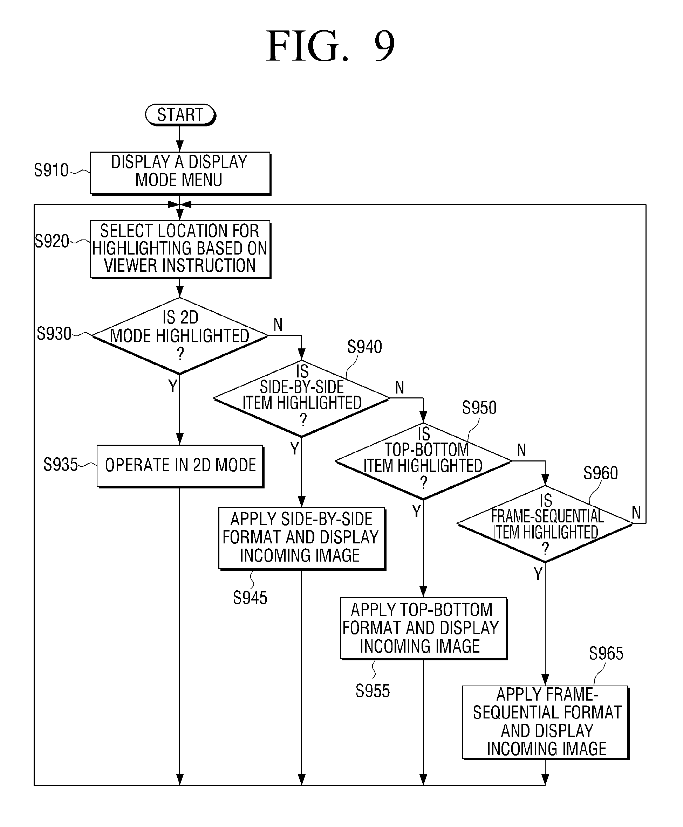

The above will be explained in greater detail below, with reference to FIGS. 9 to 10D.

FIG. 9 is a flowchart illustrating a method of providing a 3D image using a display mode menu, according to an exemplary embodiment.

At S910, the TV 200 displays a display mode menu on the screen. The 'display mode menu' herein may include a menu which is displayed for setting a display mode according to the viewer instruction. By way of example, the display mode menu may include a 2D mode item and a 3D mode item, in which the 3D mode item may include a side-by-side item, a top-bottom item, and a frame sequential item.

At S920, the TV 200 selects a location on the display mode menu where highlighting is placed, according to the viewer instruction. At S930-Y, if the highlighting is placed on the 2D mode, at S935, the TV 200 operates in the 2D mode and accordingly displays the incoming image in the 2D mode.

S940-Y, if the highlighting is placed on the side-by-side item of the display mode menu, at S945, the TV 200 applies the side-by-side format and displays the incoming image accordingly.

At S950-Y, if the highlighting is placed on the top-bottom item of the display mode menu, at S955, the TV 200 applies the top-bottom format and displays the incoming image accordingly.

At S960-Y, if the highlighting is placed on the frame sequential item of the display mode menu, at S965, the TV 200 applies the frame sequential format and displays the incoming image accordingly.

As explained above, the TV 200 applies one of a plurality of format items that corresponds to an item on which highlighting is placed by the viewer, and displays the incoming 3D image accordingly. Herein, the term 'a plurality of format items' refers to the formats supported by the TV 200. The display mode menu may additionally include an item to execute the 2D mode.

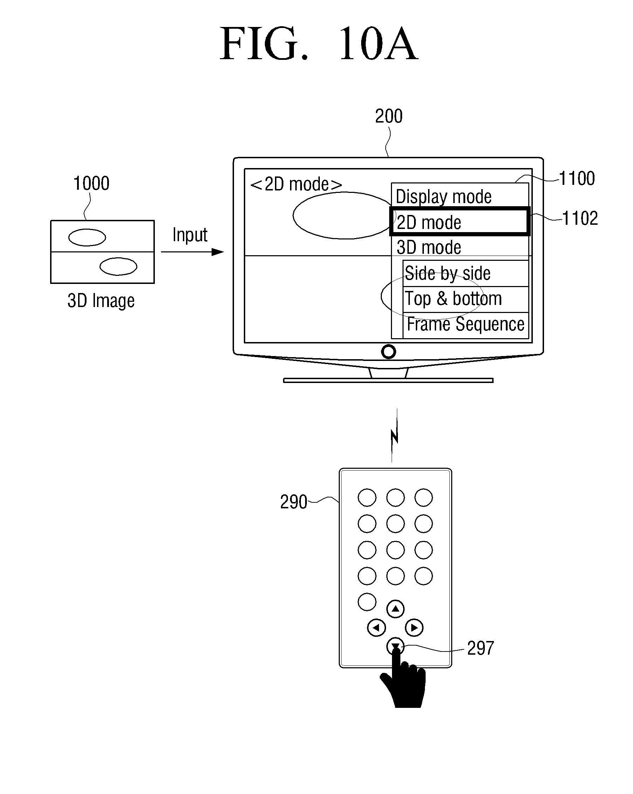

FIGS. 10A to 10D are views illustrating the process of selecting items of a display mode menu 1100 on the screen of the TV 200, and applying a plurality of 2D and 3D formats, according to an exemplary embodiment.

FIG. 10A is a view illustrating an example in which a top-bottom 3D image 1000 is input to the TV 200 operating in 2D mode.

Referring to FIG. 10A, if a 2D mode item 1102 of the display mode menu 1100 is highlighted, the TV 200 operates in the 2D mode. If the top-bottom 3D image 1000 is input to the TV 200 in the 2D mode, the TV 200 displays the incoming 3D image as is, without implementing a 3D image-forming processing. As a result, the top-bottom 3D image 1000 is directly displayed on the screen.

In this situation, if the viewer presses a downward button 297 of the remote controller 290, the highlighting moves to the side-by-side item. As a result, the TV 200 changes the display mode to the 3D mode, applies the side-by-side format, and displays the incoming 3D image 1000 in the 3D mode accordingly.

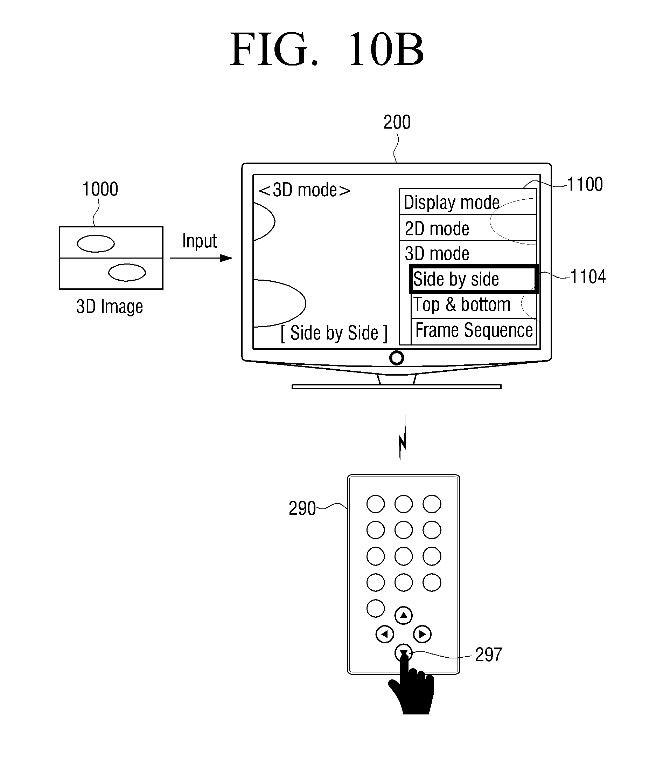

FIG. 10B is a view illustrating an example in which a top-bottom 3D image 1000 is input to the TV 200 which is operating in the 3D mode and which is in the side-by-side format.

Referring to FIG. 10B, if the highlighting is placed on the side-by-side item 1104 of the display mode menu 1100, the TV 200 operates in the 3D mode, implementing the side-by-side format. Accordingly, when the top-bottom 3D image 1000 is input to the TV 200 in the 3D mode, the TV 200 applies the side-by-side format to the incoming 3D image 1000, and displays the resultant image in the 3D mode. Herein, since the top-bottom 3D image 1000 is input to the TV 200 which implements the side-by-side format, an inappropriate image appears on the TV 200.

In such a situation, if the viewer again presses the downward button 297 of the remote controller 290, the highlighting moves to the top-bottom item. Accordingly, the TV 200 applies the top-bottom format to the incoming 3D image 1000, while maintaining the display mode in the 3D mode, to thus display the incoming 3D image 1000 in the 3D mode.

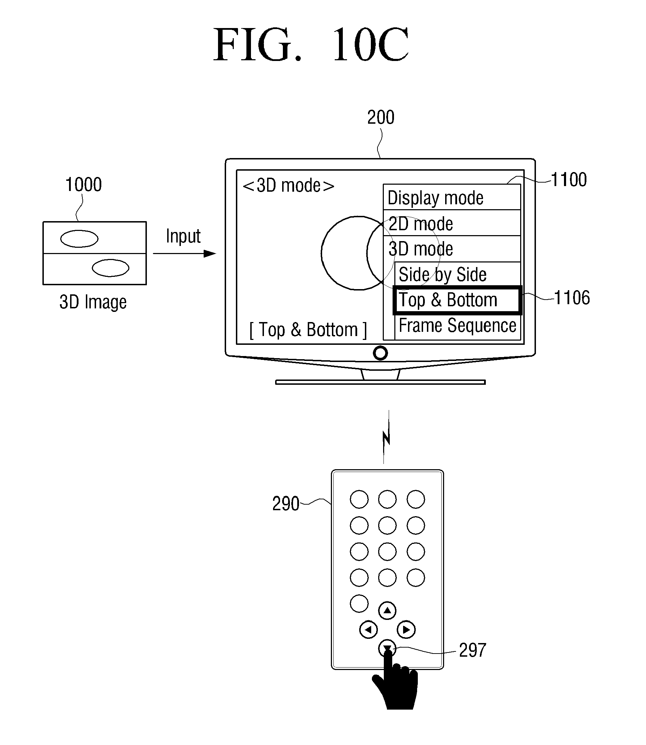

FIG. 10C is a view illustrating an example in which a top-bottom 3D image 1000 is input to the TV 200 which is operating in the 3D mode and in the top-bottom format.

Referring to FIG. 10C, if the highlighting is placed on the top-bottom item 1106 of the display mode menu 1100, the TV 200 operates in the 3D mode, implementing the top-bottom format. Accordingly, when the top-bottom 3D image 1000 is input to the TV 200 in the 3D mode, the TV 200 applies the top-bottom format to the incoming 3D image 1000 and displays the resultant image in the 3D mode. Herein, since the incoming 3D image 1000 is in the top-bottom format and the TV 200 applies the top-bottom format, an appropriate image appears on the TV 200.

In such a situation, if the viewer again presses the downward button 297 of the remote controller 290, the highlighting moves to the frame sequential item. As a result, the TV 200 applies the frame sequential format to the incoming 3D image 1000, while maintaining the display mode in the 3D mode, and displays the resultant image in 3D mode.

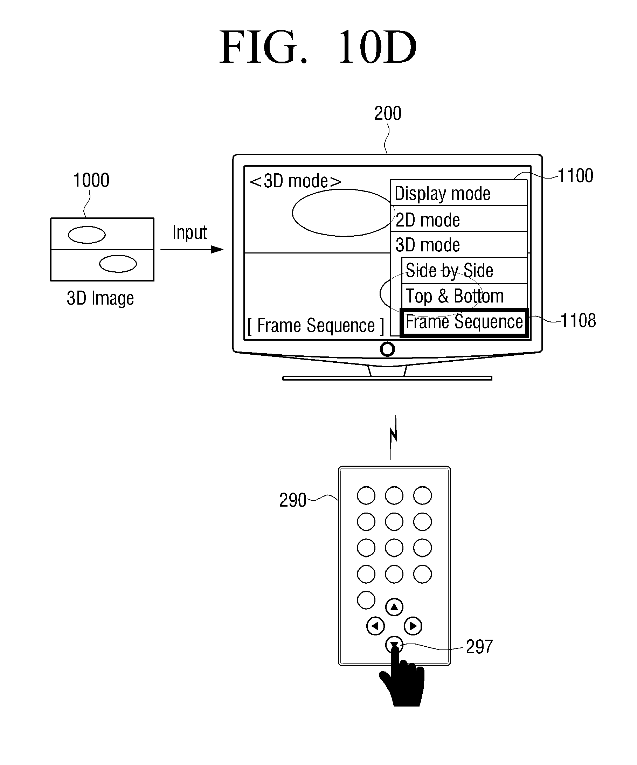

FIG. 10D is a view illustrating an example in which a top-bottom 3D image 1000 is input to the TV 200 which is operating in 3D mode and in the frame sequential format.

Referring to FIG. 10D, if the highlighting is placed on the frame sequential item 1108 of the display mode menu 1100, the TV 200 operates in the 3D mode, implementing the frame sequential format. Accordingly, when the top-bottom 3D image 1000 is input to the TV 200 in the 3D mode, the TV 200 applies the frame sequential format to the incoming 3D image 1000 and displays the resultant image in the 3D mode. Herein, since the incoming 3D image 1000 is in the top-bottom format and the TV 200 applies the frame sequential format, an inappropriate image appears on the TV 200.

In such a situation, if the viewer again presses the downward button 297 of the remote controller 290, the highlighting moves to the 2D item 1102 depicted in FIG.. 10A. As a result, the TV 200 changes the display mode to the 2D mode, and displays the incoming image accordingly.

As explained above, the TV 200 is capable of applying a variety of formats to the incoming image in the 3D mode through the use of the display mode menu 1100, and displaying the resultant image.

Accordingly, the viewer does not have to check the format of the currently incoming 3D image, but simply select the items on the display mode menu 1100 to apply a variety of formats to the incoming image, view the resultant images of applying the different formats, and select the one which shows an appropriate image. Accordingly, by using the display mode menu 1100, the viewer can execute the 3D mode and view the incoming 3D image.

Although the TV 200 is exemplified as the display apparatus according to the exemplary embodiments explained above, it should be understood that any apparatus that is capable of displaying a three-dimension image may be used. By way of example, the display apparatus may be implemented as a 3D monitor, or a 3D image projector.

As explained above, according to the exemplary embodiments, a method of providing a 3D image and a 3D display apparatus applying the method are provided. Accordingly, if a predetermined instruction is input in the 2D mode, the mode is changed to the 3D mode so that a predetermined format is applied to the incoming image, and a resultant image is displayed. If the predetermined instruction is again input in the 3D mode, another format is applied to the incoming image and the resultant image is displayed. As a result, the viewer can conveniently select a 3D image format for the incoming image.

### 4. Composing a 3D image screen according to viewer's instruction

Composing a 3D image screen according to viewer's instructions according to an exemplary embodiment will be explained in detail below, with reference to FIGS. 11 to 13.

FIG. 11 is a view illustrating a screen composition according to an exemplary embodiment.

If a 3D image is received and a viewer command is input to set the 3D image, as illustrated in FIG. 11, a 3D object 1100, together with a GUI 1120 for setting the display, appears on the screen.

Herein, the term '3D object 1110' refers to an object which is displayed with an illusion of depth, when left-eye and right-eye images, each including a common object therein, are time-divided and displayed alternately. FIG. 11 particularly illustrates a circular left-eye image and a circular right-eye image overlapped with each other, for the graphical representation of a 3D image which is time-divided and alternately displayed. Herein, the object included in the left-eye image and the right-eye image may be a 2D object.

The 'setting' herein may refer to the setting related to output status or format, or both. That is, the GUI 1120 as the one illustrated in FIG. 11 may appear for the viewer to input a command to set the output status or format, or both.

Accordingly, the GUI 1120 may include an output item 1130 indicating the output status, and a format item 1140 indicating the format.

Meanwhile, the term 'output status' refers to the output status of a 3D image output, and thus indicates whether the 3D mode is ON or OFF.

Herein, the '3D ON mode' indicates that each image frame included in the incoming 3D image is separated into a left-eye image portion and a right-eye image portion, each of the left-eye image portion and the right-eye image portion is scaled up to generate left-eye and right-eye images, and the left-eye image and the right-eye image are time-divided and alternately displayed.

Meanwhile, the '3D OFF mode' indicates that each image frame included in the incoming 3D image is displayed as is. Accordingly, if the 3D image is formatted by ways other than the frame sequential format, both the left-eye image and the right-eye image are displayed concurrently.

Herein, the output item 1130 includes an indicator in the proximity thereof, in upper and lower sides. The indicator is provided to guide the viewer to use the output item 1130 in upper and lower directions.

By way of example, in response to the predetermined instruction input using the upward/downward buttons on the front panel of the TV 200 or the upward/downward buttons on the remote controller 290, the output status is changed from 3D ON mode to 3D OFF mode, or vice versa.

The term 'format item 1140' herein may indicate one of the frame sequential format, the top-bottom format, the side-by-side format, the horizontal interleave format, the vertical interleave format, and the checkerboard format. Referring to FIG. 11, the format item 1140 includes the top-bottom format, the side-by-side format, the horizontal interleave format, the vertical interleave format, the checkerboard format and the frame sequential format, provided sequentially in a horizontal direction.

Accordingly, if the viewer inputs using the right/left buttons on the front panel of the TV 200 or the right/left buttons on the remote controller 290, the format to process the incoming 3D image is changed in a forward or backward order of: a top-bottom format -> a side-by-side format -> a horizontal interleave format -> a vertical interleave format -> a checkerboard format -> a frame sequential format.

Accordingly, the output item 1130 indicating the output status, and the format item 1140 indicating the image format to implement may be referred to as the output status changing items, since the viewer can change the output status using these items 1130, 1140.

Additionally, the GUI 1120 may further include an item below the output item 1130 and the format item 1140 to guide the viewer to input his command regarding a up/down/left/right direction, selecting, or returning, and an information item above the output item 1130 and the format item 1140 to provide information regarding the setting currently done by the viewer.

As such, the output item 1130 to change the output status and the format item 1140 to change the format may be integrated into one GUI 1120 and displayed, in a manner in which the output item 1130 is operable in up/down directions and the format item 1140 is operable in left/right directions. Accordingly, it is convenient and easy to change the output status and the format with respect to the 3D image.

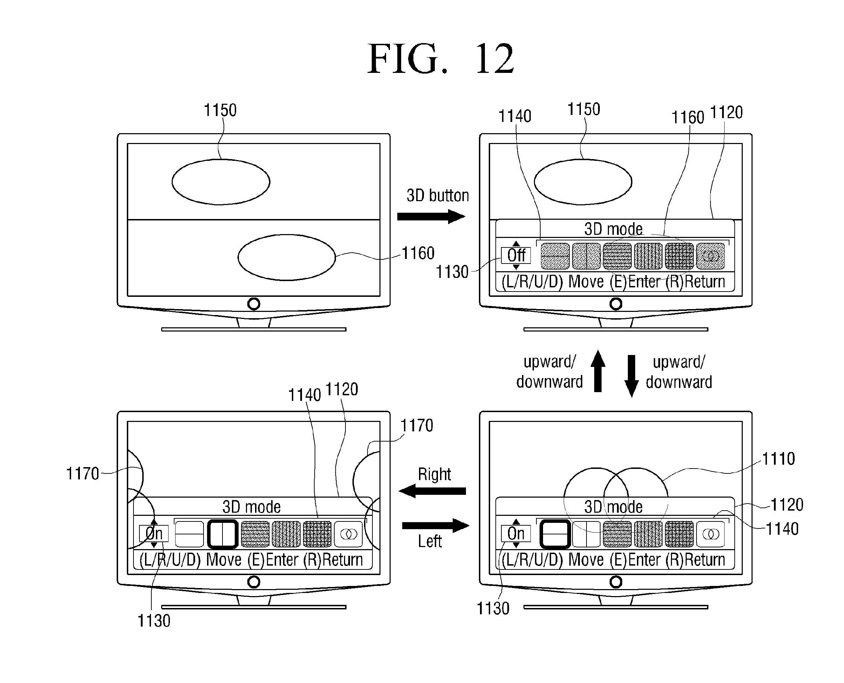

FIG. 12 shows screen compositions to explain in detail a process of changing the output status according to an exemplary embodiment.

First, referring to the screen composition in the left-top side of FIG. 12, if a 3D image is input to the TV 200 in 3D OFF mode, the left-eye image and the right-eye image constructing the 3D image are displayed directly as they are, that is, the left-eye image and the right-eye image are displayed in the manner the left-eye image and the right-eye image are generated. Since the TV 200 is current in the 3D OFF mode, the left-eye image and the right-eye image of the incoming 3D image are space-divided and displayed on the screen.

According to an aspect of an exemplary embodiment, since the 3D image is generated based on the top-bottom format, the left-eye image and the right-eye image are divided into upper and lower sides which include 2D objects 1150, 1160, respectively.

After that, if a viewer presses the 3D button on the front panel of the TV 200 or the 3D button on the remote controller 290, as illustrated in the screen composition in the right-top side of FIG. 12, the GUI 1120, indicative of the current output status, appears on the screen. In this state, the 3D mode or format is not changed. That is, only the GUI 1120 is added in response to the viewer's pressing of the 3D button, while the left-eye image and the right-eye image still include the 2D objects 1150, 1160.

Meanwhile, since the TV 200 is currently in the 3D OFF mode, it is impossible to perform format changing with respect to the incoming 3D image. Accordingly, all the format items 1140 are disabled and shaded so that the viewer cannot select the format items 1140.

Meanwhile, if the viewer input is made through the up/down buttons on the front panel of the TV 200 or the up/down buttons on the remote controller 290, as illustrated in the right-bottom side of FIG. 12, the top-bottom format is applied to the incoming 3D image automatically or manually, and as a result, the 2D objects 1150, 1160 are converted into the 3D object 1110.

Additionally, in response to the viewer selecting the up/down buttons, a changed form of the GUI 1120 appears along with the 3D object 1120. That is, since the TV 200 is now in the 3D ON mode, the output status changing item 1130 is also changed from OFF to ON status.

Additionally, since the TV 200 is currently in the 3D ON mode, it is possible to change the format to apply to the incoming 3D image. By way of example, some of the items 1140 may be enabled and un-shaded, while the other items 1140 remain disabled and shaded.

The reason for some items remaining in disabled status even in the 3D ON mode is because there may be some formats which are not supported by the TV 200. Since the viewer can note the items corresponding to the formats that are not supported by the TV 200, he can select a desired format to apply to the incoming 3D image easily and conveniently.

Additionally, an item corresponding to the currently-implemented format may be highlighted, and the highlighting is movable if there are left/right buttons provided on the front panel of the TV 200 or left/right buttons provided on the remote controller 290. That is, as illustrated in left-bottom side of FIG. 12, if the format to apply to the incoming 3D image is changed to another format, the highlighting is moved to the new format.

Since the viewer can check the currently-implemented format easily, it is convenient for him to change the format.

Meanwhile, if the viewer input is made through the up/down buttons on the front panel of the TV 200 or the up/down buttons on the remote controller 290 in the state such as the one illustrated either in the right-bottom or the left-bottom side of FIG. 12, the TV 200 returns to the 3D OFF mode as illustrated in the left-top side of FIG. 12.

As explained above, it is easier and more convenient to change the image output status and the format to apply to the 3D image, because the output status changing item 1130 and the format changing item 1140 are integrated into one single GUI 1120 and are displayed, and the viewer can change the output status by operating the output status changing item 1130 in the upward/downward directions and change the format by operating the format changing item 1140 in the left/right directions.

### 5. Operation flow to change an output status and a format with respect to incoming 3D image

The flow of operations implemented to change the output status and the format with respect to the incoming 3D image according to an exemplary embodiment will be explained below, with reference to FIG. 13.

FIG. 13 is a flowchart provided to explain a display method according to an exemplary embodiment.

Referring to FIG. 13, at S1210, a 3D image is received. At 1220-Y, if a 3D button is input, at S1230, the TV 200 generates one integrated GUI to adjust the output status and also the format with respect to the received 3D image, and adds the generated GUI to the 3D image.

At S1240, if the viewer input is made in up/down directions by pressing the up/down buttons on the front panel of the TV 200 or the up/down buttons on the remote controller 290, at S1240, the TV 200 determines whether to change the 3D ON mode to 3D OFF mode, or vice versa.

At S1240-Y, if determining to change the 3D OFF mode to the 3D ON mode, at S1250, the TV 200 processes the received 3D image according to one of the applicable formats, and displays the resultant image. At S1260, the TV 200 changes the GUI to highlight an item which corresponds to the currently-implemented format, while disabling and shading the formats other than the currently-implemented format.

At S1240-N, if determining to change 3D ON mode to 3D OFF mode, at S1270, the TV 200 changes to the 3D OFF mode and displays the incoming 3D image in the 2D mode, and at S1280, changes the GUI to disable and shade all the items corresponding to the respective formats.

At S1240, the TV 200 determines if the viewer input indicates a change from the 3D OFF mode to the 3D ON mode; that is, the TV 200 determines if the viewer input is made in up/down directions, and if so, proceeds to operations S1250 and S1260, described above.

Meanwhile, at S1290-Y, if the viewer input is made in left/right directions by using the left/right buttons, at S1300, the TV 200 moves the highlighting to the corresponding direction based on the input button, and at S1310, the TV 200 processes the 3D image with the format corresponding to the highlighted item and displays the resultant image.

As a result, it is easy and convenient to change the output status and the format with respect to the 3D image.

Although the format is changed in the left/right directions and the output status is changed in the up/down directions, it should be understood that the above are only examples for convenience of explanation and not by way of a limitation. Accordingly, other directions may equally be applied according to the technical concept of the present inventive concept.

Furthermore, although the item to change the output status and the item to change the format are exemplified as being integrated into one GUI, this also should not be construed as limiting. By way of an example, the GUI may include a plurality of items for different settings, according to the technical concept of the present inventive concept.

### 6. Composing a 3D image screen according to viewer's instruction

Composing a 3D image screen according to viewer's instructions according to an exemplary embodiment will be explained below, with reference to FIGS. 14A to 17B.

FIGS. 14A to 17B are views illustrating screens in which a GUI regarding the output status and the format is displayed according to the viewer's instructions according to an exemplary embodiment.

Referring to FIG. 14A, the screen indicates that the TV 200 is in 3D ON mode according to a viewer's instruction, and referring to FIG. 14B, the screen indicates that the TV 200 is in 3D OFF mode according to a viewer's instruction.

The TV 200 in the 3D ON mode divides each image frame included in an incoming 3D image into left-eye and right-eye images portions in accordance with a given format, scales up the divided left-eye image and the right-eye image portions to generate left-eye and right-eye images, and time-divides and alternately display the left-eye image and the right-eye image.

On the other hands, the TV 200 in the 3D OFF mode displays each image frame included in the incoming 3D image as it is. Accordingly, if the incoming 3D image is in the format other than the frame sequential format, the left-eye image and the right-eye image are displayed concurrently.

As explained above, in the 3D ON mode, the left-eye image and the right-eye image are time-divided and alternately displayed on a screen. FIG. 14A illustrates a 3D object 1440 in which a circular left-eye image and a circular right-eye image are overlapped with each other for the graphical representation of the 3D image which is time-divided and displayed alternately.

In the 3D ON mode, a GUI 1410 is displayed, including therein information 1420 regarding the output status of the 3D image and information 1430 regarding the format which is currently applied to the 3D image.

The information 1420 regarding the output status explains, as described above, whether the TV 200 is in the 3D ON mode or the 3D OFF mode. Also, the information 1430 regarding the format indicates, as described above, one of the frame sequential format, the top-bottom format, the side-by-side format, the horizontal interleave format, the vertical interleave format, and the checkerboard format.

Referring to FIG. 14A, the information 1430 regarding the format may be particularly represented by the shape icons and the text icons including names of the formats, and an indicator may be provided on upper/lower sides of the shape icons to guide the viewer in changing the format.

In the exemplary 3D image illustrated in FIG. 14A, the information 1430 regarding the format indicates that the 3D image includes the GUI 1410 and the 3D object 1440, which is the result of alternately outputting the two 2D objects in accordance with the top-bottom format.

Meanwhile, in the 3D OFF mode, the left-eye image and the right-eye image are space-divided and displayed on the screen. FIG. 14B particularly illustrates the 2D objects 1450, 1460 in which a circular left-eye image and a circular right-eye image are divided into upper and lower sides, for the graphical representation of an image which is space-divided and displayed concurrently.

Additionally, in the 3D OFF mode, the GUI 1410, indicative of the information 1420 regarding the output status of the 3D image, appears on the screen. As explained above, the information 1420 regarding the output status indicates whether the TV 200 is in the 3D ON mode or the 3D OFF mode.

The 3D ON and OFF modes are changeable by pressing a 3D button provided on the front panel of the TV 200 or a 3D button on the remote controller 290. By way of example, the TV 200 may be changed to the 3D ON mode as illustrated in FIG. 14A if the 3D button is pressed for the first time, and may be changed to the 3D OFF mode as illustrated in FIG. 14B if the 3D button is pressed for the second time, and changed back to the 3D ON mode as illustrated in FIG. 14A if the 3D button is pressed for the third time.

In the 3D ON mode, the TV 200 automatically extracts a format to apply to the 3D image, using the information received along with the 3D image, and processes the 3D image according to the extracted format. By way of example, referring to FIG. 14A, based on the information indicating that the top-bottom format is appropriate for the received 3D image, the TV 200 applies the top-bottom format to the received 3D image.

However, the TV 200 may determine an appropriate format independently, if the information received along with the 3D image does not indicate information about a format, by analyzing the received 3D image.

Meanwhile, the TV 200 may select one of the applicable formats on a random basis, if there is no way to determine an appropriate format to apply with respect to the 3D image, and applies the selected format to the received 3D image. Referring to FIG. 14A, the TV 200 randomly applies the top-bottom format to the incoming 3D image.

As explained above, the 3D image screen may mainly be divided into the 3D ON mode and the 3D OFF mode, and the commands related to the 3D ON mode and the 3D OFF mode are mapped into the 3D button provided on the front panel of the TV 200 or the 3D button provided on the remote controller 290. As a result, the viewer may select the output status of the TV 200, simply by pressing the 3D button repeatedly.

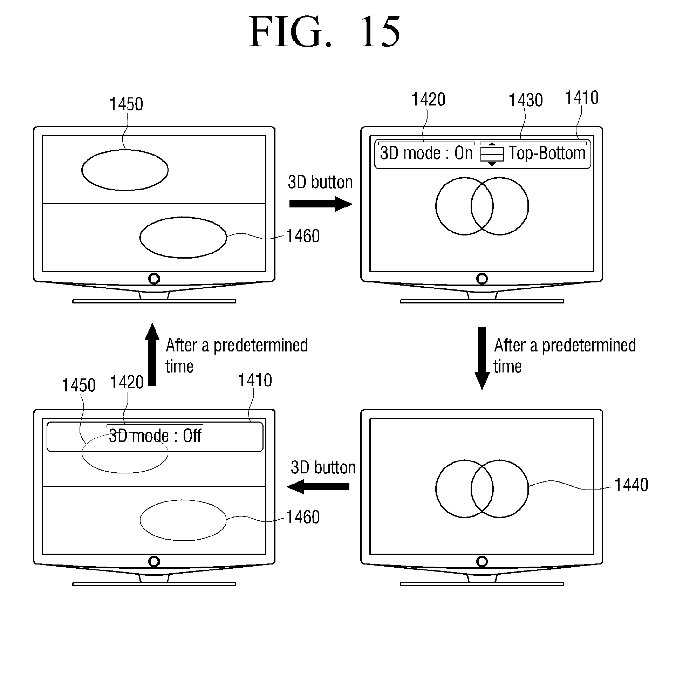

The process of changing a screen related to the 3D mode according to an exemplary embodiment will be explained in detail below, with reference to FIG. 15.

FIG. 15 is a view illustrating a process of changing a screen according to viewer's instructions and time change according to an exemplary embodiment.

As illustrated in the left-top side of FIG. 15, if a 3D image is input to the TV 200 in the 3D OFF mode, the left-eye image and the right-eye image constructing the 3D image are displayed on the screen as they are, i.e., in the same way the left-eye image and the right-eye image are generated. In other words, since the TV 200 is currently in the 3D OFF mode, the 3D image is space-divided into the left-eye image and the right-eye image and is displayed on the screen in this way.

According to an aspect of an exemplary embodiment, since the 3D image is generated using the top-bottom format, the left-eye image and the right-eye image are divided into upper and lower sides, and each of the left-eye image and the right-eye image includes a 2D object 1450, 1460.

Meanwhile, if a viewer input is made through the 3D button provided on the front panel of the TV 200 or the 3D button provided on the remote controller 290, as illustrated in the right-top side of FIG. 15, the top-bottom format is applied to the 3D image automatically or manually. Along with the 3D image, as explained above, the GUI 1410, including therein the information 1420 regarding the output status of the 3D image and the information 1430 regarding the format currently implemented to the 3D image, is also displayed.

If a predetermined time elapses after the GUI 1410 is displayed, as illustrated in the right-bottom side of FIG. 15, the GUI 1410 may disappear. The 'predetermined time' may be changed according to the setting by the viewer, or may be factory preset in the TV 200.

Meanwhile, if the viewer input is made for the second time through the 3D button of the front panel of the TV 200 or the 3D button of the remote controller 290, as illustrated in the left-bottom side of FIG. 15, the left-eye image and the right-eye image are space-divided and displayed concurrently, and the GUI 1410 indicating the information 1420 regarding the output status of the 3D image is displayed on the screen.

If a predetermined time elapses after the GUI 1410 is displayed, as illustrated in the left-top side of FIG. 15, the GUI 1410 may disappear.

As explained above, the viewer can select the output status by simply pressing the 3D button repeatedly, and is also conveniently informed of the output status.

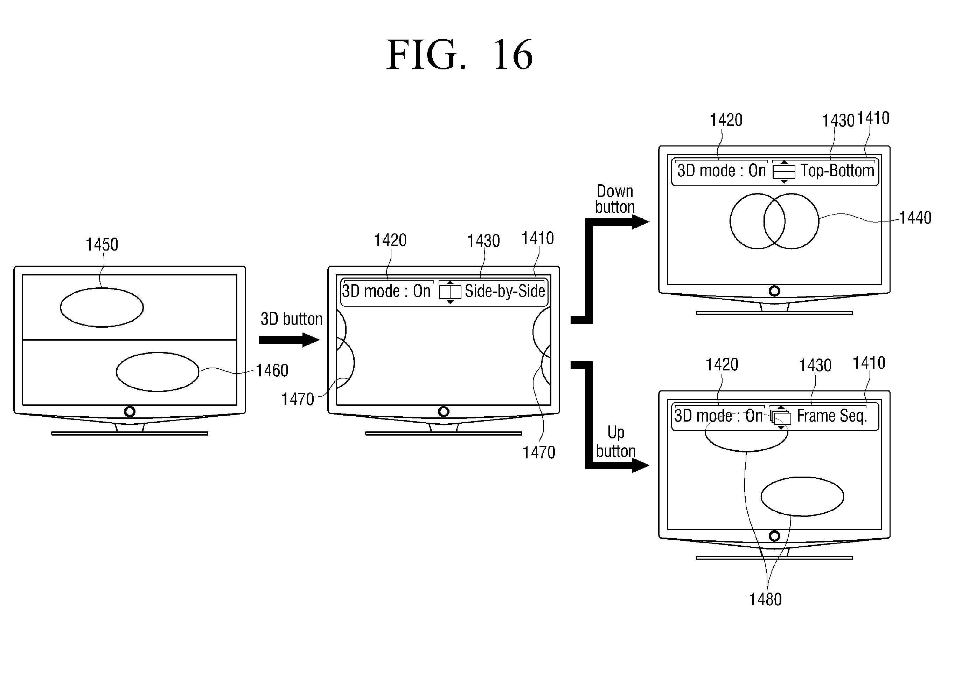

The process of changing a screen related to the format according to an exemplary embodiment will be explained in detail below, with reference to FIG. 16.

FIG. 16 is a view illustrating the process of changing a screen in relation to the format according to an exemplary embodiment.

First of all, regarding the screen illustrated on the left-most side of FIG. 16, if a 3D image is input to the TV 200 in the 3D OFF mode, the left-eye image and the right-eye image constructing the 3D image are directly displayed on the screen as they are, that is, the left-eye image and the right-eye image are displayed in the way the left-eye image and the right-eye image are generated. In other words, since the TV 200 is in the 3D OFF mode, the left-eye image and the right-eye image of the 3D image are space-divided and displayed accordingly.

According to an aspect of an exemplary embodiment, the 3D image is generated based on the top-bottom format, and accordingly, the left-eye image and the right-eye image are divided into the upper and lower sides which includes the left-eye image and the right-eye image 2D objects 1450, 1460, respectively.

Meanwhile, if a viewer input is made through the 3D button provided on the front panel of the TV 200 or the 3D button provided on the remote controller 290, regarding the screen illustrated in the middle of FIG. 16, the side-by-side format is applied to the 3D image. Also as explained above, along with the 3D image, the GUI 1410, including the information 1420 regarding the output status of the 3D image and the information 1430 regarding the format currently applied to the 3D image, is also displayed.

Herein, as a result of applying the side-by-side format to the incoming 3D image which is in top-bottom format, the object 1470 is displayed on both sides of the screen as illustrated in the middle of FIG. 16.

Meanwhile, the viewer may select a different format from the format currently applied to the 3D image, by using the up/down buttons provided on the front panel of the TV 200 or the up/down buttons provided on the remote controller 290.

Accordingly, if a viewer input is made through the down button, as illustrated in the screen at the top on the right-most side of FIG 16, the 3D image according to the side-by-side format is converted into the 3D image according to the top-bottom format, the 3D object 1440 is displayed in the center of the screen, and the GUI 1410, including the information 1420 about the output status of the 3D image and the information 1430 regarding the format currently applied to the 3D image, is also displayed on the screen.

Based on the information 1430 regarding the format currently applied to the 3D image, the viewer notes that the top-bottom format is currently applied to the 3D image.

Meanwhile, if a viewer input is made through the up button, as illustrated in the screen at the bottom on the right-most side of FIG. 16, the 3D image according to the side-by-side format is converted into the 3D image according to the frame sequential format, and the two objects 1480 included in the input image frame are displayed on the screen concurrently. Additionally, the GUI 1410, including the information 1420 regarding the output status of the 3D image and the information 1430 regarding the format currently applied to the 3D image, is displayed on the screen along with the 3D image.

Based on the information 1430 regarding the format currently applied to the 3D image, the viewer notes that the frame sequential format is currently applied to the 3D image.

As above, an exemplary embodiment was explained with reference to an example in which the 3D ON mode is changed to 3D OFF mode or vice versa in response to the pressing of the 3D button. However, it should be understood that the above example is only provided for convenience of explanation and other examples are equally applicable. By way of example, according to another exemplary embodiment, only the information regarding the current output status or current format may be displayed in response to a pressing of the 3D button, and changing of the 3D mode between ON and OFF may be performed in response to another pressing of the 3D button.

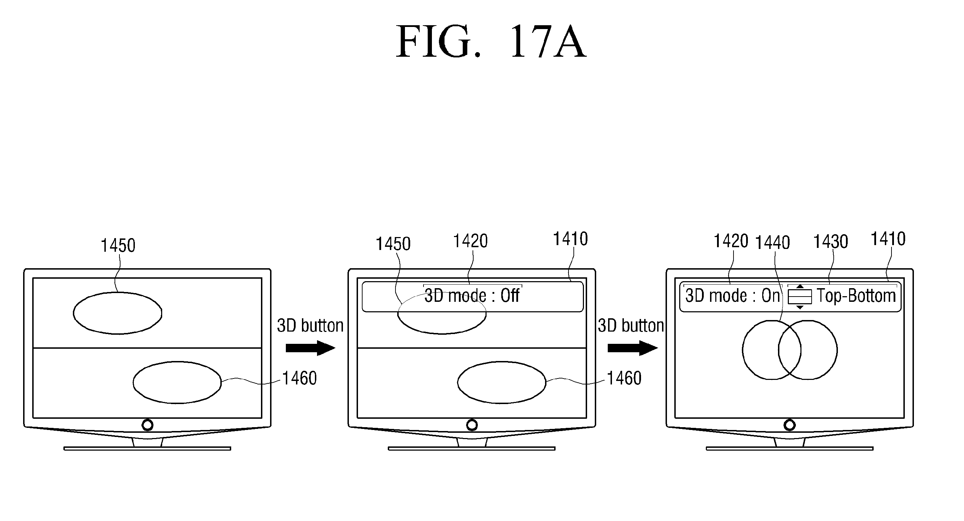

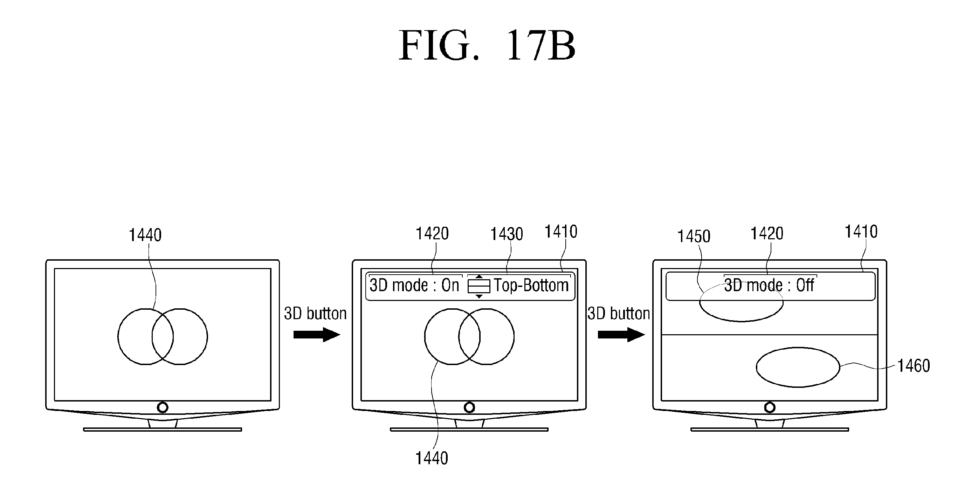

The above will be explained in greater detail below, with reference to FIGS. 17A and 17B.

FIGS. 17A and 17B are views illustrating the process of changing a screen according to another exemplary embodiment.

First, as illustrated in the screen on the left side of FIG. 17A, if a 3D image is input to the TV 200 in the 3D OFF mode, the left-eye image and the right-eye image of the 3D image are displayed as they are, i.e., the left-eye image and the right-eye image are displayed in a way the left-eye image and the right-eye image are generated. In other words, since the TV 200 is currently in the 3D OFF mode, the incoming 3D image is space-divided into the left-eye image and the right-eye image and displayed accordingly.

According to an aspect of an exemplary embodiment, since the 3D image is generated according to the top-bottom format, the left-eye image and the right-eye image are divided into upper and lower sides, and include the 2D objects 1450, 1460 respectively.

Meanwhile, if a viewer presses the 3D button provided on the front panel of the TV 200 or the 3D button provided on the remote controller 290, as illustrated in the screen in the middle of FIG. 17A, only the GUI 1410 indicating the current output status, is added to the screen, while the 3D mode or the format remains as is.

Accordingly, even when the viewer presses the 3D button, the left-eye image and the right-eye image still include the 2D objects 1450, 1460 respectively, and only the GUI 1410 is added.

Meanwhile, if the viewer presses the 3D button of the front panel of the TV 200 or the 3D button of the remote controller 290 once again, as illustrated in the screen on the right-side of FIG. 17A, the top-bottom format is applied to the incoming 3D image automatically or manually. Additionally, as explained above, the GUI 1410, including the information 1420 regarding the output status of the 3D image and the information 1430 regarding the format currently applied to the 3D image, is displayed on the screen along with the 3D image.

As a result, the viewer can check or select the output status with a simple instruction.

Referring to the screen as illustrated on the left side of FIG. 17B, if a 3D image is input to the TV 200 in the 3D ON mode, the 3D image including the left-eye image and the right-eye image is displayed on the screen according to the current output status and the format. According to an aspect of an exemplary embodiment, it is assumed that the 3D image is generated in accordance with the top-bottom format. Accordingly, the 3D object 1440 is generated and displayed, as the left-eye image on the upper side and the right-eye image on the lower side of one image frame are time-divided and alternately displayed on the screen.

Meanwhile, if a viewer presses the 3D button provided on the front panel of the TV 200 or the 3D button provided on the remote controller 290, as illustrated in the screen in the middle of FIG. 17B, only the GUI 1410 indicating the current output status, is added to the screen, while the 3D mode or the format remains as is.

Accordingly, even when the viewer presses the 3D button, the left-eye image and the right-eye image still include the 2D objects 1450, 1460 respectively, and only the GUI 1410 is added.

Meanwhile, if the viewer presses the 3D button of the front panel of the TV 200 or the 3D button of the remote controller 290 once again, as illustrated in the screen on the right-side of FIG. 17B, the display mode is changed to the 3D OFF mode, and the left-eye image and the right-eye image of the 3D image are displayed according to the format of the incoming 3D image. Since the 3D image is generated in the top-bottom format according to an aspect of an exemplary embodiment, the left-eye image and the right-eye image are divided into upper and lower sides, and include the 2D objects 1450, 1460, respectively.

Additionally, the GUI 1410, including the information 1420 regarding the output status of the 3D image, is displayed on the screen along with the 2D objects 1450, 1460.

As a result, the viewer can check or select the output status with a simple instruction.

### 7. Operation flow of changing output status and format with respect to 3D image

The flow of operations of changing the output status and the format with respect to the 3D image according to an exemplary embodiment will be explained in greater detail below, with reference to FIGS. 18 and 19.

FIG. 18 is a view illustrating a display method according to an exemplary embodiment.

Referring to FIG. 18, at S1810, if a 3D image is received, and at S1820-Y, if a 3D button input is made, at S1830, the TV 200 determines if there is format information related to the received 3D image.

At S1830-Y, if it is determined that there is the format information regarding the 3D image, at S1840, the TV 200 extracts the format information, processes the 3D image using a format based on the extracted format information, and displays the resultant image. At S1830-N, if it is determined that there is no format information regarding the 3D image, at S1850, the TV 200 processes the 3D image using one of the applicable formats and displays the resultant image.

Upon applying the format based on the format information at S1840, or applying a format on a random basis at S1850, at S1860, the TV 200 generates a GUI related to the applied format and adds the generated GUI to the screen. As explained above, the GUI may include information about the output status of the 3D image, information about a format currently applied to the 3D image, or the indicator.

At S1870, if a predetermined time elapses after adding the GUI, at S1880, the TV 200 removes the GUI and stands-by.

At S1890, if a viewer input is made through the up/down buttons, at S1895, the TV 200 processes the 3D image in accordance with the format in the direction which corresponds to the viewer input, generates the GUI regarding the applied format and adds the generated GUI to the screen.

Accordingly, the viewer can change the output status and the format with respect to the incoming 3D image more easily and conveniently.

FIG. 19 is a view illustrating a display method according to another exemplary embodiment.

Referring to FIG. 19, at S1910, if a 3D image is received, and at S1920-Y, if a 3D button input is made, at S1930, the TV 200 displays information regarding the current output status or the format on the screen.

At S1940-Y, if another 3D button input is made, at S1950, the TV 200 determines if there is format information related to the received 3D image.

At S1950-Y, if determining that there is the format information regarding the 3D image, at S1960, the TV 200 extracts the format information, processes the 3D image using a format based on the extracted format information, and displays the resultant 3D image. At S1950-N, if determining that there is no format information regarding the 3D image, at S1970, the TV 200 processes the 3D image using one of the applicable formats and displays the resultant image.

Upon applying the format based on the format information at S1960, or applying the random format at S1970, at S1980, the TV 200 generates a GUI related to the applied format and adds the generated GUI on the screen. As explained above, the generated GUI may include the information regarding the output status of the 3D image, the information regarding the format currently applied to the 3D image, or the indicator.

At S1990, if a predetermined time elapses after the GUI is added, at S1993, the TV 200 removes the GUI and stands by.

At S1996, in response to a viewer input made through the up/down buttons, the TV 200 processes the 3D image using the format corresponding to the direction of the viewer input and displays the resultant 3D image, and at S1999, generates a GUI related to the applied format and adds the generated GUI to the screen.

As a result, the viewer can change the output status and the format with respect to the 3D image more easily and conveniently.

### 8. Composing a 3D image screen

Composing a screen in response to a viewer's instruction to change the setting of the 3D image during the output of the 3D processed in the manner explained above according to an exemplary embodiment, will be explained in detail below, with reference to FIGS. 20A to 20D.

FIGS. 20A to 20D are views illustrating the screen compositions for changing the settings according to an exemplary embodiment.

As explained above, a 3D image is a result of time-dividing left-eye and right-eye images and alternately outputting the left-eye image and the right-eye image. Referring to FIGS. 20A to 20D, a 3D object 2010 is illustrated, in which a circular left-eye image and a circular right-eye image are overlapped with each other for the graphical representation of the 3D image.

FIG. 20A is a view illustrating a screen composition to change a setting regarding the 3D display mode according to an exemplary embodiment. As in the screen on the left-side of FIG. 20A, in response to a viewer's instruction to change the mode setting during the output of the 3D image on the screen, the screen on the right-top or the right-bottom side of FIG. 20A appears.

Herein, the term 'mode setting' refers to setting ON and OFF states of the 3D image mode.

Accordingly, in the ON state, the TV 200 analyzes the format of the incoming image, divides the 3D image into a left-eye image and a right-eye image based on the analyzed format, and time-divides and displays the left-eye image and the right-eye image.

By way of example, if the incoming 3D image is in the side-by-side format, in the ON state, the TV 200 extracts left-eye and right-eye images portions from one frame, scales up the extracted left-eye and right-eye image portions in a horizontal direction, and alternately displays the up-scaled left-eye and right-eye images.

Meanwhile, in the OFF state, the TV 200 displays the incoming image as is, that is, displays the incoming image in the format of the incoming image.

By way of example, if the incoming 3D image is in the side-by-side format, in the OFF state, the TV 200 displays the incoming 3D image in the side-by-side format, so that the left-eye image is displayed on the left side and the right-eye image is displayed on the right side.

Meanwhile, the screen on the right-top side of FIG. 20A includes '∟PLAY' icon 2020, which indicates that a display mode is instructed to be changed in a play mode in which the 3D image is currently played. On the other hands, the screen on the right-bottom side of FIG. 20A includes '∟PAUSE' icon 2050, which indicates that a display mode is instructed to be changed in a pause mode in which the play of the 3D image is currently temporarily stopped.

In other words, in response to a viewer's instruction to change the mode setting, the TV 200 displays a screen to change the mode setting either in the play mode or the pause mode, according to a predetermined manner.

Meanwhile, a GUI 2030 related to a change of the mode setting, and another GUI 2040 to change a play environment to a pause environment or a GUI 2060 to change a pause environment to a play environment, may also be displayed on a screen to change the mode setting. That is, in the play environment, the GUI 2030 related to the change of the mode setting may be displayed along with the GUI 2040 to change the play environment into the pause environment, while in the pause environment, the GUI 2030 related to the change of the mode setting may be displayed along with the GUI 2060 to change the pause environment into the play environment.

Accordingly, the viewer is able to change the mode setting from the 3D ON mode to the 3D OFF mode, or vice versa, by using the GUI 2030 related to the change of the mode setting, and change the environment to change the mode setting from the play environment to the pause environment or vice versa, by using the environment-related GUI 2040, 2060.

Depending on the type of the 3D image, it may be more convenient to change the mode setting in the play environment or the pause environment. Herein, since a GUI to change the environment of changing the mode setting is additionally provided in response to an input of a predetermined instruction to change the mode setting, the viewer can change the mode setting in a more convenient environment.

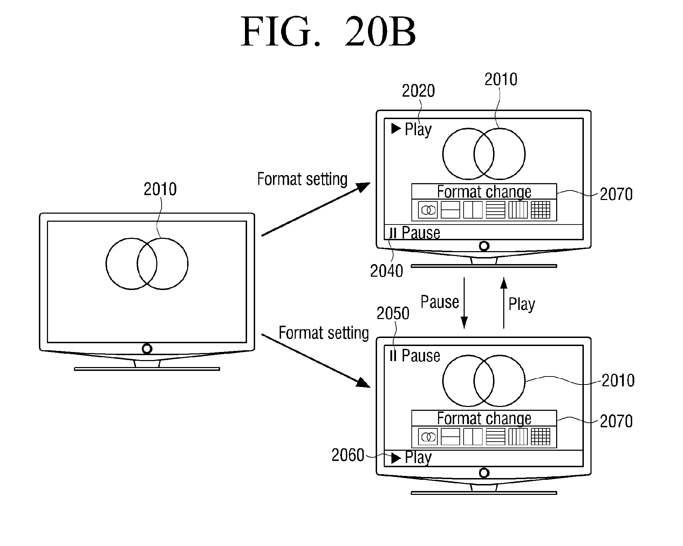

FIG. 20B illustrates a screen composition displayed when a setting for the 3D image format is changed according to an exemplary embodiment.

Referring to the screen on the left-side of FIG. 20B, in response to an input of a viewer's instruction to change a setting for the format during the display of the 3D image on the screen, the screen is changed to the composition to change the format setting as illustrated on the right-top or right-bottom side of FIG. 20B.

The term 'format setting' may refer to the setting of the above-mentioned frame sequential format, top-bottom format, side-by-side format, horizontal interleave format, vertical interleave format, or checkerboard format.

Accordingly, if the viewer selects one of the above-mentioned formats with respect to the 3D image, the user-set format is applied to the incoming image, irrespective of the actual format of the incoming image, so that the input image frame is split into the left-eye and right-eye images, the split left-eye and right-eye images are time-divided and alternately displayed according to the user-set format.

By way of an example, if the input 3D image is generated in the side-by-side format, but the user inputs an instruction to apply the top-bottom format, the TV 200 divides the image included in the one image frame into upper and lower images and up-scales the split images by 2x to output left-eye and right-eye images.

Accordingly, the left-eye image output onto the screen is made up of an upper left-eye image and an upper right-eye image, and the right-eye image output onto the screen is made up of a lower left-eye image and a lower right-eye image.

Accordingly, since the viewer is able to select the format, if a 3D image is output according to a less desirable format due to problems such as the system's malfunction, the viewer can select a more appropriate format and thus receive a more desirable display quality of the 3D image.

Meanwhile, the screen illustrated on the right-top side of FIG. 20B includes a '∟PLAY' icon 2020 appearing thereon, indicating that the format change is processed in an environment that the 3D image is currently played. However, the screen illustrated on the right-bottom side of FIG. 20B includes '∟PAUSE' icon 2050 appearing thereon, indicating that the format change is processed in an environment that the 3D image play is temporarily stopped at the moment.

That is, in response to the viewer's input of instruction to change the format, a screen appears to change the format in either the play environment or the pause environment.

Meanwhile, on the screen to change the format setting, a GUI 2070 related to the change of the format setting is presented, along with either a GUI 2040 to change the play environment to pause environment or a GUI 2060 to change the pause environment to the play environment. Accordingly, in the environment that the image is currently played, the GUI 2070 related to the change of the format setting is displayed together with the GUI 2040 to change the play environment to the pause environment, while in the environment that the image display is temporarily stopped, the GUI 2070 related to the change of the format setting is displayed together with the GUI 2060 to change the pause environment to the play environment.

Meanwhile, the GUI 2070 related to the format setting may include in a sequential order from the left side: the frame sequential format, the top-bottom format, the side-by-side format, the horizontal interleave format, the vertical interleave format, and the checkerboard format.

Accordingly, by manipulating the GUI 2070 related to the change of the format setting, the viewer can change the format, and by manipulating the GUI 2040, 2060 related to the environment, the viewer can change the environment from the play environment to the pause environment or vice versa.

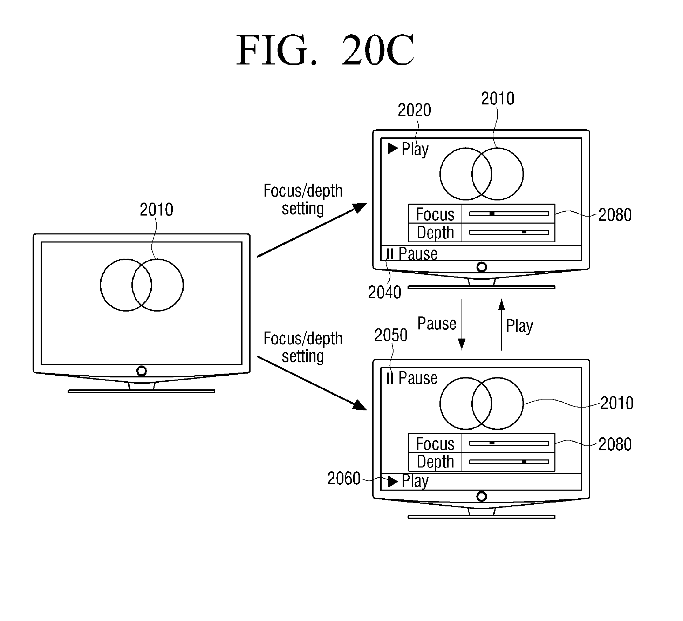

FIG. 20C is a view illustrating a screen appearing when a focus/depth of the 3D image is changed according to an exemplary embodiment.

If the viewer inputs an instruction to change a setting related to the focus/depth while the 3D image is displayed on the screen as illustrated on the left-side of FIG. 20C, the screen changes to the screen as illustrated on the right-top or right-bottom side of FIG. 20C to change the focus/depth setting.

The term 'focus setting' relates to a setting used to increase or decrease the sharpness of the 3D objects as displayed on the screen, and the term 'depth setting' relates to a setting used to increase or decrease the spatial depth of the 3D objects as displayed on the screen.

By enabling the viewer to change the focus/depth settings, the viewer can select a more appropriate focus/depth if he receives the 3D image which has an inappropriate display quality or even a display quality that is impossible to view due to an inappropriate focus/depth related to the problems such as a system's malfunction, and thus receives a more natural display quality of the 3D image.

Meanwhile, the screen on the right-top of FIG. 20C includes a '∟PLAY' icon 2020 appearing thereon, indicating that the focus/depth is changed in a play environment in which the 3D image is currently played. Meanwhile, the screen on the right-bottom of FIG. 20C includes '∟PAUSE' icon 2050 appearing thereon, indicating that the focus/depth is changed in a pause environment in which the play of 3D image is temporarily stopped.

That is, if the viewer inputs an instruction to change the focus/depth settings, a screen to change the focus/depth settings according to a predetermined manner appears either in the play environment or the pause environment.

Meanwhile, on the screen to change the focus/depth settings, a GUI 2080 related to the change of the focus/depth settings is presented, along with either a GUI 2040 to change the play environment to the pause environment or a GUI 2060 to change the pause environment to the play environment. Accordingly, in the environment that the image is currently played, the GUI 2080 related to the change of the focus/depth settings is displayed together with the GUI 2040 to change the play environment to the pause environment, while in the environment that the image display is temporarily stopped, the GUI 2080 related to the change of the focus/depth settings is displayed together with the GUI 2060 to change the pause environment to the play environment.

Accordingly, by manipulating the GUI 2080 related to the change of the focus/depth settings, the viewer can change the focus/depth, and by manipulating the GUI 2040, 2060 related to the environment, the viewer can change the environment from the play environment to the pause environment or vice versa.

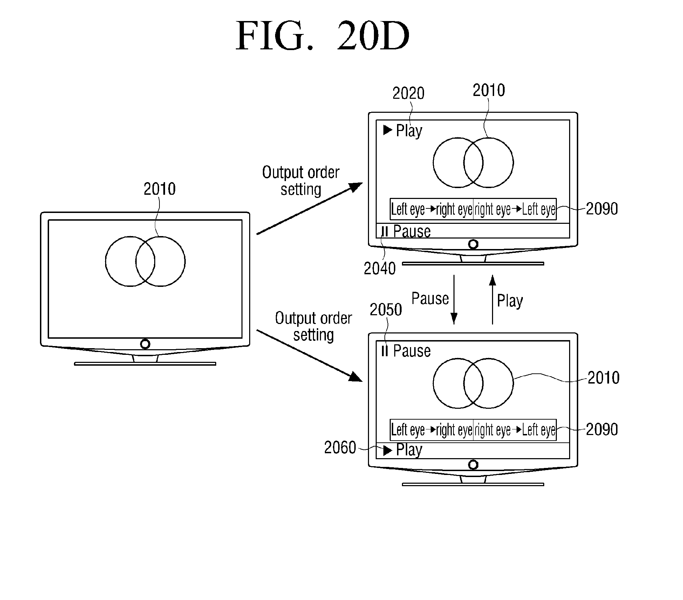

FIG. 20D is a view illustrating a screen composition appearing when the setting related to the order of the output of the 3D image is changed.

Accordingly, if the viewer inputs an instruction to change the setting related to the order of the output while the 3D image is currently displayed on the screen, as shown on the left side of FIG. 20D, the screen changes to a screen composition on the right-top or right-bottom side of FIG. 20D to change the setting related to the order of the output.

As explained above, the left-eye and right-eye image portions included in one frame are extracted and scaled up, time-divided and alternately output, and the term 'order of output' relates to whether the left-eye and right-eye images are time-divided and alternately output in the order of 'left-eye image -> right-eye image' or 'right-eye image -> left-eye image'.

By enabling the viewer to change the setting related to the order of the output, the viewer can select a more appropriate order of the output if he receives the 3D image which has an inappropriate display quality or even a display quality that is impossible to view due to an inappropriate order of the output related to the problems such as a system's malfunction, and thus receives a more natural display quality of the 3D image.

Meanwhile, the screen on the right-top of FIG. 20D includes a '∟PLAY' icon 2020 appearing thereon, indicating that the order of output is changed in a play environment in which the 3D image is currently played. Meanwhile, the screen on the right-bottom of FIG. 20D includes '∟PAUSE' icon 2050 appearing thereon, indicating that the order of output is changed in a pause environment in which the play of the 3D image is temporarily stopped.

That is, if the viewer inputs an instruction to change the order of output setting, a screen to change the order of output setting according to a predetermined manner appears either in the play environment or the pause environment.

Meanwhile, on the screen to change the order of the output setting, a GUI 2090 related to the change of the order of output setting is presented, along with either a GUI 2040 to change the play environment to pause environment or a GUI 2060 to change the pause environment to the play environment. Accordingly, in the environment that the image is currently played, the GUI 2090 related to the change of the order of output setting is displayed together with the GUI 2040 to change the play environment to the pause environment, while in the environment that the image display is temporarily stopped, the GUI 2090 related to the change of the order of output setting is displayed together with the GUI 2060 to change the pause environment to the play environment.

Accordingly, by manipulating the GUI 2090 related to the change of the order of the output setting, the viewer can change the order of the output, and by manipulating the GUI 2040, 2060 related to the environment, the viewer can change the environment from the play environment to the pause environment or vice versa.

Meanwhile, the GUIs explained above may be added to both the left-eye and right-eye images, providing the viewer with the GUI with depth. Alternatively, the GUIs may be added to one of the left-eye and right-eye images. The method of adding the GUIs to one of the left-eye and right-eye images according to the environment will be explained in detail below. The method of adding the GUIs to both the left-eye and right-eye images may be derived from the method of adding the GUIs to one of the left-eye and right-eye images which will be explained below.

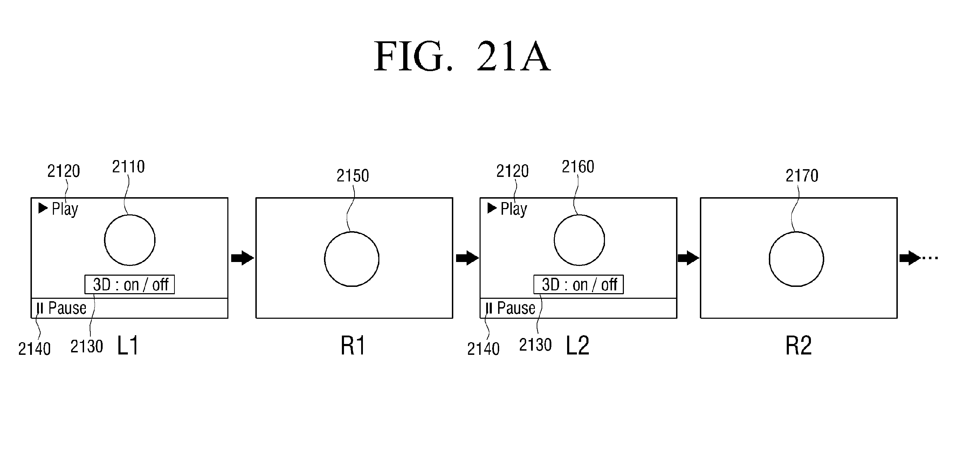

FIGS. 21A to 21C are views illustrating a method of adding a GUI according to an exemplary embodiment.

As explained above, a 3D image is made up of left-eye and right-eye images which are time-divided and alternately output.

FIGS. 21A to 21C illustrate circular objects 2110, 2160 included in the left-eye image and circular objects 2150, 2170 included in the right-eye image, for the graphical representation of the left-eye and right-eye images which construct a 3D image. Herein, different reference numerals are used to refer to each of the objects, considering the fact that the objects (not left-eye or right-eye image) are changeable. Accordingly, the left-eye image of the same frame is consistently referred to by the same reference numeral, while the left-eye images of different frames are referred to by different reference numerals. The same applies to the right-eye images.

FIG. 21A is a view illustrating a method of adding a GUI only to the left-eye image in the play environment according to an exemplary embodiment.

As shown in FIG. 21A, if an instruction to change the mode setting is input while an object 2110 is displayed on the first left-eye image (L1) in the play environment, a GUI ('∟PLAY') 2120 representing the current environment, another GUI ('3D : on/off) 2130 related to the change of the mode setting, and yet another GUI ('∟Pause') 2140 to change the current display environment, are added to the first left-eye image (L1).

After that, only the object 2150 is displayed on the first right-eye image (R1), and no separate GUI is added thereto.

Similarly, in an object 2160, the GUI ('∟PLAY') 2120 representing the current environment, the GUI ('3D : on/off) 2130 related to the change of the mode setting, and the GUI ('∟Pause') 2140 to change the current display environment, are displayed on the second left-eye image (L2), while only the object 2170 is displayed and no separate GUI is added to the second right-eye image (R2).

Accordingly, the GUI may be provided to the viewer in a plain manner by adding the GUI only to the left-eye images in the play environment. The same applies to where the GUI is added only to the right-eye images.

Alternatively, by partially changing the GUIs, for example, by changing the position of the GUIs and adding the GUIs both the left-eye and right-eye images, the GUIs may be provided to the viewer with depth.

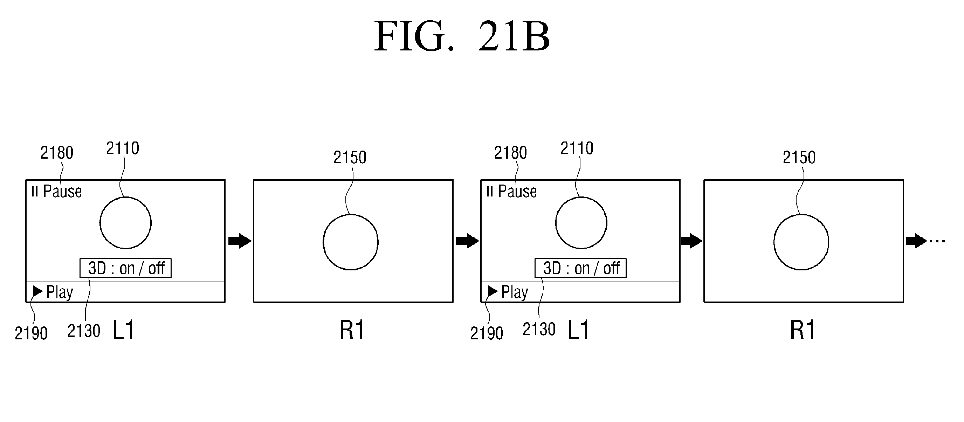

FIG. 21B is a view illustrating a method of adding a GUI only to the left-eye image in the pause environment according to an exemplary embodiment.

In the pause environment in which the display of the 3D image is temporarily stopped, the left-eye and right-eye images, which were displayed at the time of inputting a pause instruction, may be displayed repeatedly, or one of the left-eye and right-eye images, which were displayed at the time of inputting a pause instruction, may be displayed repeatedly. The former case is explained below with reference to FIG. 21B, and the later case may be inferred from the following explanation.

Referring to FIG. 21B, if an instruction to change the mode setting is input while an object 2110 is displayed on the first left-eye image (L1) in the pause environment, a GUI ('∟PAUSE') 2180 representing the current environment, another GUI ('3D : on/off) 2130 related to the change of the mode setting, and yet another GUI ('∟PLAY') 2190 to change the current display environment, are added to the first left-eye image (L1).

After that, only the object 2150 is displayed on the first right-eye image (R1), and no separate GUI is added thereto.

Accordingly, the pause screen is composed in a manner in which the first left-eye image (L1) and the first right-eye image (R1) are repeatedly, alternately displayed.

As explained above, the GUI may be provided to the viewer in a plain manner by adding the GUI only to the left-eye images even in the pause environment. The same applies to where the GUI is added only to the right-eye images.

Alternatively, by partially changing the GUIs, for example, by changing the position of the GUIs and adding the GUIs also to the right-eye images, the GUIs may be provided to the viewer with depth.

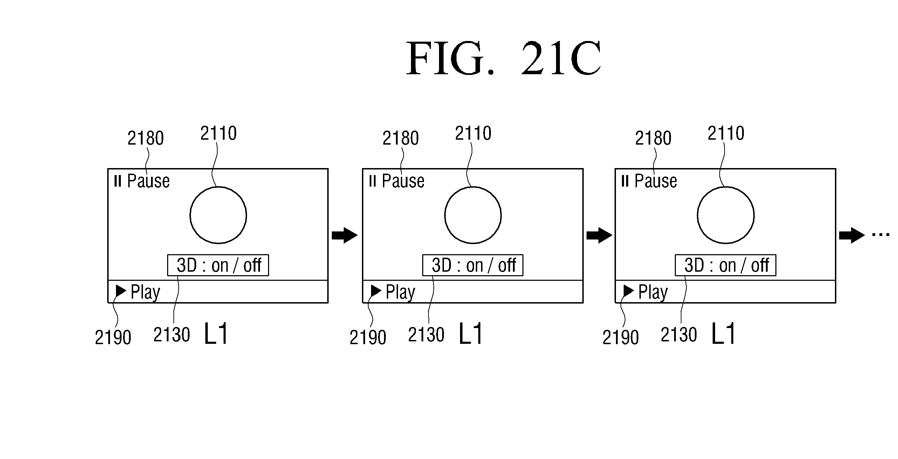

FIG. 21C is a view illustrating a method of adding a GUI only to the left-eye image in the pause environment according to an exemplary embodiment.

FIG. 21C specifically illustrates an example in which one of the left-eye and right-eye images, which were displayed at the time of inputting a pause instruction, is displayed repeatedly.

Referring to FIG. 21C, if an instruction to change the mode setting is input while an object 2110 is displayed on the first left-eye image (L1) in the pause environment, a GUI ('∟PAUSE') 2180 representing the current environment, another GUI ('3D : on/off) 2130 related to the change of the mode setting, and yet another GUI ('∟PLAY') 2190 to change the current display environment, are added to the first left-eye image (L1).

Accordingly, the pause screen is composed in a manner in which the same screen is repeatedly displayed.

Accordingly, the GUI may be provided to the viewer in a plain manner by adding the GUI only to the left-eye images even in the pause environment. The same applies to where the GUI is added only to the right-eye images.

Meanwhile, although exemplary embodiments explained above with reference to FIGS. 21A to 21C uses the screen composition for the mode setting as an example, it should be understood that other screen compositions can clearly be inferred from the explanation above.

### 9. Flow of operation for providing GUI

The exemplary operations of providing a GUI to change a 3D image setting will be explained below, with reference to FIG. 22.

FIG. 22 is a flowchart illustrating a method of providing a GUI to change a 3D image setting according to an exemplary embodiment.

At S2210-Y, if an instruction to set up a 3D image setting is input, at S2220, the TV 200 generates a first GUI related to the input instruction. At S2230, the TV 200 determines if there is a preset environment related to the input instruction. The operation at S2230 is carried out, considering that the viewer may have previously set a specific environment in relation to a specific setting instruction.

At S2230-Y, if a predetermined setting exists, and at S2240-Y, if the predetermined setting corresponds to the play environment, at S2260, the TV 200 generates a second GUI to change the display environment to a pause environment, and at S2270, either maintains the play environment or changes to the play environment, and adds the first and second GUIs.

At S2230-Y, if a predetermined setting exists, and at S2240-N, if the predetermined setting corresponds to the pause environment, at S2290, the TV 200 generates a second GUI to change the display environment to a play environment, and at S2293, either maintains the pause environment or changes to the pause environment, and adds the first and second GUIs.

At S2230-N, if no predetermined setting exists regarding the input instruction, at S2250-Y, the TV 200 determines the current environment and if the current environment is the play environment, moves onto the operation at S2260. At S2250-N, if the current environment corresponds to the pause environment, the TV 200 enters into the operation of generating a second GUI to switch to a play environment at S2290.

Meanwhile, at S2280, the TV 200 determines if a pause instruction is input in the play environment, and at S2280-Y, if determining that the pause instruction is input, the TV 200 enters into the operation of generating a second GUI to switch to a play environment at S2290. Additionally, at S2296, the TV 200 determines if a play instruction is input in the pause environment, and at S2296-Y, if determining that the play instruction is input, the TV 200 enters into the operation at S2260.

As a result, the viewer can change the settings related to the 3D image more easily and conveniently.

### 10. Processing of left-eye and right-eye images

FIG. 23 is a view illustrating an example in which the left-eye and right-eye images are time-divided and alternately output.

Throughout the exemplary explanation referring to FIG. 23, it is assumed that a side-by-side 3D image format is received; this assumption is for convenience of explanation and not by way of a limitation.

As explained above, the TV 200 processes the received 3D image according to the side-by-side format, generates left-eye and right-eye images, time-divides and alternately displays the generated left-eye and right-eye images.

Meanwhile, the 3D image may be output in an order of: left-eye image -> right-eye image, or right-eye image -> left-eye image. The order of output may be changed mainly due to problems in the provided 3D image, image processing applied to the 3D image, or viewer's setting.

Regardless of the problems mentioned above or other possible problems, the 3D image may be displayed in the order of left-eye image -> right-eye image, or right-eye image -> left-eye image, and according to an aspect of an exemplary embodiment, the viewer can view both the 3D images displayed in the order of left-eye image -> right-eye image, and in the order of right-eye image -> left-eye image concurrently and compare both orders.

That is, if the viewer inputs an instruction to change the order of outputting the 3D image, as illustrated in FIG. 23, the TV 200 divides the received 3D image into left-eye and right-eye images, scales up the divided left-eye and right-eye images, and compose one set including the left-eye image -> right-eye image in order, and the other set including the right-eye image -> the left-eye image in order.

After that, the TV 200 synchronizes the left-eye glass 350 with the right-eye glass 360 (FIG. 4), generates two sets of images, and outputs a half of each set concurrently on the screen. As a result, one screen may display the left-eye image -> right-eye image in order, and the other screen may display the right-eye image -> left-eye image in order.

### 11. Composing a screen

Hereinbelow, a method of additionally displaying a screen according to a changed order of image output will be explained in detail, with reference to FIGS. 24 to 26.

FIG. 24 is a view illustrating a screen composition according to an exemplary embodiment.

Referring to FIG. 24, the TV 200 includes one 3D image set to be output in the order of left-eye image -> right-eye image. Accordingly, the 3D image is displayed in the order of L1 -> R1 -> L2 -> R2 -> and so on. Additionally, the TV 200 includes the other 3D image set to be output in the order of right-eye image -> left-eye image. Accordingly, the 3D image is displayed in the order of: R1 -> L1 -> R2 -> L2 -> and so on.

If the 3D image including images in the order of: L1 → R1 → L2 → R2 → and so on is divided into a left-side image A and a right-side image B, the TV 200 extracts image A. Further, if the 3D image including images in the order of: R1 → L1 → R2 → L2 → and so on is divided into a left-side image C and a right-side image D, the TV 200 extracts image D.

The TV 200 integrates images A and D into one image, and concurrently outputs images A and D on the screen. To synchronize with the shutter glasses 300, the left-eye images of images A and D are output when the left eyeglass 350 opens, and right-eye images of images A and D are output when the right eyeglass 360 opens (FIG. 4). Accordingly, image A is output in the order of: L1 → R1 → L2 → and so on, while image D is output in the order of: L1 → R2 → L2 → and so on.

The viewer is able to find an image containing more proper order more easily and accurately, since both a 3D image generated in the order of: a left-eye image → a right-eye image and another 3D image generated in the order of: a right-eye image → a left-eye image are displayed on the same screen.

Meanwhile, the GUI may be added to each image to allow the viewer to compare the two 3D images on the screen and select the image with a more proper order (see e.g. FIG. 25).

FIG. 25 is a view illustrating a screen composition according to another exemplary embodiment.

As explained above, if image A generated in the order of: a left-eye image → a right-eye image, and image D generated in the order of: a right-eye image → a left-eye image are concurrently output on one screen, the GUI may be added to allow a viewer to select the image with a more proper order.

That is, a 'Select' GUI to select image A may be output concurrently within an area of image A on the screen, and a 'Select' GUI to select image D may be output concurrently within an area of image D on the screen.

The viewer may select one of the two 'Select' GUIs and view 3D image output on the area where the selected GUI is placed. That is, if the viewer selects image A, the TV 200 displays a complete 3D image by outputting image A on the left side and outputting image B on the right side of the screen, to thus provide the viewer with a 3D image having the output order of: a left-eye image → a right-eye image.

If the viewer selects image D, the TV 200 displays a complete 3D image by outputting image C on the left side of the screen and outputting image D on the right side of the screen, to thus provide the viewer with a 3D image having the output order of: a right-eye image → a left-eye image.

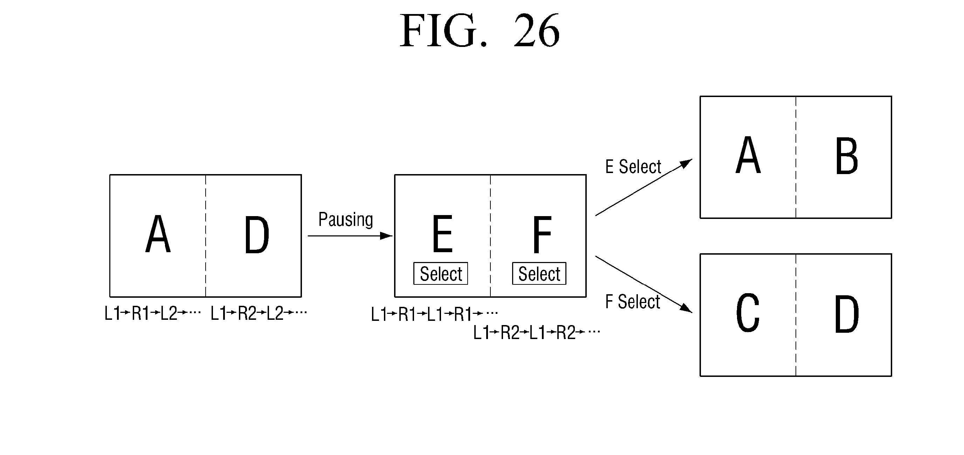

Meanwhile, if the viewer inputs an instruction to change the order of outputting the 3D image, the TV 200 may concurrently display both the image generated in the order of: L1 → R1 → L2 → and so on, and the image generated in the order of L1 → R2 → L2 → and so on. The TV 200 may display the image in pause state according to the setting by the viewer (FIG. 26).

FIG. 26 is a view illustrating a screen composition according to an exemplary embodiment. If the viewer inputs an instruction to change the order of outputting the 3D image, image A may be output on the left side, while image D may be output on the right side of the screen. Alternatively, in response to a viewer's instruction to pause the 3D image, the image may be output in a pause state on the left and right sides of the screen.

Specifically, the image displayed in a pause state on the left side of the screen corresponds to the image in which the left-eye image and the right-eye image were displayed in the order of: a left-eye image → a right-eye image at the time of inputting the instruction to pause. If the instruction to pause is input, the image is in a pause state, i.e., image E, is generated by repeating L1 and R1 in the order of L1 → R1 → L1 → R1 → and so on.

Additionally, an image in a pause state displayed on the right side of the screen corresponds to the image in which the left-eye image and the right-eye image were displayed in the order of a right-eye image → a left-eye image at the time of inputting the instruction to pause. If the instruction to pause is input, the image is in a pause state, i.e., image F, is output by repeating L1 and R2 in the order of L1 → R2 → L1 → R2 → and so on.

As explained above, the 'Select' GUIs may be added to image E and image F to allow the viewer to select an image. Accordingly, if the viewer selects image E, the TV 200 displays a complete 3D image in which image A is output on the left side of the screen and image B is output on the right side of the screen, to provide the viewer with a 3D image having the output order of: a left-eye image → a right-eye image.

If the viewer selects image F, the TV 200 may display a complete 3D image in which image C is output on the left side of the screen and image D is output on the right side of the screen, to provide the viewer with a 3D image having the output order of: a right-eye image → a left-eye image.

### 12. Operation flow of processing 3D image

FIG. 27 is a view illustrating a method of providing a 3D image according to an exemplary embodiment.

At S2710, the TV 200 alternately outputs a left-eye image and a right-eye image. At S2720-Y, if the viewer inputs an instruction to change an order of output, at S2730, the TV 200 generates a first screen having an unchanged order of the left-eye and right-eye images, and at S2740, generates a second screen having a changed order of the left-eye and right-eye images.

At S2750, the TV 200 displays a left-half portion of the first screen and a right-half portion of the second screen, and at S2760, the TV 200 generates a first GUI to select the first screen and a second GUI to select the second screen, and adds the first and second GUIs to the first screen and second screen respectively so that the first and second GUIs are displayed along with the first and second screens.

At S2770-Y, if the first GUI is selected, at S2790, the TV 200 displays the first screen full size (that is, the screen is not in halves). At S2780-Y, if the second GUI is selected, at S2785, the TV 200 displays the second screen in full size (the screen is not in halves).

Accordingly, the viewer can compare unsynchronized images with a synchronized image on one screen, check the synchronization more conveniently, and find and select the synchronized image.

Although an example in which the side-by-side image format is received is explained above, it should be understood that the above example is only for the illustrative purpose, and accordingly, the technical concept of the present inventive concept is equally applicable to the examples in which the image is received in formats other than the side-by-side format. By way of example, if a top-bottom image format is received, the TV 200 may divide the image into the upper image and the lower image, scale up the divided images in a vertical direction, and extract a left-eye image and a right-eye image from the enlarged images.

Furthermore, although the example explained above presumes that the first screen displays a 3D image in the order of: a left-eye image → a right-eye image, and the second screen displays a 3D image in the order of: a right-eye image → a left-eye image, the present teaching can be equally applied to an inverse order. Furthermore, the first and second screens may be divided into upper and lower halves, instead of left and right halves and so on.

### 13. Selecting 3D image format by utilizing 3D image preview

FIG. 28 is a block diagram of the 3D TV 2800 according to an exemplary embodiment.

Referring to FIG. 28, the 3D TV 2800 may include a broadcast receiving unit 2810, an image input unit 2820, an A/V processor 2830, an audio output unit 2840, a display unit 2850, a control unit 2860, a storage unit 2870, a manipulation unit 2880, and an eyeglass signal transmitting and receiving unit 2895.

The broadcast receiving unit 2810 may receive a broadcast in a wired or wireless manner from a station or a satellite and demodulates the received broadcast. Additionally, the broadcast receiving unit 2810 may receive a 3D image signal including 3D image data.

The image input unit 2820 may be connected to an external apparatus and receive an image therefrom. Specifically, the image input unit 2820 may receive 3D image data from the external apparatus. The image input unit 2820 may interface with a S-Video, a component, a composite, a D-Sub, a DVI, or a HDMI.

The term '3D image data' refers to data that carries 3D image information. Specifically, the 3D image data carries left-eye image data and right-eye image data in one data frame. The types of the 3D image data may be classified according to a pattern of carrying the left-eye image data and right-eye image data.

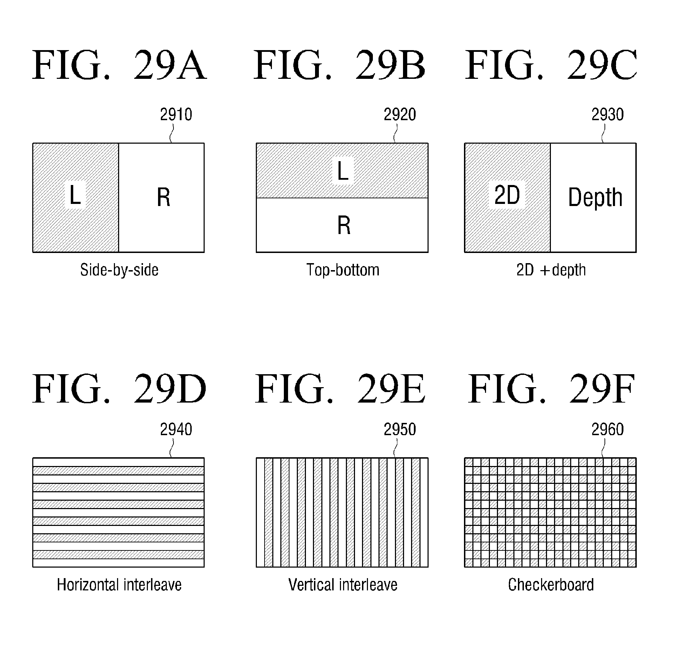

Referring to FIG. 29, the formats of 3D image data according to an exemplary embodiment will be described below.

FIGS. 29A-F illustrate the 3D image data types according to an exemplary embodiment.

The side-by-side format 2910 depicted in FIG. 29A, the top-bottom format 2920 depicted in FIG. 29B, and the 2D-plus-depth format 2930 depicted in FIG. 29C, are the formats that include left-eye image data and right-eye image data based on splitting.

According to the side-by-side format 2910, the left-eye image data and right-eye image data are respectively included in a left-data area and a right-data area of the horizontally-split frame data. As illustrated in FIG. 3, the side-by-side format 2910 divides one frame data area into left and right areas, and carries the left-eye image data in the left-data area, and right-eye image data in the right-data area.

According to the top-bottom format 2920, left-eye image data and right-eye image data are respectively included in an upper-data area and a lower-data area of the vertically-split frame data. As illustrated in FIG. 3, the top-bottom format 2920 divides one frame data area into an upper area and a lower area, and carries the left-eye image data in the upper-data area and carries the right-eye image data in the lower-data area.

The 2D-plus-depth format 2930 includes 2D image data to be displayed on a screen, and depth data regarding a depth in each portion of the 2D image data. As illustrated in FIG. 29C, the 2D-plus-depth format 2930 may divide one frame data area of 3D image data horizontally, and carry the 2D image data in the left-data area, and carry the depth data in the right-data area. However, according to the 2D-plus-depth format 2930, one frame data area of the 3D image data may be divided vertically, and carry the 2D image data and the depth.

The horizontal interleave format 2940 depicted in FIG. 29D, the vertical interleave format 2950 depicted in FIG. 29E and the checkerboard format 2960 depicted in FIG. 29E, are the 3D image data which include left-eye image data and right-eye image data based on interleaving.

The horizontal interleave format 2940 has the alternating pixel rows of left-eye image data and right-eye image data. The vertical interleave format 2950 has the alternating pixel columns of left-eye image data and right-eye image data. The checkerboard format 2960 has the alternating square blocks of left-eye image data and right-eye image data, in which the square block may be based on a unit of a pixel, or a plurality of pixels.

As explained above, the 3D image data includes left-eye image data and right-eye image data, or includes the 2D image data and the depth data, in one frame data area. Accordingly, it is possible to transmit a 3D image using a data format to transmit a 2D image.

Referring back to FIG. 28, the A/V processor 2830 implements signal processing such as video-decoding, video-scaling, or audio-decoding, and generates a GUI, with respect to an image signal and an audio signal input through the broadcast receiving unit 2810 and the image input unit 2820.

Meanwhile, to store the input image and sound signals in the storage unit 2870, the A/V processor 2830 may compress the input signals so that the signals are stored in the compressed form.

As illustrated in FIG. 28, the A/V processor 2830 may include an audio processor 2832, a video processor 2834, and a 3D image forming unit 2836.

The audio processor 2832 carries out processing such as audio-decoding for the input audio signal. The audio processor 2832 then outputs the resultant audio signal to the audio output unit 2840.

The video processor 2834 carries out processing such as video-decoding or video-scaling with respect to the input video signal. If the 3D image data is input, the video processor 2834 outputs the input 3D image data to the 3D image forming unit 2836.

The 3D image forming unit 2836 generates a left-eye image and a right-eye image which is interpolated to a full screen size by utilizing the input 3D image data. Accordingly, the 3D image forming unit 2836 generates a left-eye image and a right-eye image to be displayed on a screen to implement the 3D image.

Specifically, the 3D image forming unit 2836 divides left-eye image data and right-eye image data from the input 3D image data. Since one frame data includes both the left-eye image data and right-eye image data, the divided left-eye image data and right-eye image data each carries the image data corresponding to a half size of the screen. Accordingly, the 3D image forming unit 2836 enlarges or interpolates the separate left-eye and right-eye image data to be twice as large as the original data, and generates a left-eye image and a right-eye image to be displayed in a size corresponding to the full size of a screen. The 3D image forming unit 2836 also outputs the generated left-eye image and right-eye image to the display unit 2850, so that the images can alternately be displayed.

Meanwhile, to generate a preview screen including therein a plurality of formats for the 3D images, the 3D image forming unit 2836 generates a plurality of formats of left-eye images and right-eye images with respect to the input 3D image data. The plurality of formats of the left-eye image and the right-eye image of the 3D image are output to the display unit 2850, so that the left-eye image and the right-eye image are alternately displayed, each in size corresponding to the full size of the screen.

If the viewer selects one format from the plurality of formats of the 3D image, the 3D implementing unit 2836 alternately outputs the left-eye image and the right-eye image according to the selected format to the display unit 2850.

The audio output unit 2840 outputs the audio signal transmitted from the A/V processor 2830 to a speaker, or the like.

The display 2850 outputs the image transmitted from the A/V processor 2830 to be displayed on a screen. Specifically, regarding the 3D image, the display 2850 alternately outputs the left-eye image and the right-eye image to the screen.

The display 2850 also outputs the 3D image, to which a format analyzed at the control unit 2860 is applied, in a distinctive manner from the other 3D images to which other formats are applied.

The display 2850 may also output corresponding names or information about the plurality of 3D image formats.

Additionally, the display 2850 may alternately output the left-eye image and the right-eye image according to the selected 3D image format in a full screen size, upon receiving a viewer's input selection through the manipulation unit 2880.

The storage unit 2870 stores an image received from the broadcast receiving unit 2810 or the image input unit 2820. The storage unit 2870 may be implemented as a hard disk drive, or a non-volatile memory.

The manipulation unit 2880 may receive a viewer's instruction and transmit the received instruction to the control unit 2860. The manipulation unit 2880 may be a remote controller, a pointing device, a touch pad, or a touch screen.

The eyeglass signal transmitting and receiving unit 2895 transmits a clock signal to alternately open a left eyeglass and a right eyeglass of the 3D eyeglasses 2890. The 3D eyeglasses 2890 alternately open the left eyeglass and the right eyeglass according to the received clock signal. Additionally, the eyeglass signal transmitting and receiving unit 2895 receives information such as the current status from the 3D eyeglasses 2890.

The control unit 2860 analyzes the viewer's instruction based on the instruction received from the manipulation unit 2880, and controls the overall operation of the 3D TV 2800 according to the analyzed instruction.

The control unit 2860 also analyzes a format of the input 3D image data. Specifically, the control unit 2860 may analyze the format of the incoming 3D image by referring to the tag information included in the input 3D image data, or comparing the left-eye image or right-eye image of the input 3D image.

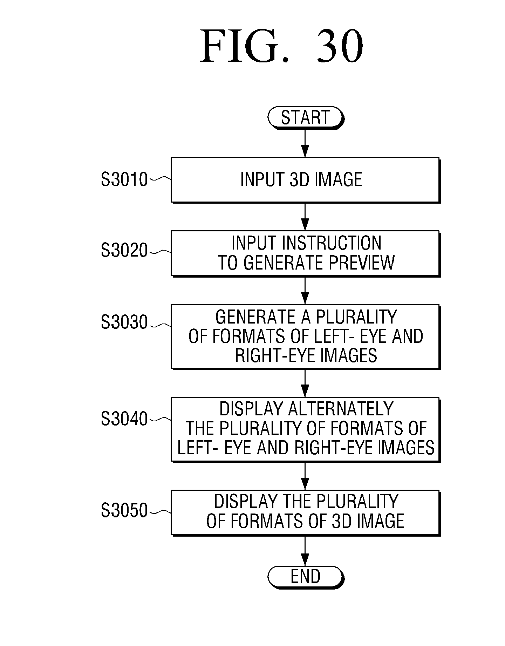

A method of providing a 3D image preview at the 3D TV 2800 according to an exemplary embodiment will be described in greater detail below, with reference to FIGS. 30 to 32.

FIG. 30 is a flowchart illustrating a method of providing a preview which includes a plurality of formats of an input 3D image according to an exemplary embodiment.

At S3010, the 3D TV 2800 receives a 3D image from the broadcast receiving unit 2810 or the image input unit 2820. At S3020, while the 3D image is output, the 3D TV 2800 receives through the manipulation unit 2880, an instruction to generate a preview. At S3030, if the 3D TV 2800 receives the instruction to generate a preview, the 3D image forming unit 2836 generates a plurality of formats of a left-eye image and a right-eye image from the input 3D image. Herein, the 3D image forming unit 2836 alternately outputs a plurality of left-eye images and a plurality of right-eye images to the display 2850.

At S3040, the display 2850 alternately displays the plurality of output left-eye images and the plurality of right-eye images. At S3050, since the 3D TV 2800 alternately displays the plurality of left-eye images and the plurality of right-eye images on the screen, a preview of the plurality of 3D image formats may be displayed on the screen.

Herein, the image corresponding to the input 3D image format is displayed distinctively from the images corresponding to the other 3D image formats which are different from the input 3D image format. Since the 3D TV 2800 displays the image corresponding to the input 3D image format distinctively from the others with different 3D image formats, the viewer can select a 3D format more easily and conveniently.

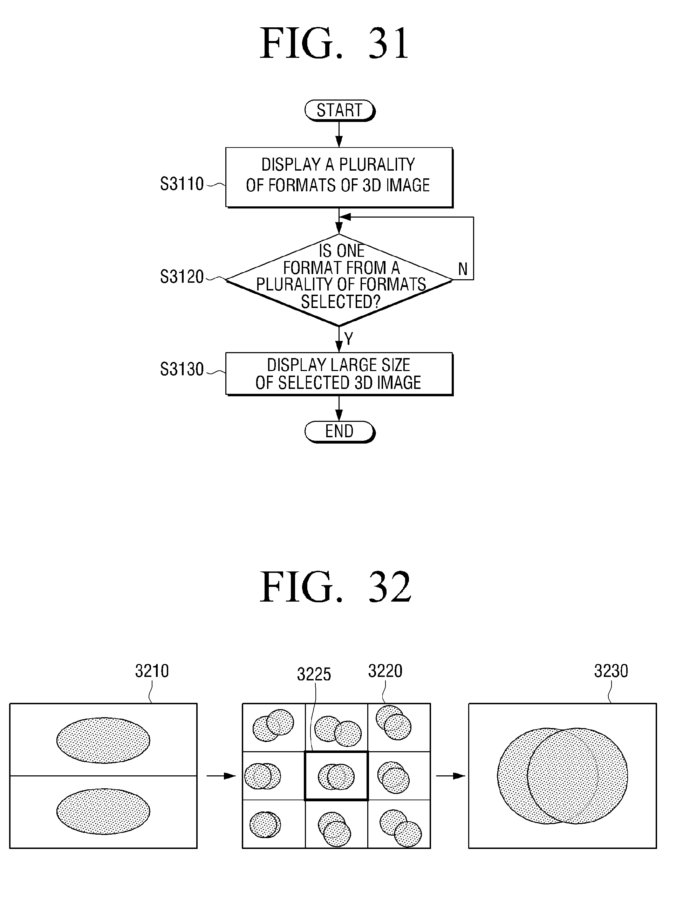

FIG. 31 is a flowchart illustrating a method of selecting a 3D image format based on a 3D preview according to an exemplary embodiment.

At S3110, the 3D TV 2800 displays a plurality of 3D image formats. At S3120, the 3D TV 2800 determines if a format is selected from a plurality of the 3D image formats based on whether or not a viewer selection is input through the manipulation unit 2880. At S3120-Y, if the 3D TV 2800 determines that the viewer selection is input, one format is selected from the plurality of formats according to the viewer selection.

At S3130, if one format is selected according to viewer selection, a 3D image of the selected format is enlarged to cover the full screen, while the other 3D images disappear.

Specifically, if the viewer selects one format from the plurality of formats, the 3D image forming unit 2838 generates only the left-eye and right-eye images of the selected format. The 3D image forming unit 2838 alternately outputs the generated left-eye and right-eye images to the display 2850. The display 2850 alternately displays the left-eye and right-eye images generated from the 3D image forming unit 2838. As a result, the display 2850 displays the 3D image of the selected format on the full screen of the display unit 2850.

FIG. 32 is a view illustrating a process of providing a preview of 3D image and selecting an image from the previewed images at the 3D TV 2800 according to an exemplary embodiment.

At 3210, the 3D image is input into the 3D TV 2800. By way of example, as illustrated in FIG. 32, the top-down 3D image format may be input into the 3D TV 2800.

At 3220, if the 3D image is input into the 3D TV 2800, the 3D TV 2800 generates and displays a plurality of 3D image formats as illustrated in FIG. 32. By way of example, if the top-bottom format is input, the 3D TV 2800 may still generate and display a plurality of 3D image formats such as the side-by-side format, the checkerboard format, the vertical interleave format, or the horizontal interleave format. At 3225, the 3D TV 2800 may analyze the format of the input 3D image, and display the 3D image of the analyzed format distinctively from the other images. By way of example, if the top-bottom format is input, the 3D TV 2800 analyzes that the 3D image format is top-bottom, and displays the top-bottom 3D image distinctively from the other 3D image formats. Since the right 3D image format is distinctively displayed, the viewer can select a format of the input 3D image more easily and conveniently.

At 3230, if the viewer selects 3D image corresponding to one format, the 3D TV 2800 may enlarge the image of the selected format. By way of example, if the viewer selects through the manipulation unit 2880, a 3D image generated and displayed according to the top-bottom format, the 3D TV 2800 enlarges the 3D image generated and displayed according to the top-bottom format the 3D image in a size that covers the full screen.

As explained above, the 3D TV may provide a preview including a plurality of formats of the input 3D image. Accordingly, the viewer can check and find a format of the input 3D image more easily and conveniently.

### 14. Providing 3D GUI

Referring to FIGS. 28 and 33 to 35, an exemplary process of providing a 3D GUI will be described below.

The operation of the 3D TV 2800 according to an exemplary embodiment will be explained below.

The 3D image forming unit 2836 generates a left-eye image and a right-eye image interpolated to a full-screen size, by utilizing the input 3D image data. In other word, the 3D image forming unit 2836 generates a left-eye image and a right-eye image to be displayed on a screen.

More specifically, the 3D image forming unit 2836 may divide left-eye image data and right-eye image data from the 3D image data. Since one frame data includes both the left-eye image data and the right-eye image data, the divided left-eye image data and right-eye image data may each include the data size corresponding to a half of the screen. Accordingly, the 3D image forming unit 2836 enlarges or interpolates the left-eye image data and the right-eye image data to be twice as large as the original image data, and generates a left-eye image and a right-eye image to be displayed in a size corresponding to the full size of the screen. Accordingly, the 3D image forming unit 2836 then outputs the left-eye image and the right-eye image to the image display unit 2850, so that the left-eye and right-eye images are alternately displayed.

If the viewer inputs an instruction to generate a GUI, the 3D image forming unit 2836 may generate one of the left-eye image and the right-eye image of the input 3D image, and output the resultant image to the image display unit 2850. If the GUI is closed according to the viewer's instruction, or after a predetermined time of not using the GUI, the 3D image forming unit 2836 may again generate a left-eye image and a right-eye image of the input 3D image.

The GUI generating unit 2838 generates a GUI to set up a 3D image display. The generated GUI may be a 3D type GUI. There may be two 3D GUI types of the GUI. The first type is a 2D GUI appearing as a 3D image. The second type is a 3D GUI created in the same manner of creating a 3D image, i.e., created by generating a left-eye 3D GUI and a right-eye 3D GUI.

To further explain the first type 3D GUI, the GUI generating unit 2838 first generates a 2D GUI. The generated 2D GUI appears as a 3D GUI which has a depth. Accordingly, the viewer may notice a 3D type of GUI without wearing the 3D eyeglasses 2890.

To further explain the second exemplary case, the GUI generating unit 2838 generates a GUI including, like a 3D image, a left-eye 3D GUI and a right-eye 3D GUI. Accordingly, the 3D GUI data including the left-eye 3D GUI data and the right-eye 3D GUI data are input into the 3D image forming unit 2836 and the 3D image forming unit 2836 generates a left-eye 3D GUI and a right-eye 3D GUI. The 3D image forming unit 2836 then alternately outputs the generated left-eye 3D GUI and right-eye 3D GUI to the image display unit 2850.

The display unit 2850 may output a video transmitted from the A/V processor 2830 so that the received video is displayed on a screen. Specifically, in the case of outputting a 3D image, the display unit 2850 may alternately output a left-eye image and a right-eye image.

The control unit 2860 analyzes the viewer's instruction based on the instruction received from the manipulation unit 2880, and controls the overall operation of the 3D TV 2800 according to the analyzed instruction.

If an instruction to generate the GUI to be displayed on the 3D image is input through the manipulation unit 2880, the control unit 2860 may control so that one of the left-eye image and the right-eye image is output, along with the GUI generated from the GUI generating unit 2838. In this situation, if the 3D image forming unit 2836 generates a left-eye 3D GUI and a right-eye 3D GUI of the 3D GUI generated from the GUI generating unit 2838, the control unit 2860 may control the TV 2800 so that the left-eye GUI and the right-eye GUI are alternately output, along with the one of the left-eye image and the right-eye image.

Additionally, if the viewer inputs an instruction to generate a 3D GUI to be displayed on the 3D image, so that the 3D image forming unit 2836 generates only one of the left-eye image and the right-eye image regarding 3D image, the control unit 2860 controls the TV 2800 so that the generated one of the left-eye image and the right-eye image is output. If the viewer inputs an instruction to close the 3D GUI, the control unit 2860 controls the TV 2800 so that the left-eye image and the right-eye image of the input 3D image are alternately output again.

After a predetermined time of not using the 3D GUI, the control unit 2860 may automatically close the GUI, and control the TV 2800 so that the left-eye image and the right-eye image of the 3D image are alternately output.

Referring to FIGS. 33 to 35, a method of providing a GUI on a display apparatus according to an exemplary embodiment will be described below.

FIG. 33 is a flowchart illustrating a method of providing a GUI, upon receiving a viewer instruction to generate a 3D GUI according to an exemplary embodiment.

At S3310-Y, if the viewer inputs an instruction to generate a 3D GUI to the 3D TV 2800 while a 3D image is output, at S3320, the 3D TV 2800 converts the output 3D image into the 2D image.

More specifically, if an instruction to generate a 3D GUI is input into the 3D TV 2800 based on the instruction by the viewer, the 3D image forming unit 2836 generates only one of the left-eye image and the right-eye image from the input 3D images. The 3D image forming unit 2836 then outputs the generated image to the display unit 2850. Accordingly, the 3D image is converted into 2D image.

According to another method of converting a 3D image into a 2D image, the 3D image forming unit 2836 may generate a left-eye image and a right-eye image of the 3D image, and output only one of the left-eye image and the right-eye image to the image display unit 2850.

At S3330, the GUI generating unit 2838 generates 3D GUI data, and the 3D image forming unit 2836 generates a left-eye 3D GUI and a right-eye 3D GUI from the 3D GUI data. At S3340, the 3D TV 2800 alternately outputs the left-eye 3D GUI and the right-eye 3D GUI to generate a 3D GUI to be displayed along with the one of the above-mentioned 3D images.

As explained above, since the 3D image is converted into the 2D image in accordance with an instruction to generate a 3D GUI, the user inconveniences of having to endure the overlapping image of the 3D GUI and the 3D image is reduced.

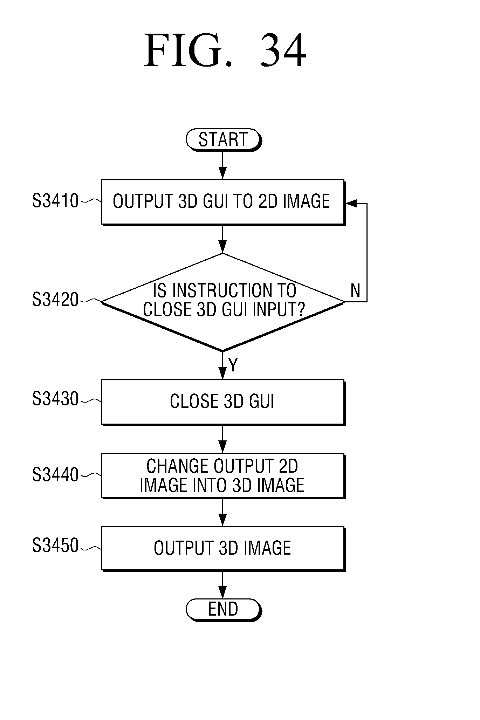

FIG. 34 is a flowchart illustrating a method of closing the 3D GUI, upon receiving a viewer instruction to close the GUI, according to an exemplary embodiment.

As illustrated in FIG. 33, if the 3D GUI is generated, the 3D image may be converted into the 2D image. Accordingly, at S3410, the 3D TV 2800 outputs the 3D GUI into the 2D image. At S3420, the 3D TV 2800 determines if the viewer inputs a close instruction. At S3420-Y, if the close instruction is input, at S3430, the 3D GUI is closed. In this situation, the display unit 2850 stops outputting a 3D image.

At S3440, the 3D TV 2800 re-converts the 2D image into the 3D image. More specifically, the 3D image forming unit 2836 generates a left-eye image and a right-eye image of the 3D image, and alternately outputs the left-eye image and the right-eye image of the 3D image to the display unit 2850. Accordingly, at S3450, the 3D TV 2800 outputs the 3D image again.

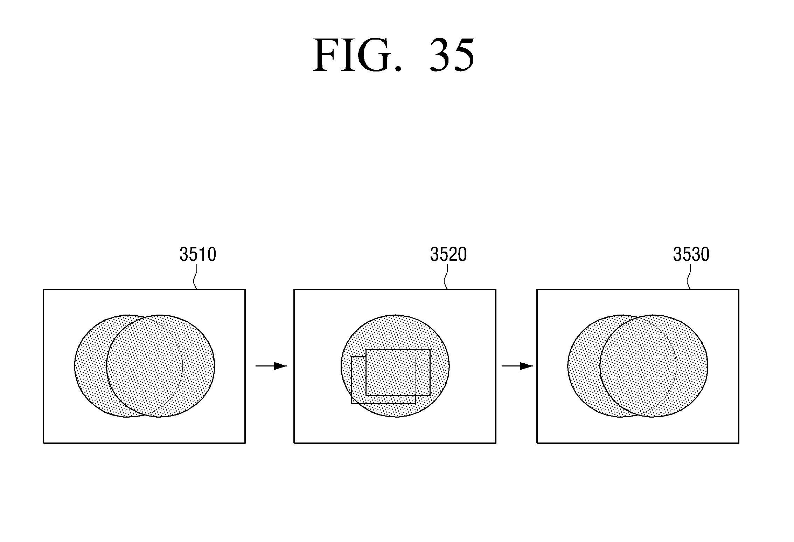

FIG. 35 is a flowchart illustrating a process of providing a 3D GUI according to an exemplary embodiment.

At 3510, the 3D TV 2800 receives 3D image data. The 3D GUI is generated in the manner explained above, if the viewer inputs an instruction to generate the 3D GUI. Additionally, as illustrated at 3520 of FIG. 35, the 3D image is converted into the 2D image. The ways to convert the 3D image into the 2D image is also explained above. If the viewer inputs an instruction to close the 3D GUI, the image display unit 2850 stops outputting the 3D GUI. At 3530, the 2D image is converted back into the 3D image in the manner explained above.

If the viewer inputs an instruction to generate the GUI while watching the 3D image, the currently-displayed 3D image is converted into the 2D image, and accordingly, the viewer does not experience the inconvenience of having to endure the overlapped images.

## Claims

1. A display apparatus (2800) comprising:
an image input unit (2820) which receives a three-dimensional (3D) image;
a 3D image forming unit (2836) which generates left-eye images and right-eye images by applying a plurality of formats to the received 3D image, if a predetermined instruction to generate a preview is input;
a display unit (2850) which alternately displays the left-eye images concurrently arranged on one screen according to the plurality of formats and the right-eye images concurrently arranged on said one screen according to the plurality of formats thereby to display a three-dimensional image preview of the received three-dimensional image for each of the plurality of formats, said 3D image previews beeing concurrently arranged on said one screen, and
a control unit (2860) which analyzes the format of the received 3D image,
wherein the display unit displays the 3D image preview in the format analyzed by the preview control unit, in a manner that distinguishes the 3D image preview in the analyzed format from 3D image previews in the plurality of other formats.

2. The display apparatus of claim 1, wherein the display unit (2850) indicates names and information about 3D image formats which correspond to the 3D image previews displayed in the plurality of formats.

3. The display apparatus of any one of claims 1 to 2, further comprising:
a manipulation unit (2880) which receives a selection regarding the 3D image previews according to the plurality of formats,
wherein the display unit (2850) displays the selected 3D image preview enlarged to cover the full screen.

4. The display apparatus of claim 3, wherein the manipulation unit (2880) comprises one of a remote controller, a pointing device, a touch pad, and a touch screen.

5. The display apparatus of any one of claims 1 to 4, wherein the plurality of formats comprises at least one of: a side-by-side format, a top-bottom format, a 2D plus depth format, a horizontal interleave format, a vertical interleave format, and a checkerboard format.

6. A method of providing a three-dimensional (3D) preview, the method comprising:
receiving a 3D image;
generating left-eye images and right-eye images by applying a plurality of formats to the received 3D image, if a predetermined instruction to generate a preview is input; and
alternately displaying the left-eye images concurrently arranged on one screen according to the plurality of formats and the generated right-eye images concurrently arranged on said one screen according to the plurality of formats thereby to display a three-dimensional image preview of the received three-dimensional image for each of the plurality of formats , said 3D image previews beeing concurrently arranged on said one screen, and
analyzing the format of the received 3D image, the
wherein the displaying comprises displaying the 3D image preview in the analyzed format in a manner that distinguishes the 3D image preview in the analyzed format from 3D image previews displayed in the plurality of other formats.

7. The method of claim 6, wherein the displaying comprises indicating names and information about 3D image formats which correspond to the 3D image previews displayed in the plurality of formats.

8. The method of any one of claims 6 to 7, further comprising:
receiving a selection regarding the 3D image previews according to the plurality of formats,
wherein the displaying comprises displaying the selected 3D image preview enlarged to cover the full screen.

9. The method of claim 8, wherein the receiving the selection comprises using one of a remote controller, a pointing device, a touch pad, and a touch screen.

10. The method of any one of claims 6 to 9, wherein the plurality of formats comprises at least one of: a side-by-side format, a top-bottom format, a 2D plus depth format, a horizontal interleave format, a vertical interleave format, and a checkerboard format.

## Patentansprüche

1. Anzeigevorrichtung (2800), umfassend:
eine Bildeingangseinheit (2820), die ein dreidimensionales (3D) Bild empfängt;
eine Einheit zum Erzeugen eines 3D-Bildes (2836), die linksseitige Bilder und rechtsseitige Bilder durch Anwenden einer Mehrzahl von Formaten auf das empfangene 3D-Bild erzeugt, wenn eine vorab festgelegte Anweisung zum Erzeugen einer Vorschau eingegeben wird;
eine Anzeigeeinheit (2850), die abwechselnd die linksseitigen Bilder, welche gleichzeitig auf einem Bildschirm gemäß der Mehrzahl von Formaten angeordnet sind, und die rechtsseitigen Bilder, welche gleichzeitig auf einem Bildschirm gemäß der Mehrzahl von Formaten angeordnet sind, anzeigt, um dadurch eine dreidimensionale Bildvorschau des empfangenen dreidimensionalen Bildes für jedes der Mehrzahl von Formaten anzuzeigen, wobei die 3D-Bildvorschauen gleichzeitig auf dem einen Bildschirm angeordnet sind;
und
eine Steuereinheit (2860), die das Format des empfangenen 3D-Bildes analysiert,
wobei die Anzeigeeinheit die 3D-Bildvorschau im von der Steuereinheit analysierten Format in einer Weise anzeigt, dass die 3D-Bildvorschau im analysierten Format von 3D-Bildvorschauen in der Mehrzahl anderer Formate unterschieden wird.

2. Anzeigevorrichtung gemäß Anspruch 1, wobei die Anzeigeeinheit (2850) Namen und Informationen über 3D-Bildformate anzeigt, die den 3D-Bildvorschauen, die in der Mehrzahl von Formaten angezeigt werden, entsprechen.

3. Anzeigevorrichtung gemäß einem der Ansprüche 1-2, ferner umfassend:
eine Bedienungseinheit (2880), die eine Auswahl hinsichtlich der 3D-Bildvorschauen gemäß der Mehrzahl von Formaten empfängt,
wobei die Anzeigeeinheit (2850) die ausgewählte 3D-Bildvorschau vergrößert darstellt, sodass sie den gesamten Bildschirm bedeckt.

4. Anzeigevorrichtung gemäß Anspruch 3, wobei die Bedienungseinheit (2880) eines von einer Fernbedienung, einer Zeigevorrichtung, einem Berührungsfeld und einem Berührungsschirm umfasst.

5. Anzeigevorrichtung gemäß einem der Ansprüche 1-4, wobei die Mehrzahl von Formaten wenigstens eines der folgenden umfasst: ein Format nebeneinander, ein Format oben-unten, ein Format 2D plus Tiefe, ein horizontales verschachteltes Format, ein vertikales verschachteltes Format und ein Schachbrettformat.

6. Verfahren zum Bereitstellen einer dreidimensionalen (3D) Vorschau, wobei das Verfahren umfasst:
Empfangen eines 3D-Bildes;
Erzeugen von linksseitigen Bildern und rechtsseitigen Bildern durch Anwenden einer Mehrzahl von Formaten auf das empfangene 3D-Bild, wenn eine vorab festgelegte Anweisung zum Erzeugen einer Vorschau eingegeben wird;
und
abwechselndes Anzeigen der linksseitigen Bilder, die gleichzeitig auf einem Bildschirm gemäß der Mehrzahl von Formaten angeordnet sind, und der erzeugten rechtsseitigen Bilder, die gleichzeitig auf einem Bildschirm gemäß der Mehrzahl von Formaten angeordnet sind, um dadurch eine dreidimensionale Bildvorschau des empfangenen dreidimensionalen Bildes für jedes der Mehrzahl von Formaten anzuzeigen, wobei die 3D-Bildvorschauen gleichzeitig auf dem einen Bildschirm angeordnet sind, und
Analysieren des Formats des empfangenen 3D-Bildes,
wobei das Anzeigen das Anzeigen der 3D-Bildvorschau im analysierten Format in einer Weise umfasst, dass die 3D-Bildvorschau im analysierten Format von 3D-Bildvorschauen, die in der Mehrzahl anderer Formate angezeigt werden, unterschieden wird.

7. Verfahren gemäß Anspruch 6, wobei das Anzeigen das Angeben von Namen und Informationen über 3D-Bildformate umfasst, die den 3D-Bildvorschauen, die in der Mehrzahl von Formaten angezeigt werden, entsprechen.

8. Verfahren gemäß einem der Ansprüche 6-7, ferner umfassend:
Empfangen einer Auswahl hinsichtlich der 3D-Bildvorschauen gemäß der Mehrzahl von Formaten,
wobei das Anzeigen das Anzeigen der ausgewählten 3D-Bildvorschau, die vergrößert ist, um den gesamten Bildschirm zu bedecken, umfasst.

9. Verfahren gemäß Anspruch 8, wobei das Empfangen der Auswahl das Verwenden einer Fernbedienung, einer Zeigevorrichtung, eines Berührungsfeldes oder eines Berührungsschirms umfasst.

10. Verfahren gemäß einem der Ansprüche 6-9, wobei die Mehrzahl von Formaten wenigstens eines der folgenden umfasst: ein Format nebeneinander, ein Format oben-unten, ein Format 2D plus Tiefe, ein horizontales verschachteltes Format, ein vertikales verschachteltes Format und ein Schachbrettformat.

## Revendications

1. Appareil d'affichage (2800) comprenant :
une unité d'entrée d'image (2820) qui reçoit une image tridimensionelle (3D) ;
une unité de formation d'image 3D (2836) qui génère des images d'oeil gauche et des images d'oeil droit en appliquant une pluralité de formats à l'image 3D reçue, si une instruction prédéterminée de génération d'une prévisualisation est entrée ;
une unité d'affichage (2850) qui affiche alternativement les images d'oeil gauche disposées concurremment sur un écran selon la pluralité de formats et les images d'oeil droit disposées concurremment sur ledit écran selon la pluralité de formats pour afficher ainsi une prévisualisation d'image tridimensionnelle de l'image tridimensionnelle reçue pour chacun de la pluralité de formats, lesdites prévisualisations d'images 3D étant disposées concurremment sur ledit écran, et
une unité de commande (2860) qui analyse le format de l'image 3D reçue,
l'unité d'affichage affichant la prévisualisation d'image 3D dans le format analysé par l'unité de commande, d'une manière qui différencie la prévisualisation d'image 3D dans le format analysé des prévisualisations d'image 3D dans la pluralité d'autres formats.

2. Appareil d'affichage selon la revendication 1, dans lequel l'unité d'affichage (2850) indique des noms et des informations concernant des formats d'image 3D qui correspondent aux prévisualisations d'image 3D affichées dans la pluralité de formats.

3. Appareil d'affichage selon l'une quelconque des revendications 1 à 2, comprenant en outre :
une unité de manipulation (2880) qui reçoit une sélection concernant les prévisualisations d'image 3D selon la pluralité de formats,
l'unité d'affichage (2850) affichant la prévisualisation d'image 3D sélectionnée agrandie pour couvrir tout l'écran.

4. Appareil d'affichage selon la revendication 3, dans lequel l'unité de manipulation (2880) comprend un élément parmi un contrôleur distant, un dispositif de pointage, un clavier tactile, et un écran tactile.

5. Appareil d'affichage selon l'une quelconque des revendications 1 à 4, dans lequel la pluralité de formats comprend au moins un élément parmi : un format de juxtaposition, un format de haut en bas, un format 2D plus profondeur, un format d'imbrication horizontale, un format d'imbrication verticale, et un format en damier.

6. Procédé permettant de fournir une prévisualisation tridimensionnelle (3D), le procédé comprenant les étapes suivantes :
recevoir une image 3D ;
générer des images d'oeil gauche et des images d'oeil droit en appliquant une pluralité de formats à l'image 3D reçue, si une instruction prédéterminée de génération d'une prévisualisation est entrée ; et
afficher alternativement les images d'oeil gauche disposées concurremment sur un écran selon la pluralité de formats et les images d'oeil droit générées disposées concurremment sur ledit écran selon la pluralité de formats pour afficher ainsi une prévisualisation d'image tridimensionnelle de l'image tridimensionnelle reçue pour chacun de la pluralité de formats, lesdites prévisualisations d'images 3D étant disposées concurremment sur ledit écran, et
analyser le format de l'image 3D reçue,
l'étape d'affichage comprenant : afficher la prévisualisation d'image 3D dans le format analysé d'une manière qui différencie la prévisualisation d'image 3D dans le format analysé des prévisualisations d'image 3D affichées dans la pluralité d'autres formats.

7. Procédé selon la revendication 6, dans lequel l'étape d'affichage comprend :
indiquer des noms et des informations concernant des formats d'image 3D qui correspondent aux prévisualisations d'image 3D affichées dans la pluralité de formats.

8. Procédé selon l'une quelconque des revendications 6 à 7, comprenant en outre les étapes suivantes :
recevoir une sélection concernant les prévisualisations d'image 3D selon la pluralité de formats,
l'étape d'affichage comprenant : afficher la prévisualisation d'image 3D sélectionnée agrandie pour couvrir tout l'écran.

9. Procédé selon la revendication 8, dans lequel l'étape consistant à recevoir la sélection comprend :
utiliser un élément parmi un contrôleur distant, un dispositif de pointage, un clavier tactile, et un écran tactile.

10. Procédé selon l'une quelconque des revendications 6 à 9, dans lequel la pluralité de formats comprend au moins un élément parmi : un format de juxtaposition, un format de haut en bas, un format 2D plus profondeur, un format d'imbrication horizontale, un format d'imbrication verticale, et un format en damier.
